(19) **Europäisches Patentamt / European Patent Office / Office européen des brevets**

(11) **EP 3 712 782 B1**

(12) **EUROPEAN PATENT SPECIFICATION**

(45) Date of publication and mention
of the grant of the patent:
**11.01.2023 Bulletin 2023/02**

(21) Application number: **20162761.9**

(22) Date of filing: **12.03.2020**

(51) International Patent Classification (IPC):
**G06F 16/583** (2019.01)  **G06F 16/587** (2019.01)
**G06Q 10/00** (2012.01)  **G06Q 50/08** (2012.01)

(52) Cooperative Patent Classification (CPC):
**G06F 16/583; G06F 16/587**

(54) **DIAGNOSIS PROCESSING APPARATUS, DIAGNOSIS SYSTEM, AND DIAGNOSIS PROCESSING METHOD**

DIAGNOSEVERARBEITUNGSVORRICHTUNG, DIAGNOSESYSTEM UND DIAGNOSEVERARBEITUNGSVERFAHREN

APPAREIL DE TRAITEMENT DE DIAGNOSTIC, SYSTÈME DE DIAGNOSTIC ET PROCÉDÉ DE TRAITEMENT DE DIAGNOSTIC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2019 JP 2019053763**

(43) Date of publication of application:
**23.09.2020 Bulletin 2020/39**

(73) Proprietor: **Ricoh Company, Ltd.**
**Tokyo 143-8555 (JP)**

(72) Inventor: **OSHIKIRI, Kohji**
**Ohta-ku, Tokyo 143-8555 (JP)**

(74) Representative: **Marks & Clerk LLP**
**15 Fetter Lane**
**London EC4A 1BW (GB)**

(56) References cited:
**US-A1- 2011 135 207    US-A1- 2018 182 090**
**US-A1- 2018 350 092    US-B1- 9 129 355**

## Description

BACKGROUND

Technical Field

This disclosure relates to a diagnosis processing apparatus, a diagnosis system, and a diagnosis processing method.

Background Art

Structural objects such as tunnels are covered with lining such as concrete. When concrete properties change over time, cracks or the like occur. If the aged concrete is not maintained properly, concrete pieces may peel off from a wall of tunnel, causing damage to vehicles and people running on a road. Therefore, under instructions of local government offices that monitor and administer tunnels (hereinafter referred to as the "tunnel administrator" or "tunnel management entity"), inspection contractors or firms conduct periodic inspections of tunnels, and reports inspection results of the tunnels to the tunnel administrator. The inspection contractors are required to submit document reports defined by the tunnel administrator in some countries. For example, this submission is carried out, for example, every five years.

When the inspection contractor inspects a tunnel, an inspector takes notes of observation of conditions of the tunnel on an inspection field book, captures changed-portions of the tunnel as changed-portion photographs, and then prepares a final inspection report describing tunnel properties (e.g., name, location, length, age) using a tunnel ledger obtained from the tunnel administrator. The final inspection report includes, for example, an observed findings chart, a photograph-captured position chart, a photograph ledger, and a tunnel inspection result summary table. In this example case, the observed findings chart includes the photograph-captured position chart.

The observed findings chart represents a drawing of findings (e.g., cracks) observed in the observed-findings portions. When the inspection contractor prepares the observed findings chart, the inspection contractor refers to various field inspection records such as the inspection field book, the observed-findings photographs, and the tunnel ledger to draw lines representing cracks, and input width of lines, such as crack lines using a computer aided design (CAD) as disclosed in JP-2002-288180-A.

The photograph ledger includes evaluation results attached with the observed-findings photographs. The inspection contractor manually attaches the observed-findings photographs on the photograph ledger, and inputs diagnosis information including the evaluation results by referring to comments written on the inspection field book. Further, to clarify which portion of the tunnel corresponds to the observed-findings photograph attached to the photograph ledger, the observed findings chart is added with an identification number of the observed-findings photograph attached to the photograph ledger.

The tunnel inspection result summary table includes various information of the tunnel, such as tunnel properties (e.g., tunnel length) and diagnosis information including the evaluation results. Specifically, the inspection contractor inputs the tunnel properties (e.g., tunnel length) in the tunnel inspection result summary table based on the tunnel ledger, and the diagnosis information including the evaluation results of observed findings based on the inspection field book.

In order to associate the observed-findings portions related to the evaluation results with the observed-findings photograph attached to the photograph ledger, the inspection contractor inputs an identification number associated with the observed-findings photograph attached to the photograph ledger on the tunnel inspection result summary table.

However, there may be some cases that deterioration of the diagnosis target is rapidly progressing after the inspection contractor has submitted the created submission document (e.g., observed inspection findings chart, photograph ledger, tunnel inspection result summary table) to the tunnel administrator, and before the inspection contractor is to submit new submission document to the tunnel administrator (e.g., five years after the previous inspection). Therefore, the new inspection may be required after one year of submitting the submission document depending on the diagnosis target. In this case, if the large scale inspection that is carried out every five years is performed after one year from the previous inspection, a large amount of time and cost may occur for an inspection. Therefore, the inspector enters the tunnel and captures images of the diagnosis target that is required to be re-diagnosed using a simple portable imaging system, and then returns to a company (or office) to obtain and process the partial area image of the development-view image of the tunnel, with which the inspection time and inspection cost can be reduced.

When images of the structure object (e.g., tunnel inner wall) having a plurality of diagnosis targets are captured, since the structure object has a substantially same shape, a plurality of images of the structure object becomes substantially same images even if the images are captured at different positions in the structure object. Therefore, conventionally, the searching of the partial area image of the development-view image of the structure object at the previous inspection date existing at the same position of the partial area image of the development-view image of the structure object at the re-inspection date requires a longer period of time.

US 2018/0182090 A1 discloses a method including obtaining a first inspection result regarding a construction, and retrieving one or more second inspection results corresponding to an image feature or construction condition obtained from the first inspection result.

## SUMMARY

In one aspect of the present invention, a diagnosis processing apparatus for processing a diagnosis result of a diagnosis target existing in a structure object to assess the structure object is devised. The diagnosis processing apparatus for processing a diagnosis result of a diagnosis target existing in a structure object to assess the structure object includes a storage unit configured to store data of development-view image of the structure object at a first-time date, generated by scanning the structure object, position information indicating one or more positions of the scanning, and data of a plurality of wide-angle images of the first-time date generated by capturing images of a wide area of the structure object including a diagnosis target existing in the structure object during the scanning in association with one to another; an acquisition unit configured to acquire data of a narrow-angle image of a second-time date generated by imaging an area of the structure object including the diagnosis target, and data of a plurality of wide-angle images of the second-time date generated by capturing images of a wide area of the structure object including the diagnosis target existing in the structure object; a similar image search unit configured to search an image similar to the wide-angle image of the second-time date from the plurality of wide-angle images of the first-time date; and a display control unit configured to display a narrow-angle image of the first-time date as a partial area image at a scanning position indicated by position information associated with data of a specific wide-angle image of the first-time date that is determined to be similar to a specific wide-angle image of the second-time date used for the searching, in which the partial area image is a part of the development-view image of the structure object at the first-time date.

In another aspect of the present invention, a method of processing a diagnosis result of a diagnosis target existing in a structure object to assess the structure object is devised. The method includes storing data of development-view image of the structure object at a first-time date, generated by scanning the structure object, position information indicating one or more positions used for of the scanning, and data of a plurality of wide-angle images of the first-time date generated by capturing images of a wide area of the structure object including a diagnosis target existing in the structure object during the scanning in association with one to another; acquiring data of a narrow-angle image of a second-time date generated by imaging an area of the structure object including the diagnosis target, and data of a plurality of wide-angle images of the second-time date generated by capturing images of a wide area of the structure object including the diagnosis target existing in the structure object; searching an image similar to the wide-angle image of the second-time date from the plurality of wide-angle images of the first-time date; and displaying a narrow-angle image of the first-time date as a partial area image at a scanning position indicated by position information associated with data of a specific wide-angle image of the first-time date that is determined to be similar to a specific wide-angle image of the second-time date used for the searching, in which the partial area image is a part of the development-view image of the structure object at the first-time date.

As to the above described aspects of the present invention, embodiment, the time period required for searching the partial area image of the development-view image of the structure object at the first-time date existing at the same position of the partial area image of the development-view image of the structure object at the second-time date requires can be reduced, which means the searching of the partial area image of the development-view image of the structure object does not require a longer period of time.

## BRIEF DESCRIPTION OF THE DRAWINGS

A more complete appreciation of the description and many of the attendant advantages and features thereof can be readily acquired and understood from the following detailed description with reference to the accompanying drawings, wherein:

FIG. 1 is a schematic configuration of a diagnosis system according to an embodiment;
FIG. 2 is an example of a use scene of an vehicle-mounted imaging system according to an embodiment;
FIG. 3 is an example of a use scene of a portable imaging system according to an embodiment;
FIG. 4A is a left side view of a primary imaging device;
FIG. 4B is a front view or rear view of the primary imaging device;
FIG. 4C is a plan view of the primary imaging device;
FIG. 4D is a bottom view of the primary imaging device;
FIG. 5 is an example of a use scene of the primary imaging device;
FIG. 6A is a view illustrating a hemispherical image at a front side captured by the primary imaging device;
FIG. 6B is a view illustrating a hemispherical image at a rear side captured by the primary imaging device;
FIG. 6C is a view illustrating an image represented by an equirectangular projection method;
FIG. 7A is an illustration of how an equirectangular projection image covers a surface of a sphere;
FIG. 7B is a view illustrating a full view spherical image;
FIG. 8 is a view illustrating a position of a virtual camera and a pre-set region when a full view spherical image is represented as a three-dimensional sphere;
FIG. 9A is a perspective view of FIG. 8;
FIG. 9B is an example of a pre-set region image displayed on a display;

FIG. 10 illustrates a relationship between pre-set region information and an image of pre-set region;

FIG. 11 is an example of a hardware block diagram of the primary imaging device;

FIG. 12 is an example of hardware block diagram of a secondary imaging device;

FIG. 13 is an example of a hardware block diagram of a diagnosis processing apparatus, a personal computer, and a diagnosis management server.

FIG. 14 is an example of a hardware block diagram of a smart phone, according to an embodiment of the present disclosure;

FIG. 15 is an example of functional block diagram of a diagnosis system;

FIG. 16 is a schematic diagram indicating a relationship of development-view image and coordinate data;

FIG. 17 s an example of a diagnosis information management table;

FIG. 18 is an example of a diagnosis target element management table;

FIG. 19A is an example of an image related information management table;

FIG. 19B is an example of an re-inspection result information;

FIG. 20 is an example of a sequence diagram illustrating a process of updating data including development-view image;

FIG. 21 is an example of a sequence diagram illustrating a process of generating data of a submission document;

FIG. 22 illustrates a scheme of creating a submission document according to an embodiment;

FIG. 23 is an example of a flowchart illustrating a process of drawing and inputting of diagnosis information;

FIG. 24 is an example of a flowchart illustrating processing of a first input mode of diagnosis target image (e.g., drawing of area);

FIG. 25 is an example of a flowchart illustrating processing of a second input mode of diagnosis target image (e.g., drawing of line pattern);

FIG. 26 is an example of a flowchart illustrating processing of a third input mode of a diagnosis region;

FIG. 27 is an example of a home screen;

FIG. 28 is an example of a diagnosis position input screen when a first input mode of diagnosis target image (e.g., drawing of area) is selected;

FIG. 29 is an example of a screen when inputting a diagnosis target image in a diagnosis position input screen, continued from FIG. 28;

FIG. 30 is an example of a screen when inputting a diagnosis target image in a diagnosis position input screen, continued from FIG. 29;

FIG. 31 is an example of a screen when inputting a diagnosis target image in a diagnosis position input screen, continued from FIG. 30;

FIG. 32 is an example of a screen when inputting a diagnosis target image in a diagnosis position input screen, continued from FIG. 31;

FIG. 33 is an example of a screen when inputting a diagnosis target image in a diagnosis position input screen, continued from FIG. 32;

FIG. 34 is an example of a screen when inputting a diagnosis target image in a diagnosis position input screen, continued from FIG. 33;

FIG. 35 is another example of a screen when inputting a diagnosis target image in a diagnosis position input screen;

FIG. 36 is an example of another screen when inputting a diagnosis target image (e.g., drawing of line pattern) in a diagnosis position input screen;

FIG. 37 is an example of another screen when inputting a diagnosis target image (e.g., drawing of line pattern) in a diagnosis position input screen, continued from FIG. 36;

FIG. 38 is an example of another screen when inputting a diagnosis target image (e.g., drawing of line pattern) in a diagnosis position input screen, continued from FIG. 37;

FIG. 39 is an example of another screen when inputting a diagnosis target image (e.g., drawing of line pattern) in a diagnosis position input screen, continued from FIG. 38;

FIG. 40 is an example of another screen when inputting a diagnosis target image (e.g., drawing of line pattern) in a diagnosis position input screen, continued from FIG. 39;

FIG. 41 is an example of another screen when inputting a diagnosis target image (e.g., drawing of line pattern) in a diagnosis position input screen, continued from FIG. 40;

FIG. 42 is an example of a diagnosis position input screen when a third input mode of diagnosis region is selected;

FIG. 43 is an example of another screen when inputting a diagnosis region in a diagnosis position input screen, continued from FIG. 42;

FIG. 44 is an example of another screen when inputting a diagnosis region in a diagnosis position input screen, continued from FIG. 43;

FIG. 45 is an example of another screen when inputting a diagnosis region in a diagnosis position input screen, continued from FIG. 44;

FIG. 46 is an example of another screen when inputting a diagnosis region in a diagnosis position input screen, continued from FIG. 45;

FIG. 47A illustrates a relationship between a tunnel and viewing directions;

FIG. 47B illustrates a schematic diagram of a tunnel viewed from a lower direction of the tunnel;

FIG. 47C illustrates a schematic diagram of a tunnel viewed from an upper direction of the tunnel;

FIG. 48A illustrates an example of diagnosis target image viewed from the lower direction of the tunnel;

FIG. 48B illustrates an example of the same diagnosis target image viewed from the upper direction of the tunnel;

FIG. 49 illustrates a variant example of diagnosis information input screen;

FIG. 50 is a flowchart illustrating a process of re-creating a tunnel inspection result summary table;

FIG. 51 is a relationship diagram of full-view spherical images at the first-time date and full-view spherical images at the second-time date when searching similar images;

FIG. 52A illustrates an example of a partial area image of development-view image of a tunnel and a full-view spherical image of the tunnel at the first-time date;

FIG. 52B illustrates an example of a partial area image of development-view image of a tunnel and a full-view spherical image of the tunnel at the second-time date;

FIG. 53A illustrates an example of a partial area image of development-view image of a tunnel and a full-view spherical image of the tunnel at the first-time date;

FIG. 53B illustrates an example of a partial area image of a development-view image of a tunnel and a full-view spherical image of the tunnel at the second-time date;

FIG. 54 illustrates an example of a partial area image selection screen displaying one or more partial area images of tunnel development-view image at the first-time date; and

FIG. 55 illustrates an example of an image comparison screen.

The accompanying drawings are intended to depict embodiments of the present invention and should not be interpreted to limit the scope thereof. The accompanying drawings are not to be considered as drawn to scale unless explicitly noted.

DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of a diagnosis system according to an embodiment of this disclosure with reference to the accompanying drawings.

(System Configuration)

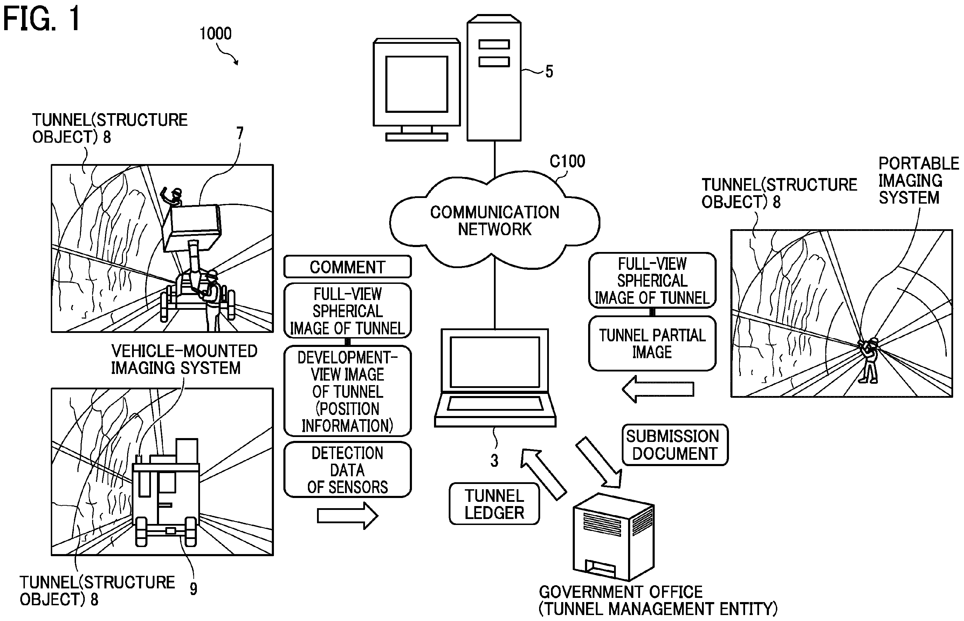

Hereinafter, a description is given of an example of a system configuration of a diagnosis system 1000 with reference to FIG. 1. FIG. 1 is a schematic diagram of the diagnosis system 1000 of the embodiment. In this description, the diagnosis includes any act or process of identifying the cause or nature of a condition, situation, or potential problem (such as abnormality) of an object such as structure object (e.g., tunnel). The examples of act or process of diagnosis include investigation, analysis, assessment (evaluation), etc. For example, assessment is any act or process of determining the condition, situation, or problem of the object, which is a target for diagnosis. In this description, the diagnosis system 1000 can be also referred to as the assessment system. Further, in this description, for simplicity, the terms of "diagnosis" and "assessment" are interchangeably used.

As illustrated in FIG. 1, the diagnosis system 1000 includes, for example, a diagnosis processing apparatus 3, and a diagnosis management server 5 connected via a communication network C100 wirelessly or by wire. In this description, the diagnosis processing apparatus 3 and the diagnosis management server 5 are examples of information processing apparatuses or terminals used for processing data and information related to the structure object (e.g., tunnel).

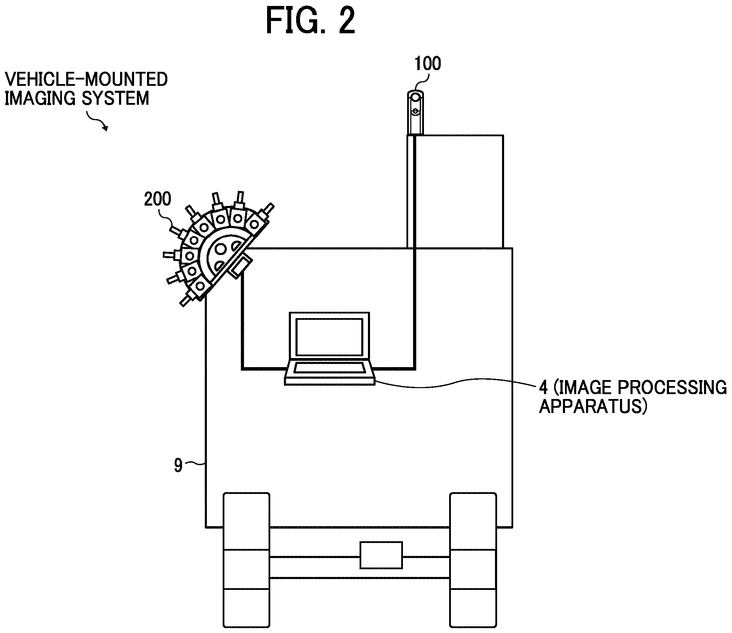

Further, the diagnosis system 1000 includes, for example, a vehicle-mounted imaging system (see FIG. 2) mounted on an image capture vehicle 9, and a portable imaging system carried by an inspector when performing a re-inspection.

Hereinafter, a description is given of a configuration of the vehicle-mouthed imaging system with reference to FIG. 2. FIG. 2 is an example of a use scene of the vehicle-mouthed imaging system. As illustrated in FIG. 2, the vehicle-mounted imaging system is mounted on the image capture vehicle 9, and the vehicle-mounted imaging system includes, for example, a primary imaging device 100, a secondary imaging device 200, and a personal computer (PC) 4. In this description, the primary imaging device 100 can capture full-view spherical images, and the secondary imaging device 200 includes a plurality of single-lens reflex cameras, such as extended depth-of-field (EDoF) cameras, arranged in a semicircular pattern. In this description, the terms of the primary imaging device 100 and the secondary imaging device 200 are used to differentiate the types of imaging devices between the primary imaging device 100 and the secondary imaging device 200, which means the terms of "primary and secondary" are used only to differentiate the types of imaging devices.

The secondary imaging device 200 employs, for example, a line charge coupled device (CCD) as a line imaging element of the extended depth-of-field (EDoF) camera. The line CCD is a CCD in which pixels are arranged in an one-dimensional shape (linear). In the embodiment, the arrangement direction of the pixels intersects a traveling direction of the image capture vehicle 9. With this configuration, the secondary imaging device 200 can capture images while the image capture vehicle 9 is moving or running in a tunnel 8, and thereby a surface of the tunnel 8 can be scanned.

Further, the primary imaging device 100 capable of capturing the full-view spherical image can capture full-view spherical images inside the tunnel 8 with a given specific time interval, such as 1/30 seconds.

Then, the PC 4 stores data of development-view image of the tunnel 8 acquired from the secondary imaging device 200 and data of the full-view spherical image of the tunnel 8 acquired from the primary imaging device 100 in association with each other.

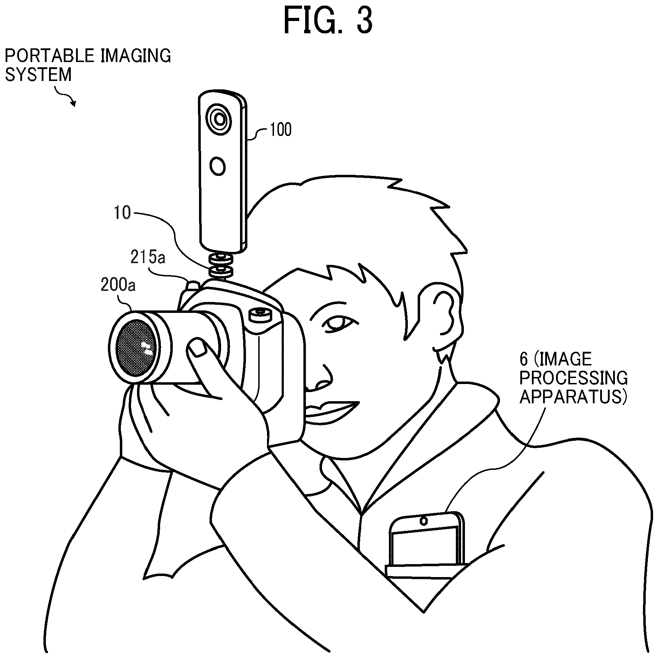

Hereinafter, a description is given of an outline of the portable imaging system with reference to FIG. 3. FIG. 3 is an example of a use scene of the portable imaging system. As illustrated in FIG. 3, an inspector puts the smart phone 6 into a pocket of clothing, and performs the image capturing of the tunnel 8 with another secondary imaging device 200a mounted with the primary imaging device 100 using an adapter 10.

When the inspector directs a lens of the another secondary imaging device 200a to a diagnosis target and presses a shutter button 215a, the another secondary imaging device 200a captures an image of the diagnosis target (e.g., development-view image) and the primary imaging device 100 captures a full-view spherical image around the diagnosis target in connection with the image capturing operation performed by the another secondary imaging device 200a.

Then, the smart phone 6 stores data of a partial area image of the tunnel 8 including the image of the diagnosis target acquired from the another secondary imaging device 200a and data of the full-view spherical image of the tunnel 8 acquired from the primary imaging device 100 in association with each other.

The depth of field refers to a range of distance to an object side, in which the focal point of photograph appears to be in the same state. The extended depth-of-field (EDoF) camera is a camera that enhances the depth of field. Specifically, the extended depth-of-field (EDoF) camera includes optical system and an imaging system that employs a reverse transformation unit having a reverse transform filter for performing the inverse transformation processing to restore a blur due to aberration, and forms a focal plane in which the focusing position extends in the optical axis direction of the optical system.

More specifically, the extended depth-of-field (EDoF) camera includes a lens that provides a uniform aberration to the incident light, and an image processing unit that restores the spatial frequency by performing the reverse filtering with respect to the image on which the aberration is applied.

In the extended depth-of-field (EDoF) camera, the aberration can be applied uniformly in a range that is larger than a "focusing range' (depth of field)" assumed from the focal length of the lens and the size of the aperture (F value), so that the depth of field becomes deeper. Compared to the depth-of-field, which is assumed based on the focal length of the lens and the aperture size (F value), the depth-of-field expands to a maximum of five times. As to the aberration, not only spherical aberration, but also non-spherical aberration such as the third-order aberration can be applied. In the embodiment, the lens becomes asymmetrical between the left and the right to select the non-spherical aberration having a higher performance.

In general, the smaller the lens aperture and the larger the F value, the depth-of-field expands without using the extended depth-of-field (EDoF) camera. However, the smaller the lens aperture, the smaller the light amount of light that enters the image capture element of the camera, in which the brightness of lighting is required to obtain the same image quality.

However, if the number of light sources increases, various disadvantages, such as increased power consumption, increased cost, increased size of imaging apparatus, and lighting direction adjustment, may occur. With using the extended depth-of-field (EDoF) camera, the lens brightness can be ensured without increasing the F value, and the depth-of-field can be enhanced or extended. Since there is no need to compensate the brightness of the lens by the brightness of lighting, various disadvantages, such as increased power consumption, increased cost, increased size of imaging apparatus, and lighting direction adjustment, can be avoided.

For example, when the size of one pixel of the imaging element is 5 $\mu$m $\times$ 5 $\mu$m, the focal length of the lens is 60 mm, and the F value is 4, and the distance to the subject is 3000 mm, the depth-of-field estimated by the lens focal length and the aperture size (F value) is approximately 200 mm, whereas the extended depth-of-field (EDoF) camera can attain approximately 990 mm as the depth of field.

Even if the surface of the tunnel is not a cylindrical shape, but the surface of the tunnel is a plane perpendicular to the optical axis of the camera, when the distance between the camera and the tunnel wall surface changes by 200 mm, the captured image is blurred (out of focus) when using a lens having a depth of field that is assumed based on the focal length and the size of the aperture (F value). Therefore, the allowable range of the meandering fluctuation of the distance between the camera and the tunnel wall is changed is up to 200 mm.

By contrast, by using the extended depth-of-field (EDoF) camera, since the depth-of-field is 990 mm, the image without blurring can be captured until the distance between the camera and the tunnel wall surface changes by 990 mm. In other words, the allowable range of the meandering fluctuation of the distance can be extended to 990 mm.

Further, as illustrated in FIG. 1, the diagnosis processing apparatus 3 and the diagnosis management server 5 configuring the diagnosis system 1000 can communicate with each other via the communication network C100. The communication network C100 is constructed using a network, such as the Internet, a mobile communication network, a local area network (LAN), or the like. The communication network C100 can employ not only a wired communication network but also a wireless communication network such as 3rd generation (3G), worldwide interoperability for microwave access (WiMAX), and long term evolution (LTE). For example, by adopting "5G," the fifth generation mobile communication system capable of providing data at higher speed, lower delay, higher capacity, and higher efficiency, communication can be efficiently carried out.

Further, the diagnosis processing apparatus 3 can be configured to communicate using short-range communication technology such as near field communication (NFC: registered trademark).

Further, the diagnosis management server 5 can be a cloud server. By using the cloud server, the diagnosis management server 5 can be accessed from multiple locations.

As to the diagnosis system 1000, for example, a first business operator may capture images of the structure object (e.g., tunnel), and the first business operator may store the captured image in the diagnosis management server 5 after capturing the images.

Alternatively, the first business operator may capture images of the structure object (e.g., tunnel), the captured images may be provided to a second business operator, the second business operator may store the captured images in the diagnosis management server 5, and the second business operator may perform the diagnosis on the captured images using the diagnosis processing apparatus 3. In this case, the second business operator outputs the submission document and submits the submission document to the tunnel administrator (government organization).

Further, the first business operator may capture images of the structure object (e.g., tunnel) and provides the captured images to the second business operator, the second business operator may store the captured images in the diagnosis management server 5, and a third business operator may perform the diagnosis on the captured images using the diagnosis processing apparatus 3. In this case, the third business operator outputs the submission document and submits the submission document to the tunnel administrator (government organization). Further, a fourth business operator may perform the submission alone.

These are merely examples, and the embodiment can be implemented even if a plurality of business operators are involved.

As illustrated in FIG. 1, the inspector riding on the inspection vehicle 7 inspects the tunnel 8 by marking inspection findings (e.g., cracks) with a special chalk on a surface of the tunnel 8, and records a width of each crack in a field inspection book. While inspecting the tunnel 8, the inspector records detail information of inspection findings indicating the status or condition of the inspection findings and evaluation results of the inspection findings in the field inspection book.

The inspection findings means any kind of findings observed on the tunnel surface, such as potential or imminent abnormalities (e.g., initial defects, aging defects, damages, deformations) that may cause problems, and non-abnormalities portions (e.g., stains) that may not cause problems.

Further, an assistant standing near the inspection vehicle 7 can write the detail information of inspection findings spoken by the inspector in the field inspection book, and take pictures of the tunnel 8 in some cases.

Further, the inspector can put on a helmet put equipped with a small microphone and a small camera, in which comments made by the inspector can be recorded with the small microphone, and target portions can be captured with the small camera. In this case, the recorded voice information can be recognized by a voice recognition device and digitized as data, and the digitized data can be automatically recorded in an electronic recording device used as the field inspection book, such as a tablet personal computer (PC) or the like, together with the images captured using the small camera.

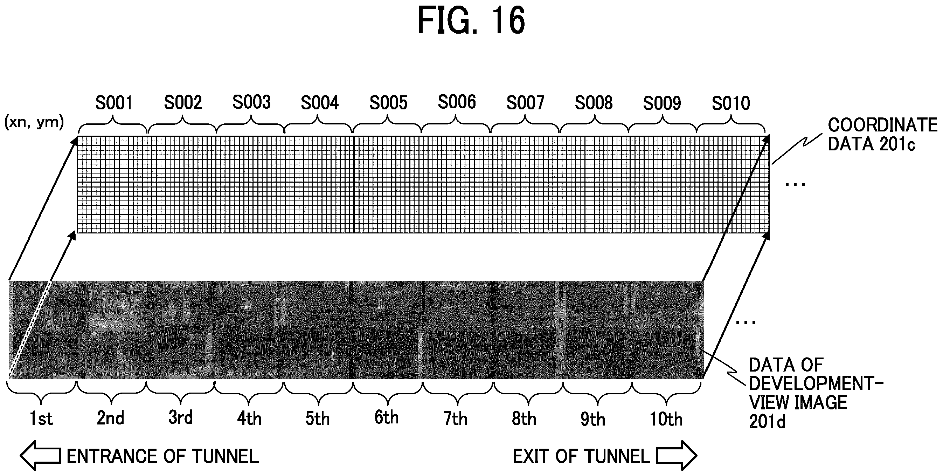

Then, the image capture vehicle 9 equipped with a camera unit (image capture device) travels from the entrance to the exit of the tunnel 8 while capturing images of the inner surface of the tunnel 8 from an entry to an exit of the tunnel 8 to acquire images of the inner surface of the tunnel 8, which is to be described later with reference to FIG. 16.

Hereinafter, images of the captured inner surface of the tunnel 8 are collectively referred to as development-view image 201d of the tunnel 8, which corresponds to a panoramic image combining a plurality of images of a plurality of spans (formworks) of the tunnel 8. The development-view image 201d is generated by performing image processing on a plurality of mages of the inner surface of the tunnel 8 captured by the camera unit. Since the development-view image 201d includes portions marked with the special chalk by the inspector, the user of the diagnosis processing apparatus 3 can easily confirm positions and shapes of the inspection findings by checking the development-view image 201d after the inspection at the field. The development-view image 201d can be also be referred to as the image data of tunnel, which is an example of image data of the structure object generated using given image processing.

In addition to the camera unit, the image capture vehicle 9 also includes a first range sensor for measuring a travel distance of the image capture vehicle 9, a second range sensor for measuring a distance between the image capture vehicle 9 and the inner surface of the tunnel 8, a gyro sensor for detecting an angle (posture) and an angular velocity (or angular acceleration) of the image capture vehicle 9. The second ranging sensor is, for example, a time-of-flight (TOF) sensor or a light detection and ranging (LIDAR) sensor.

The development-view image 201d obtained by the camera unit of the image capture vehicle 9, and each detection data obtained from each sensor disposed in the image capture vehicle 9 (e.g., first and second ranging sensors, gyro sensor) are transmitted to the diagnosis management server 5 via the diagnosis processing apparatus 3, and are managed by the diagnosis management server 5.

Alternatively, the development-view image 201d and the detection data can be directly transmitted to the diagnosis management server 5, or any storage device on a cloud that is accessible from the diagnosis management server 5. In some regions, such as European continent and America, vehicle drivers keep to the right side of the road, so an image of the structure object (e.g., tunnel wall) on the right side of the vehicle in the traveling direction is captured and measured with the camera unit. In another region, such as United Kingdom and Japan, vehicle drivers keep to the left side of the road, so an image of the structure object (e.g., tunnel wall) on the left side of the vehicle in the traveling direction is captured and measured with the camera unit.

The diagnosis processing apparatus 3 is a computer used for receiving an input of various data, such as diagnosis target image, diagnosis region, and diagnosis information, to be described later, and installed with an application program for drawing an image. A user (e.g., operator) uses the diagnosis processing apparatus 3 to input various data related to the structure object (e.g., tunnel), such as the detail information of inspection findings recorded on the field inspection book by the inspector or assistant for the tunnel 8, the development-view image 201d generated by capturing the images of tunnel 8 from an entrance to an exit of the tunnel 8, full-view spherical images generated by capturing the images of inside the tunnel 8 with a given specific time interval, such as 1/30 seconds, and the detection data obtained by each sensor.

In this description, the tunnel 8 is described as an example of the structure object, but the structure object is not limited thereto.

By capturing the images while the image capture vehicle 9 is running, the tunnel development-view image is generated by scanning within the tunnel 8. The tunnel development-view image includes position information, which is the coordinate data in the tunnel 8. The full-view spherical image of the tunnel 8 is also associated with the position information indicating one or more positions in the captured tunnel 8 where the each image is captured, and thereby the full-view spherical image of the tunnel 8 is associated with each partial region (partial area image) of the tunnel development-view image.

In another example case, the data related to the structure object can be transmitted to another device such as the diagnosis management server 5, and then transferred from another device to the diagnosis processing apparatus 3.

Further, the user of the diagnosis processing apparatus 3 inputs data of the tunnel ledger obtained from the tunnel administrator (government organization) in the diagnosis processing apparatus 3. The tunnel ledger includes data of the tunnel properties, such as the length and height of the tunnel. In this case, the diagnosis processing apparatus 3 is an input device.

Further, a browser is installed in the diagnosis processing apparatus 3. The diagnosis processing apparatus 3 can display the development-view image 201d transmitted from the diagnosis management server 5 using the browser.

Further, the user of the diagnosis processing apparatus 3 performs a drawing of an image of given pattern, such as line or the like, over the observed inspection findings (e.g., crack) shown on the development-view image 201d. The drawn image corresponding to the observed inspection findings is stored, for example, in a memory of the diagnosis management server 5 in association with coordinates indicating a position of the drawn image, and a numerical value (e.g., width) of the drawn image.

The user of the diagnosis processing apparatus 3 downloads data of a submission document including, for example, the observed inspection findings chart created by drawing the observed inspection findings, from the diagnosis management server 5, and submits the printed submission document or the electronic data of the submission document (i.e., non-printed data) to the tunnel administrator (government organization).

For example, the communication unit 51 of the diagnosis management server 5 transmits the data of the submission document including, for example, the observed inspection findings chart created by drawing of the observed inspection findings, to the diagnosis processing apparatus 3 via the communication network C100. As a result, the communication unit 31 of the diagnosis processing apparatus 3 receives the data of the submission document.

Alternatively, the communication unit 31 of the diagnosis processing apparatus 3 transmits the data of submission document to the tunnel administrator (government organization) via the communication network C100. In one example, the communication unit 31 of the diagnosis processing apparatus 3 transmits the data of submission document to a printing apparatus, and after printing the submission document, the user of the diagnosis processing apparatus 3 submits the printed paper to the tunnel administrator (government organization).

Alternatively, the communication unit 31 of the diagnosis processing apparatus 3 stores the data of submission document on a recording medium such as digital versatile disc recordable (DVD-R), and then, the user of the diagnosis processing apparatus 3 submits the recording media to the tunnel administrator (government organization).

The communication unit 31 and the storing/reading unit 39 can be used as an output unit when submitting the submission document (electronic data or printed paper) to the tunnel administrator (government organization). In this case, the diagnosis processing apparatus 3 can be used as an output device from which data is output.

Further, in order to ensure credibility or authenticity of the submission document such as electronic data and printed sheets submitted to the tunnel administrator (government organization), it is preferable to apply tamper-proof processing to the submission document.

The diagnosis management server 5 manages various data, such as the development-view image 201d, detail information of the inspection findings, and the tunnel ledger. Further, the diagnosis management server 5 manages data obtained by drawing an image such as line or the like over the observed inspection findings (e.g., crack) associated with coordinates indicating the position of the drawn image on the development-view image 201d, and the numerical value (e.g., width) of the drawn image.

The above described processing includes, for example, all of the inspections in the tunnel 8 performed by the inspector, running and stop of the inspection vehicle 7, the image capturing operation using the image capture vehicle 9, and the operation of the diagnosis processing apparatus 3 by the user, and the large scale inspection. Since the above described processing becomes a large scale of inspection that requires a large amount of time and cost, the inspection is carried out, for example, every five years, which is defined by the tunnel administrator (government organization).

However, there may be some cases that deterioration of the diagnosis target is rapidly progressing after the inspection contractor has submitted, to the tunnel administrator, the created submission document (e.g., observed inspection findings chart, photograph ledger, tunnel inspection result summary table) and before the inspection contractor is to submit new submission document to the tunnel administrator. Therefore, the new inspection may be required after one year of submitting the submission document depending on the diagnosis target. In this case, if the large scale inspection that is carried out every five years is performed, a large amount of time and cost occur. Therefore, the inspector enters the tunnel 8 and captures images of the diagnosis target that is required to be re-diagnosed using a simple portable imaging system, and then returns to a company (or office) to obtain and process the partial area image of the development-view image of the tunnel 8, thereby reducing the time and cost.

The inspector inputs the data of partial area image of the development-view image 201d of the tunnel 8 and the data of full-view spherical image of the tunnel 8 generated by capturing images using the portable imaging system, to the diagnosis processing apparatus 3. Then, the inspector creates new tunnel inspection result (or updated tunnel inspection result) by operating the diagnosis processing apparatus 3 to be described later.

(Method of Generating Whole Sky Image)

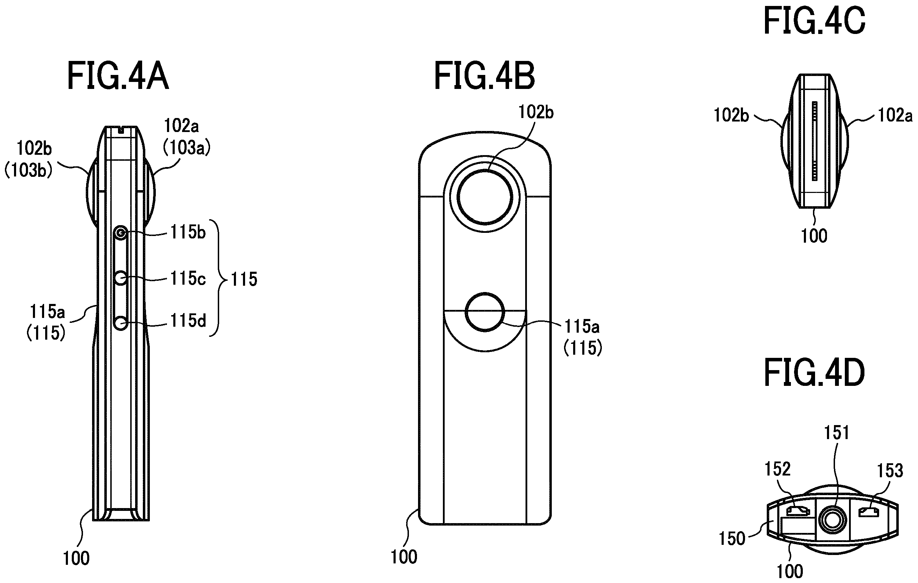

Hereinafter, a description is given of a method of generating full-view spherical image with reference to FIGs. 4 to 10. Hereinafter, a description is given of an external view of a primary imaging device 100 with reference to FIGs. 4A to 4D. In this description, the primary imaging device 100 is, for example, a digital camera used for capturing and acquiring source images as source images to generate panoramic images, such as full-view spherical images (e.g., 360-degree panoramic images). FIG. 4A is a left side view of the primary imaging device 100. FIG. 4B is a front view or rear view of the primary imaging device 100. FIG. 4C is a plan view of the primary imaging device 100. FIG. 4D is a bottom view of the primary imaging device 100.

As illustrated in FIGs. 4A to 4D, a fisheye lens 102a is provided on a front side (anterior side) of an upper portion of the primary imaging device 100, and a fisheye lens 102b is provided on a back side (rear side) of the upper portion of the primary imaging device 100. Further, as illustrated in FIG. 4A, an imaging element 103a, corresponding to the fisheye lens 102a, is provided inside the primary imaging device 100 as an image sensor, and an imaging element 103b, corresponding to the fisheye lens 102b, is provided inside the primary imaging device 100 as an image sensor, to be described later. The primary imaging device 100 can acquire an image captured by the fisheye lens 102a and the imaging element 103a as a curved hemispherical image (front side) having an angel of view of 180-degree or more, and an image captured by the fisheye lens 102b and the imaging element 103b as a curved hemispherical image (rear side) having an angel of view of 180-degree or more.

Further, as illustrated in FIG. 4, the primary imaging device 100 includes, for example, an operation unit 115, such as a shutter button 115a, provided on the back side or rear side of the primary imaging device 100.

Further, as illustrated in FIG. 4, a power button 115b, a wireless fidelity (Wi-Fi: registered trademark) button 115c, and a capture mode switching button 115d are provided on a side face of the primary imaging device 100. Each of the power button 115b and the Wi-Fi button 115c is switched between ON-state and OFF-state each time the respective button is pressed. Further, the capture mode switching button 115d is switched between a capture mode of still image and a capture mode of movie image each time the capture mode switching button 115d is pressed. The shutter button 115a, the power button 115b, the Wi-Fi button 115c and the capture mode switching button 115d are parts of the operation unit 115. The operation unit 115 is not limited to these buttons.

Further, a tripod screw hole 151 for attaching the primary imaging device 100 to a camera tripod is provided at the center of a bottom face 150 of the primary imaging device 100. Further, a micro universal serial bus (USB) terminal 152 is provided on the left end of the bottom face 150. Further, a high definition multimedia interface (HDMI) terminal 153 is provided at the right end of the bottom face 150. The HDMI is a registered trademark.

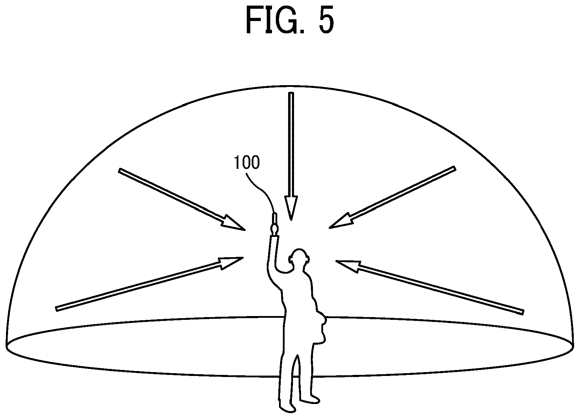

Hereinafter, a description is given of a usage state of the primary imaging device 100 with reference to FIG. 5. FIG. 5 is an example of a use scene of the primary imaging device 100. As illustrated in FIG. 5, for example, the primary imaging device 100 is used for capturing images of one or more objects surrounding the user who is holding the primary imaging device 100 in his or her hand. In this situation, the imaging elements 103a and 103b illustrated in FIG.4 can capture images of the objects surrounding the user to acquire two hemispherical images.

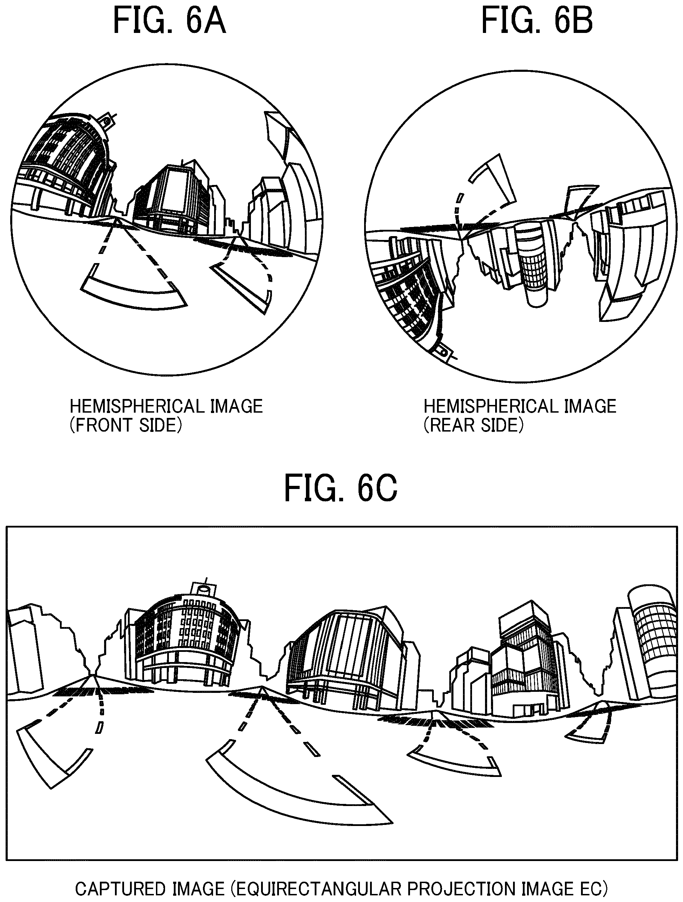

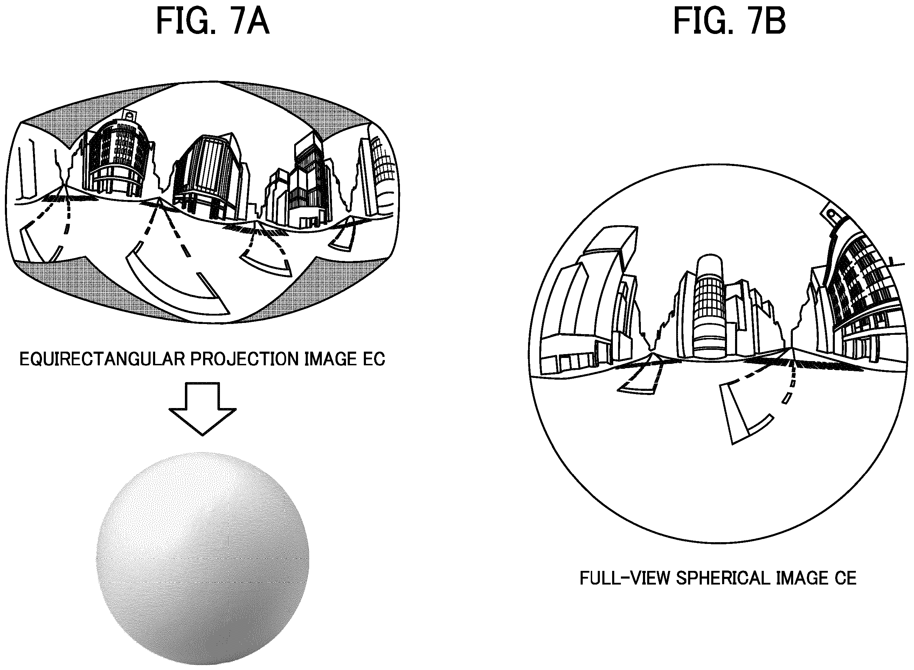

Hereinafter, a description is given of an overview of an operation of generating an equirectangular projection image EC and a full-view spherical image CE from images captured by the primary imaging device 100 with reference to FIGs. 6A, 6B, and 6C and FIGs. 7A, and 7B.

FIG. 6A is a view illustrating a hemispherical image at a front side captured by the primary imaging device 100. FIG. 6B is a view illustrating a hemispherical image at a rear side captured by the primary imaging device 100. FIG. 6C is a view illustrating an image represented by equirectangular projection method or Mercator projection method. Hereinafter, the image represented indicated in FIG. 6C may be referred to as "Mercator image" or "equirectangular projection image."

FIG. 7A is an illustration of how an equirectangular projection image covers a surface of a sphere. FIG. 7B is a view illustrating a full view spherical image or full panoramic image.

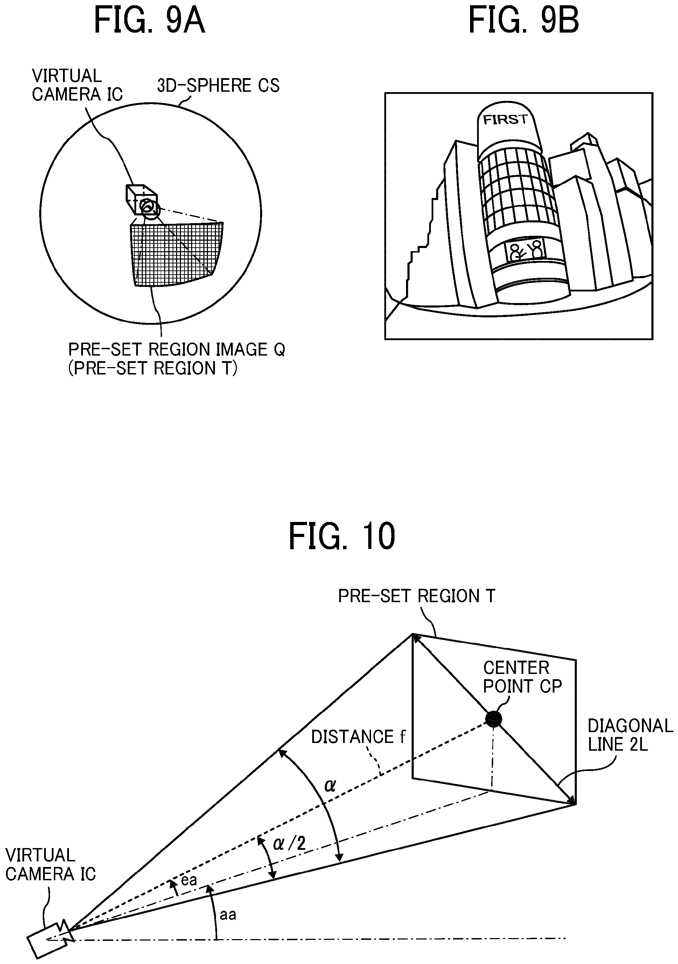

As indicated in FIG. 6A, an image captured by the imaging element 103a is a curved hemispherical image (front side) taken through the fisheye lens 102a to be described later (FIG. 10). Also, as indicated in FIG. 6B, an image captured by the imaging element 103b is a curved hemispherical image (back side) taken through the fisheye lens 102b to be described later (FIG. 10). The primary imaging device 100 combines one hemispherical image (front face) and another hemispherical image (rear side) inverted by 180 degrees to generate the equirectangular projection image EC indicated in FIG. 6C.

Then, as indicated in FIG. 7A, the equirectangular projection image EC is attached to a sphere surface in such a manner that the sphere surface is covered with the equirectangular projection image EC using Open Graphics Library for Embedded Systems (OpenGLES) to generate the full-view spherical image CE indicated in FIG. 7B. Thus, the full-view spherical image CE is represented as an image in which the equirectangular projection image EC is directed toward the center of the sphere. The OpenGLES is a graphics library used for visualizing two-dimensional (2D) and three-dimensional (3D) data. The full-view spherical image CE can be still image or movie image.

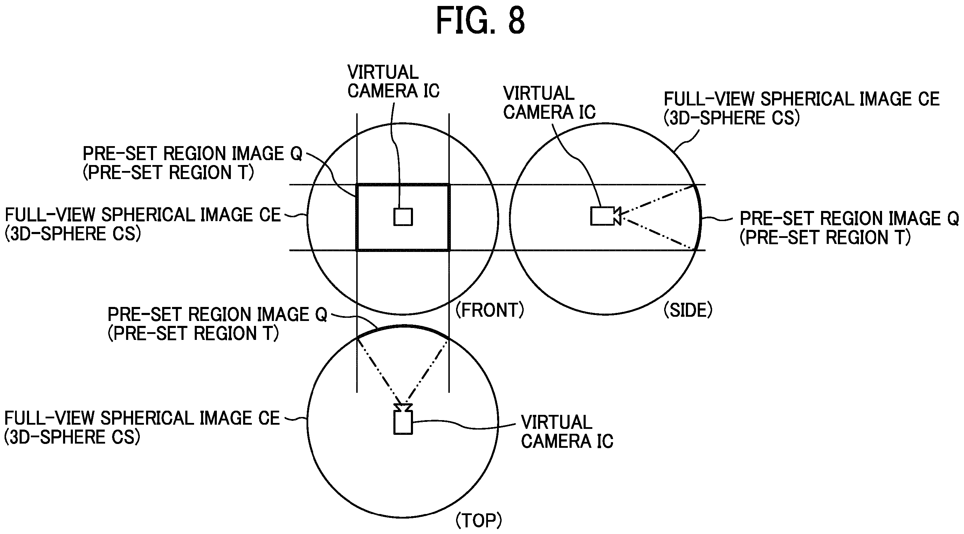

As described above, since the full-view spherical image CE is an image attached to cover the spherical surface, so that one may feel strange viewing the full view spherical image. Therefore, the primary imaging device 100 can be configured to display a partial pre-set region (hereinafter, "pre-set region image") of the full-view spherical image CE as a planar image with less curvature to resolve this strange feeling. Hereinafter, a description is given of displaying the pre-set region image with reference to FIG. 8 and FIGs. 9A and 9B.

FIG. 8 is a view illustrating a position of a virtual camera IC and a pre-set region T when a full view spherical image is represented as a three-dimensional sphere. The virtual camera IC corresponds to a position of view point of a user who is viewing the full view spherical image CE represented as the three-dimensional sphere.

FIG. 9A is a perspective view of FIG. 8. FIG. 9B is an example of a pre-set region image displayed on a display. In FIG. 9A, the full view spherical image CE indicated in FIG. 7B is represented as a three-dimensional sphere CS (3D-sphere CS). As indicated in FIG. 8, the virtual camera IC is set inside the full-view spherical image CE when it is assumed that the full-view spherical image CE is the 3D-sphere CS. The pre-set region T in the full view spherical image CE is an imaging range of the virtual camera IC. The pre-set region T is specified by pre-set region information indicating an imaging direction and an angle of view of the virtual camera IC in the three-dimensional virtual space including the full view spherical image CE.

Then, a pre-set region image Q indicated in FIG. 9A is displayed as an image of the imaging range of the virtual camera IC on a display as indicated in FIG. 9B. The image indicated in FIG. 9B is a pre-set region image represented by the pre-set region information defined by an initial setting (default). Hereinafter, the imaging direction (ea, aa) and the angle of view ($\alpha$) of the virtual camera IC are described.

Hereinafter, a description is given of a relationship between the pre-set region information and an image of the pre-set region T with reference to FIG. 10. FIG. 10 illustrates a relationship between the pre-set region information and the image of the pre-set region T. In FIG. 10, "ea" denotes an elevation angle, "aa" denotes an azimuth angle, and "$\alpha$" denotes an angle of view. That is, the posture of the virtual camera IC is changed so that the focal point of the virtual camera IC indicated by the imaging direction (ea, aa) becomes a center point CP of the pre-set region T, which is the imaging range of the virtual camera IC.

The pre-set region image Q is an image of the pre-set region T in the full-view spherical image CE. In FIG. 10, "f" denotes a distance from the virtual camera IC to the center point CP. "L" is a distance between any vertex of the pre-set region T and the center point CP (2L is a diagonal line). In FIG. 10, a trigonometric function equation expressed by the following equation is satisfied.

$$L/f = \tan(\alpha/2) \quad (1)$$

(Hardware Configuration)

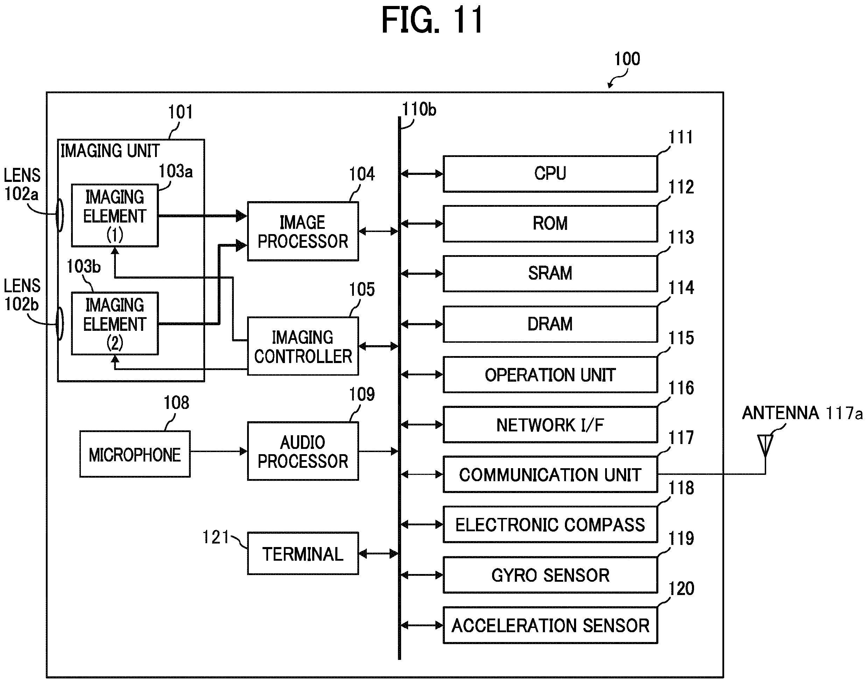

Hereinafter, a description is given of a hardware configuration of each device or apparatus, such as the primary imaging device 100, the secondary imaging device 200 (200a), the diagnosis processing apparatus 3, the personal computer 4, the diagnosis management server 5, and the smart phone 6 consisting the diagnosis system with reference to FIGs. 11 to 14.

(Hardware Configuration of primary imaging device)

Hereinafter, a description is given of a hardware configuration of the primary imaging device 100 with reference to FIG. 11. FIG. 11 is an example of hardware block diagram of the primary imaging device 100. In this disclosure, the primary imaging device 100 1 is assumed as a digital camera including two imaging devices capable of capturing an omnidirectional image, such as full-view spherical image. The number of imaging devices can be two or more. Further, the primary imaging device 100 1 is not limited to the primary imaging device 100 that is designed exclusively for capturing only omnidirectional images. For example, standard digital cameras or smart phones can be attached with an omnidirectional image capture unit to function substantially the same as the primary imaging device 100.

As illustrated in FIG. 11, the primary imaging device 100 includes, for example, an imaging unit 101, an image processor 104, an imaging controller 105, a microphone 108, an audio processor 109, a central processing unit (CPU) 111, a read only memory (ROM) 112, a static random access memory (SRAM) 113, a dynamic random access memory (DRAM) 114, an operation unit 115, a network interface (I/F) 116, a communication unit 117, an electronic compass 118, a gyro sensor 119, an acceleration sensor 120, and a terminal 121.

The imaging unit 101 includes the two fisheye lenses 102a and 102b, such as wide-angle lenses, each having an angle of view of equal to or greater than 180 degrees to form a hemispheric image. The imaging unit 101 further includes the two imaging elements 103a and 103b corresponding to the two fisheye lenses 102a and 102b, respectively.

Each of the imaging elements 103a and 103b includes an image sensor, such as a complementary metal oxide semiconductor (CMOS) sensor or a charge-coupled device (CCD) sensor, a timing generation circuit, and a group of registers. The image sensor converts an optical image formed by the fisheye lenses 102a and 102b (i.e., wide-angle lenses) into electric signals to output image data. The timing generation circuit generates horizontal and vertical synchronization signals, pixel clocks and the like for the image sensor. Various commands, parameters and the like for operations of the imaging elements 103a and 103b are set in the group of registers.

Each of the imaging elements 103a and 103b of the imaging unit 101 is connected to the image processor 104 via a parallel I/F bus. Further, each of the imaging elements 103a and 103b of the imaging unit 101 is connected to the imaging controller 105 via a serial I/F bus such as an inter-integrated circuit (i2c) bus. The image processor 104, the imaging controller 105, and the audio processor 109 are connected to the CPU 111 via a bus 110b. Further, the ROM 112, the SRAM 113, the DRAM 114, the operation unit 115, the network I/F 116, the communication unit 117, and the electronic compass 118 are also connected to the bus 110b.

The image processor 104 acquires the image data from each of the imaging elements 103a and 103b via the parallel I/F bus. Then, the image processor 104 performs given processing on the image data and synthesizing the image data to generate data of the equirectangular projection image illustrated in FIG. 3C.

The imaging controller 105 usually functions as a master device while each of the imaging elements 103a and 103b usually functions as a slave device. The imaging controller 105 sets commands and the like in the group of registers of the imaging elements 103a and 103b via the i2c bus. The imaging controller 105 receives required commands and the like from the CPU 111. Further, the imaging controller 105 acquires status data and the like of the group of registers of the imaging elements 103a and 103b via the i2c bus. Then, the imaging controller 105 transmits the acquired status data to the CPU 111.

The imaging controller 105 instructs the imaging elements 103a and 103b to output the image data at a time when a shutter button of the operation unit 115 is pressed. The primary imaging device 100 may have a preview function and a function for displaying still image and movie image using a display (e.g., a display 617 of smart phone 6). In a case of movie image, the image data are continuously output from the imaging elements 103a and 103b at a pre-set frame rate (frames per minute).

Further, to be described later, the imaging controller 105 operates in cooperation with the CPU 111 to synchronize the output timing of the image data of the imaging elements 103a and 103b. In the embodiment, the primary imaging device 100 does not have a display, but the primary imaging device 100 can be provided with the display.

The microphones 108 collects sound from the surroundings of the primary imaging device 100 and converts the collected sound into audio data (signal).

The audio processor 109 acquires the audio data output from the microphone 108 via an I/F bus and performs given processing on the audio data.

The CPU 111 controls an entire operation of the primary imaging device 100 and performs necessary processing. The ROM 112 stores various programs for the CPU 111. Each of the SRAM 113 and the DRAM 114 operates as a work memory to store the program loaded from the ROM 112 for execution by the CPU 111 or data in current processing. In particular, the DRAM 114 stores the image data currently processed by the image processor 104 and data of the equirectangular projection image (Mercator image) on which processing has been performed.

The operation unit 115 collectively refers to various operation keys, a power switch, and the shutter button. The user operates the operation unit 115 to input various capture modes and capture conditions.

The network I/F 116 collectively refers to an interface circuit such as a universal serial bus (USB) I/F that allows the primary imaging device 100 to communicate data with an external media such as a secure digital (SD) card or an external personal computer. The network I/F 116 can support wired and wireless communications. The data of equirectangular projection image stored in the DRAM 114 can be recorded on an external medium via the network I/F 116, and can be transmitted to an external terminal (device), such as a smart phone 6, via the network I/F 116 as required.

The communication unit 117 communicates with an external terminal (device), such as the smart phone 6, using a short-range wireless communication such as Wi-Fi, NFC, and Bluetooth, via an antenna 117a provided for the primary imaging device 100. The communication unit 117 can transmit the data of equirectangular projection image to the external terminal (device), such as the smart phone 6.

The electronic compass 118 calculates the orientation of the primary imaging device 100 from the magnetism of the earth and outputs the azimuth information. This azimuth information is an example of related information (metadata) compatible to exchangeable image file format (Exif), and is used for image processing, such as image correction of captured image. The related information includes, for example, date and time of capturing image, and data capacity of image data.

(Hardware Configuration of Secondary Imaging Device)

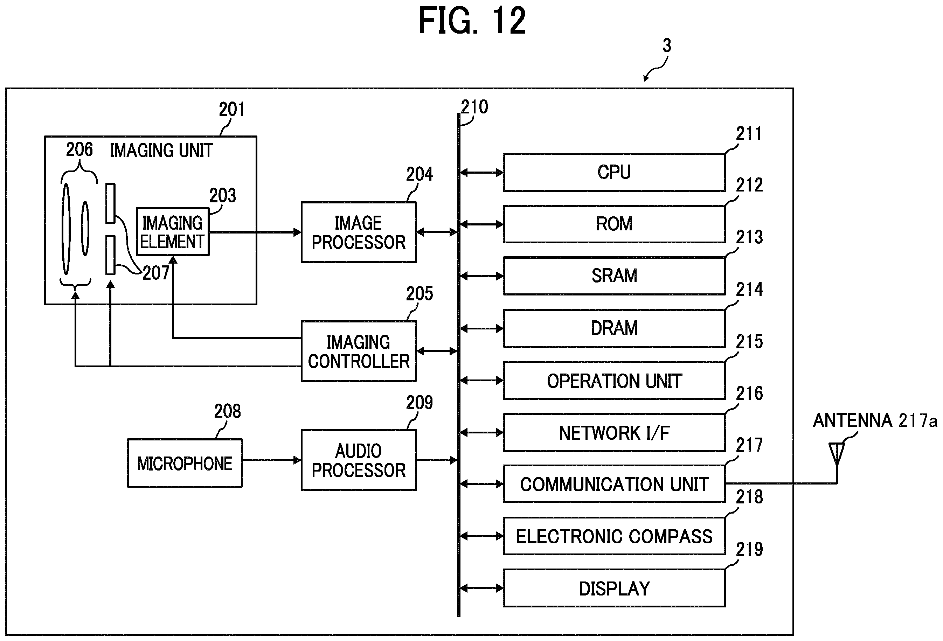

Hereinafter, a description is given of a hardware configuration of the secondary imaging device 200 (200a) with reference to FIG. 12. FIG. 12 is an example of hardware block diagram of the secondary imaging device 200 (200a). As illustrated in FIG. 12, the secondary imaging device 200 (200a) includes, for example, an imaging unit 201, an image processor 204, an imaging controller 205, a microphone 208, an audio processor 209, a bus 210, a central processing unit (CPU) 211, a read only memory (ROM) 212, a static random access memory (SRAM) 213, a dynamic random access memory (DRAM) 214, an operation unit 215, a network interface (I/F) 216, a communication unit 217, an antenna 217a, an electronic compass 218, and a display 219. The image processor 204 and the imaging controller 205 are connected to the CPU 211 via the bus 210.

Since each of these units 204, 210, 211, 212, 213, 214, 215, 216, 217, 217a, 218 employ the same configuration of each of the units 104, 110b, 111, 112, 113, 114, 115, 116, 117, 117a, 118 disposed in the primary imaging device 100 illustrated in FIG. 11, the description thereof is omitted.

Further, as illustrated in FIG. 12, in the secondary imaging device 200 (200a), the imaging unit 201 includes a lens unit 206 and a mechanical shutter 207 before the front face of the imaging element 203 in the direction from the outside to the imaging element 203.

The imaging controller 205 basically employs the configuration similar to the imaging controller 105 and performs the processing similar to the imaging controller 105. The imaging controller 205 also controls the lens units 206 and the driving of the mechanical shutter 207 based on an operation of a user received via the operation unit 215.

The display 219 is an example of a display device used for displaying an operation menu, an image being captured, and an image after the image capturing.

(Hardware Configuration of Diagnosis Processing Apparatus, Personal Computer, and Diagnosis Management Server)

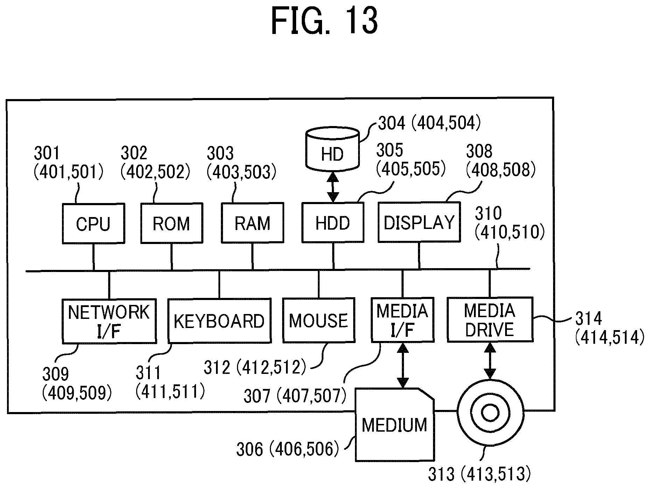

FIG. 13 is an example of hardware block diagram of the diagnosis processing apparatus, personal computer, and diagnosis management server. The symbols in parentheses indicate the configuration of the personal computer and the diagnosis management server.

As illustrated in FIG. 13, the diagnosis processing apparatus 3 includes, for example, a central processing unit (CPU) 301, a read only memory (ROM) 302, a random access memory (RAM) 303, a hard disk (HD) 304, a hard disk drive (HDD) 305, a media interface (I/F) 307, a display 308, a network I/F 309, a keyboard 311, a mouse 312, a media drive 314, and a bus line 310.

The CPU 301 controls the operation of the diagnosis processing apparatus 3 entirely. The ROM 302 stores programs to be executed by the CPU 301. The RAM 303 is used as a work area of the CPU 301. The HD 304 stores various data such as programs. The HDD 305 controls reading and writing of various data to the HD 304 under the control of the CPU 301. The media I/F 307 controls reading and writing (storing) of data from or to a recording medium 306, such as a flash memory.

The display 308 displays various information such as cursor, menu, window, text, or image. The network I/F 309 is an interface circuit for performing data communication using the communication network C100. The keyboard 311 is an example of input units, having a plurality of keys used for inputting characters, numerals, various instructions or the like. The mouse 312 is one type of input units for selecting and executing various instructions, selecting a process target, moving a cursor, and the like. The media drive 314 controls reading and writing of various data from and to media 313, which is an example of a removable recording medium. The media includes Blu-ray Disc (Blu-ray registered trademark) and compact disc (CD).

As illustrated in FIG. 13, the personal computer (PC) 4 includes a CPU 401, a ROM 402, a RAM 403, an HD 404, a HDD 405, a recording medium 406, a media I/F 407, a display 408, a network I/F 409, a keyboard 411, a mouse 412, a media drive 414, and a bus line 410. Since these units are the same as those described above (CPU 301, ROM 302, RAM 303, HD 304, HDD 305, recording medium 306, media I/F 307, display 308, network I/F 309, keyboard 311, mouse 312, media drive 314 and bus line 310), the description of thereof is omitted.

Further, as illustrated in FIG. 13, the diagnosis management server 5 includes a CPU 501, a ROM 502, a RAM 503, an HD 504, a HDD 505, a recording medium 506, a media I/F 507, a display 508, a network I/F 509, a keyboard 511, a mouse 512, a media drive 514, and a bus line 510. Since these units are the same as those described above (CPU 301, ROM 302, RAM 303, HD 304, HDD 305, recording medium 306, media I/F 307, display 308, network I/F 309, keyboard 311, mouse 312, media drive 314 and bus line 310), and thereby the description of thereof is omitted. In the embodiment, the diagnosis processing apparatus 3, the PC 4 and the diagnosis management server 5 can be configured as a single computer or can be configured using a plurality of computers by dividing each part (functional unit, or storage) into the plurality of computers.

(Hardware Configuration of Smart phone)

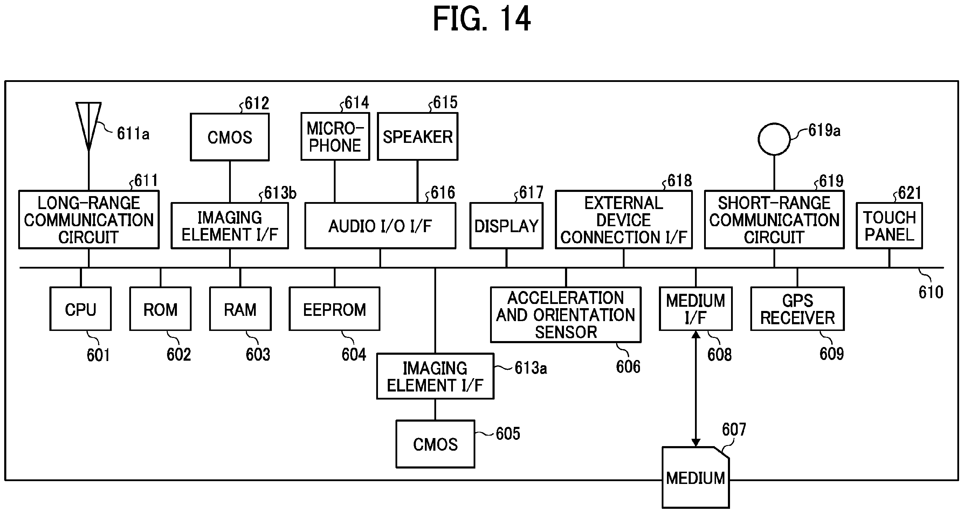

Hereinafter, a description is given of a hardware configuration of a smart phone 6 with reference to FIG. 14. FIG. 14 is an example of hardware block diagram of the smart phone. As illustrated in FIG. 14, the smart phone 6 includes, for example, a CPU 601, a ROM 602, a RAM 603, an EEPROM 604, a CMOS sensor 605, an imaging element I/F 613a, an acceleration and orientation sensor 606, a medium I/F 608, and a global positioning system (GPS) receiver 609.

The CPU 601 controls entire operation of the smart phone 6. The ROM 602 stores a control program such as an initial program loader (IPL) to boot the CPU 601. The RAM 603 is used as a work area for the CPU 601. The EEPROM 604 reads or writes various data such as a control program for a smart phone under control of the CPU 601. The CMOS sensor 605 captures an object (mainly, a self-image of a user operating the smart phone 6) under control of the CPU 601 to obtain image data. The imaging element I/F 613a is a circuit that controls the driving of the CMOS sensor 612.

The acceleration and orientation sensor 606 includes various sensors such as an electromagnetic compass for detecting geomagnetism, a gyrocompass, and an acceleration sensor. The medium I/F 608 controls reading and writing of data from and to a storage medium 607 such as a flash memory. The GPS receiver 609 receives GPS signals from GPS satellites.

The smart phone 6 further includes a long-range communication circuit 611, a CMOS sensor 612, an imaging element I/F 613b, a microphone 614, a speaker 615, an audio input/output I/F 616, a display 617, an external device connection I/F 618, a short-range communication circuit 619, an antenna 619a for the short-range communication circuit 619, and a touch panel 621.

The long-range communication circuit 611 is a circuit that enables the smart phone 6 to communicate with other device through the communication network C100. The CMOS sensor 612 is a type of built-in imaging unit configured to capture images of objects under the control of the CPU 601 to obtain image data.

The imaging element I/F 613b is a circuit that controls driving of the CMOS sensor 612. The microphone 614 is an example of a built-in audio collecting device configured to input audio. The audio input/output I/F 616 is a circuit for controlling input and output of audio signals between the microphone 614 and the speaker 615 under control of the CPU 601. The display 617 is an example of a display device that displays an image of a subject, various icons, etc. The display 617 is configured as a liquid crystal display or an organic EL display, for example. The external device connection I/F 618 is an interface that connects the smart phone 6 to various external devices. The short-range communication circuit 619 is a communication circuit in compliance with communication standards, such as NFC, Bluetooth (registered trademark) or the like. The touch panel 621 is an example of an input device that enables a user to operate the smart phone 6 by touching a screen of the display 617.

The smart phone 6 further includes a bus line 610. The bus line 610 is an address bus and a data bus for electrically connecting each of the components, such as the CPU 601.

Further, a storage medium, such as hard disk (HD) and CD-ROM storing any of the above-described programs can be distributed domestically or overseas as a program product.

(Functional Configuration of Diagnosis System)

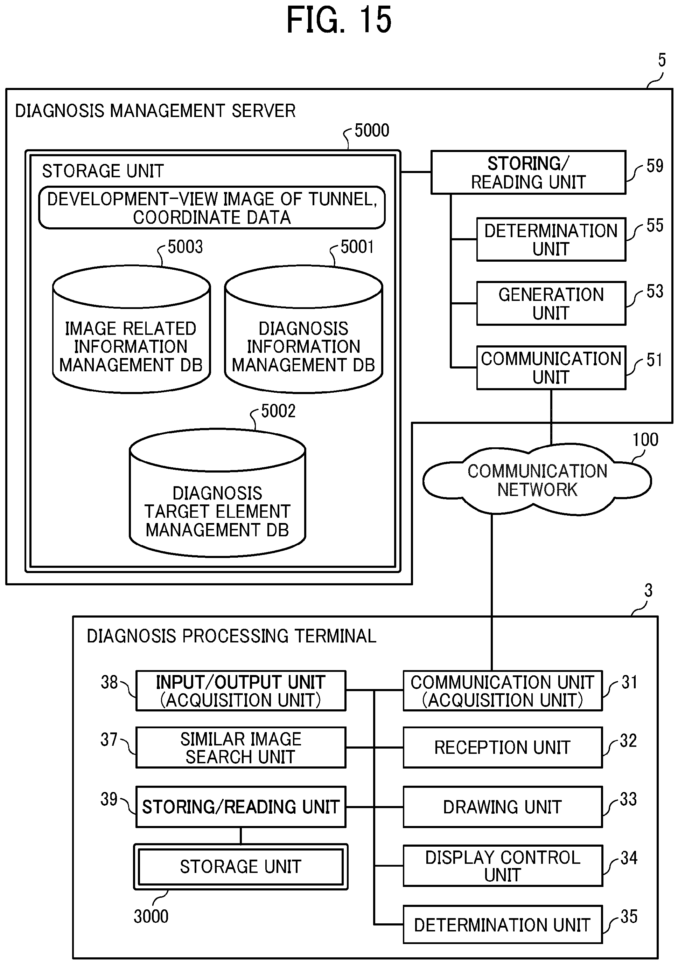

Hereinafter, a description is given of a functional configuration of the diagnosis system 1000 with reference to FIGs. 15 to 19. FIG. 15 is an example of a functional block diagram of the diagnosis system 1000.

(Functional Configuration of Diagnosis Processing Apparatus)

As illustrated in FIG. 15, the diagnosis processing apparatus 3 includes, for example, a communication unit 31, a reception unit 32, a drawing unit 33, a display control unit 34, a determination unit 35, a similar image search unit 37, an input/output unit 38, and a storing/reading unit 39. Each of these units indicates a function or functional unit implemented by operating any of the hardware components illustrated in FIG. 13 under instructions of the CPU 301 executing programs loaded on the RAM 303 from the HD 304. The diagnosis processing apparatus 3 further includes a storage unit 3000 implemented by the RAM 303 and the HD 304 (FIG. 13).

(Re-inspection Result Information)

The storage unit 3000 stores re-inspection result information acquired via the input/output unit 38 of the smart phone 6 of the portable imaging system, or re-inspection result information transmitted to the diagnosis management server 5 from the smart phone 6 and stored in the diagnosis management server 5 and the acquired via the communication unit 31.

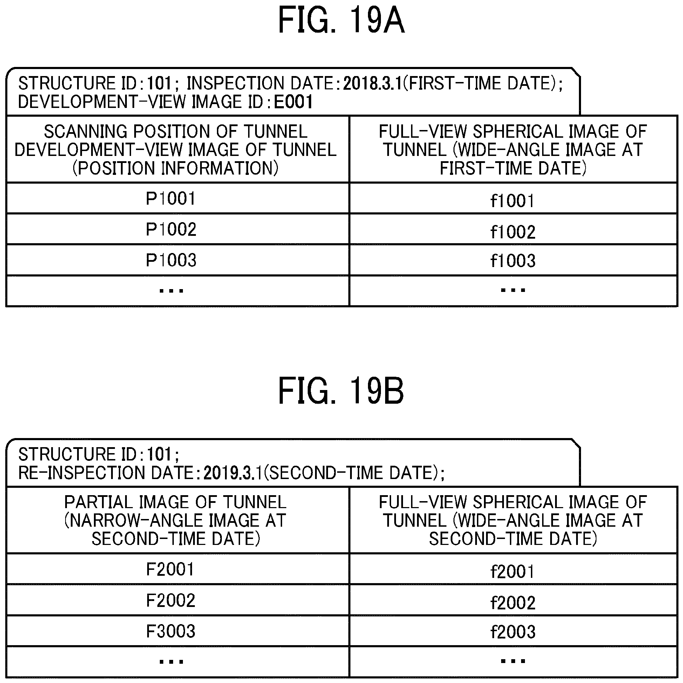

FIG. 19B illustrates an example of the re-inspection result information acquired by the diagnosis processing apparatus 3. FIG. 19B illustrates the re-inspection result information using a table format to facilitate the understanding, but the re-inspection result information can use any format other than the table format. The re-inspection result information includes, for example, the partial area image of the development-view image of the tunnel 8 and the full-view spherical image of the tunnel 8 associated with the structure object ID and each re-inspection date.

The structure object ID is an example of structure object identification information identifying each structure object, such as each tunnel. Even if the inspection date are different dates, the same structure object ID is used for the same tunnel.

The re-inspection date indicates a date on which the images were captured using the portable imaging system (an example of the second-time date) as indicated in the right side of the top section of FIG. 19B.

The partial area image of the development-view image 201d of the tunnel 8 is an example of a narrow-angle image captured on the second-time date. The partial area image of the development-view image 201d of the tunnel 8 indicates a file name of plane image generated by the another secondary imaging device 200a when the inspector captured the diagnosis target on the re-inspection date using the another secondary imaging device 200a (FIG. 3).

The full-view spherical image of the tunnel 8 is an example of a wide-angle image captured on the second-time date. The full-view spherical image of the tunnel 8 indicates a file name of image generated by the primary imaging device 100 when the inspector captured images of a wide area of the tunnel including the diagnosis target on the re-inspection date using the primary imaging device 100.

The narrow-angle image and the wide-angle image can be defined by setting a relationship of angle of views used for the image capturing, that is, "angle of view of narrow-angle image is smaller than angle of view of wide-angle image."

(Functional Configuration of Diagnosis Processing Apparatus)

Hereinafter, a description is given of functional configuration of the diagnosis processing apparatus 3 with reference to FIG. 13.

The communication unit 31, implemented by the network I/F 309 and an instruction from the CPU 301 (FIG. 13), transmits and receives various data or information to and from other terminals, devices, or systems via the communication network C100.

The reception unit 32 is typically implemented by an instruction from the CPU 301 (FIG. 13). When the reception unit 32 receives signals from the keyboard 311 and/or the mouse 312 operated by a user, the reception unit 32 receives various operations performed by a user.

The drawing unit 33, implemented by an instruction from the CPU 301 (FIG. 13), draws a pattern, such as a line or an area (e.g., rectangular shape), on an image displayed on the display 308.

The display control unit 34, implemented by an instruction from the CPU 301 (FIG. 13), causes the display 308 to display various images and screens.

The determination unit 35, implemented by an instruction from the CPU 301 (FIG. 13), performs various determinations to be described later.

The similar image search unit 37 , implemented by an instruction from the CPU 301 (FIG. 13), uses a given specific image as a search key to search other one or more images to extract an image having a similarity level higher than a given value

The input/output unit 38, implemented by an instruction from the CPU 301 and the media I/F 307 or the media drive 314 (FIG. 13), inputs data from various media such as DVD, and outputs data to various media.

The storing/reading unit 39, implemented by an instruction from the CPU 301 and the HDD 305, the media I/F 307, and the media drive 314 (FIG. 13), stores various data in the storage unit 3000, the recording medium 306, and the media 313, and reads various data from the storage unit 3000, the recording medium 306, and the media 313.

(Functional Configuration of Diagnosis Management Server)

As illustrated in FIG. 15, the diagnosis management server 5 includes, for example, a communication unit 51, a generation unit 53, a determination unit 55, and a storing/reading unit 59. Each of these units indicates a function or functional unit implemented by operating any of the hardware components illustrated in FIG. 13 under an instruction from the CPU 501 executing programs loaded to the RAM 503 from the HD 504. The diagnosis management server 5 further includes a storage unit 5000, implemented by the HD 504 (FIG. 13).

(Development-View Image and Coordinate Data)

FIG. 16 is a schematic diagram indicating a relationship of the development-view image 201d and coordinate data 201c. As illustrated in FIG. 1, the storage unit 5000 stores various data, such as detail information of inspection findings, the development-view image 201d, data of each sensor such as a range sensor, and data of a tunnel ledger.

The coordinate data 201c is data generated by the generation unit 53 after the communication unit 51 of the diagnosis management server 5 acquires the development-view image 201d and the detection data from the diagnosis processing apparatus 3. The coordinate data 201c can be generated while capturing images in the tunnel 8 from the image capture vehicle 9 traveling in the tunnel 8. A part of the coordinate data 201c can be used as position information indicating a scanning position to be described later. The generation method of the coordinate data 201c will be described later.

When the development-view image 201d is output from the camera unit of the image capture vehicle 9, the development-view image 201d is the image data alone without any information regarding a positional relationship between the development-view image 201d and the actual tunnel. If the positional relationship between the development-view image 201d and the actual tunnel is not accurately defined, it would take too much time and effort for the user to identify the location of the inspection findings (e.g., cracks, any defects), found or observed during the inspection, on the development-view image 201d.

Therefore, in order to accurately define the positional relationship between the development-view image 201d and the actual tunnel, the coordinate data corresponding to the development-view image 201d is generated.

As illustrated in in FIG. 16, the tunnel is configured with a plurality of spans (formworks) made of certain material such as concrete, in which each span sequentially represents a first span, a second span, a third span, and so on from an entrance to an exit of an actual tunnel.

The span indicates each segment having a given width (e.g., 10 meters), which is segmented from the entrance to the exit of the tunnel 8. FIG. 16 illustrates an example of the development-view image 201d composed of images of multiple spans.

The span number is specified in the tunnel ledger managed by the tunnel administrator.

Further, as illustrated in in FIG. 16, the coordinate data is set for the plurality of spans, in which a span number for the coordinate data is set from the left to the right, such that the first span is indicated by a span number "S001," and the second span is indicated by a span number "S002," and so on. In addition, coordinates (xn, ym) are used to indicate a specific position in each span. For example, even if one point in one span and another point in another span (i.e., any two points) in the coordinate data are represented by the same coordinates, since the spans are different, the coordinates of one point in one span and the coordinates of another point in another span indicate different positions in the tunnel. Accordingly, with the coordinate data defining the coordinates (xn, ym) of specific positions in the specific span number, the positional relationship between the development-view image 201d and the actual tunnel can be accurately defined, such that a specific location of the inspection finding (e.g., defect) marked on the actual tunnel can be identified using the coordinate system of the development-view image 201d. As above described, the development-view image 201d are associated with coordinate data of the tunnel 8. In case of a tunnel without spans, a specific position in the development-view image is identified using a position coordinate alone without using the span number such as "S001."

(Diagnosis Information Management Table)

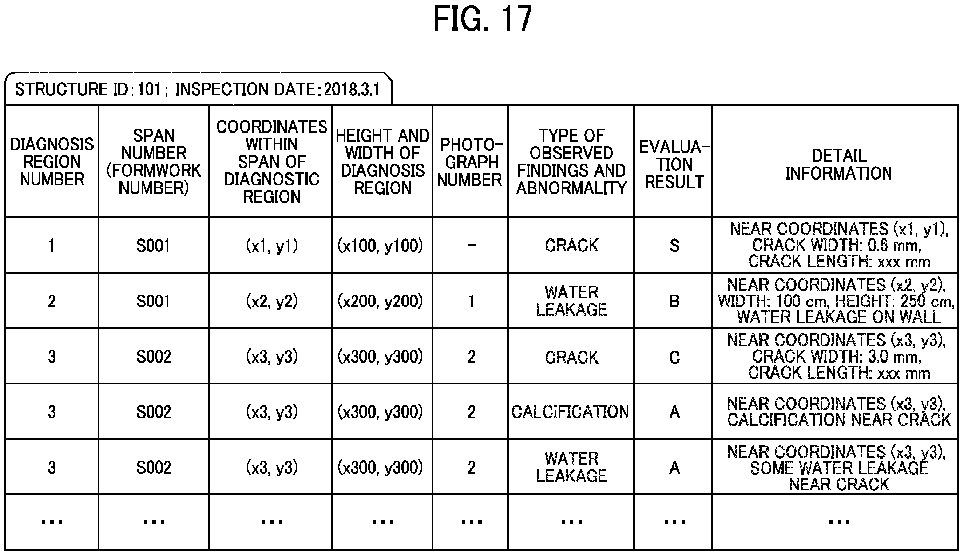

FIG. 17 is an example of a diagnosis information management table. The storage unit 5000 stores and manages a diagnosis information management database (DB) 5001 (FIG. 17) including the diagnosis information management table of FIG. 17. The coordinate data 201c (FIG. 16) is generated by the diagnosis management server 5 as described above.

The diagnosis processing apparatus 3 receives a user operation to draw an image such as a line or the like over the observed inspection findings, such as cracks, displayed on the development-view image 201d. With the coordinate data 201c (FIG. 16) created at the diagnosis management server 5 and the drawing made by the user, the specific position of the observed inspection findings on the development-view image 201d is identified. Specifically, the diagnosis management server 5 uses the diagnosis information management table (FIG. 17) to manage the coordinates of the identified observed inspection findings portion, indicating a position of the identified observed inspection findings portion.

As illustrated in FIG. 17, the diagnosis information management table stores various items, such as a diagnosis region number, a span number (formwork number), coordinates within a span of a diagnosis region, a height and width of a diagnosis region, a photograph number, a type of observed inspection findings and abnormality (potential abnormalities), an evaluation result, and detail information of inspection findings, which are associated with each other for each structure object ID and inspection date. In this description, the diagnosis information may be also referred to as the assessment-related information or assessment information.

The structure object ID indicates an example of structure object identification information identifying a structure object, such as a tunnel. If the same tunnel is inspected two or more times, the same structure object ID is maintained even if the inspection dates are different. The inspection date indicates a specific day (an example of the first-time date) when the image is captured using the inspection vehicle 7 and the image capture vehicle 9 illustrated in the left side of FIG. 1.

The diagnosis region number indicates identifying information indicating a group including a diagnosis region to be described later.

The span number indicates a specific span number in the coordinate data 201c (FIG. 16), and is a value indicating the specific span number of the tunnel 8. The span number (formwork number) is a number assigned to each span of the tunnel 8. The span number is specified in the tunnel ledger managed by the government office.

The coordinates within the span related to the diagnosis region indicate specific position coordinates in the coordinate data 201c (FIG. 16), and indicate the position coordinates of a specific point (e.g., start point) of the diagnosis region in a specific span that is counted, for example, from the origin point of the specific span.

The height and width of the diagnosis region indicate the height and the width of a specific diagnosis region with respect to the origin point of the specific span related to the specific diagnosis region. The height and width of the diagnosis region indicate values identifying the entire specific diagnosis region.

The photograph number indicates identification information identifying each photograph attached to the photograph ledger.

The type of observed inspection findings and abnormality indicate a type of inspection findings and abnormality at the inspection object and portion (i.e., diagnosis target) inspected by the inspector.

The evaluation result indicates an evaluation of the diagnosis target inspected by the inspector. Typically, the conditions of the diagnosis target are ranked using the evaluation levels of "S, A, B, and C," in which "S" is the worst condition, and the condition becomes less severe in the order of "S, A, B, and C." The evaluation result may be also referred to as the assessment result in this description.

The detail information of inspection findings is contents of information of inspection findings recorded by the inspector and/or assistant (FIG. 1).

(Diagnosis Target Element Management Table)

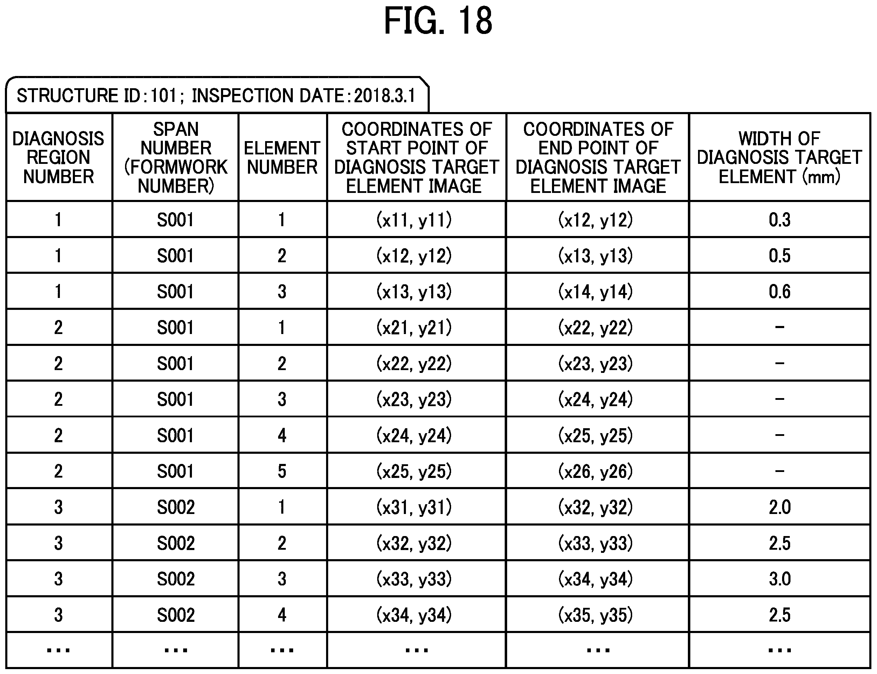

FIG. 18 illustrates an example of a diagnosis target element management table. The storage unit 5000 stores and manages a diagnosis target element management DB 5002 (FIG. 15) including the diagnosis target element management table of FIG. 18. As illustrated in FIG. 18, the diagnosis target element management table stores various items, such as a diagnosis region number, a span number (formwork number), an element number, coordinates of a start point of a diagnosis target element image, coordinates of an end point of a diagnosis target element image, and a width of a diagnosis target element (mm) in association with each other for each structure object ID and inspection date.

The structure object ID, the inspection date, the diagnosis region number and the span number (formwork number) are the same as those in the diagnosis information management table (FIG. 17). The diagnosis information management table (FIG. 17) and the diagnosis target element management table (FIG. 18) are associated with each other using the diagnosis region number and the span number (formwork number).

The element number is identification information identifying each diagnosis target element image, which is the element of the diagnosis target image.

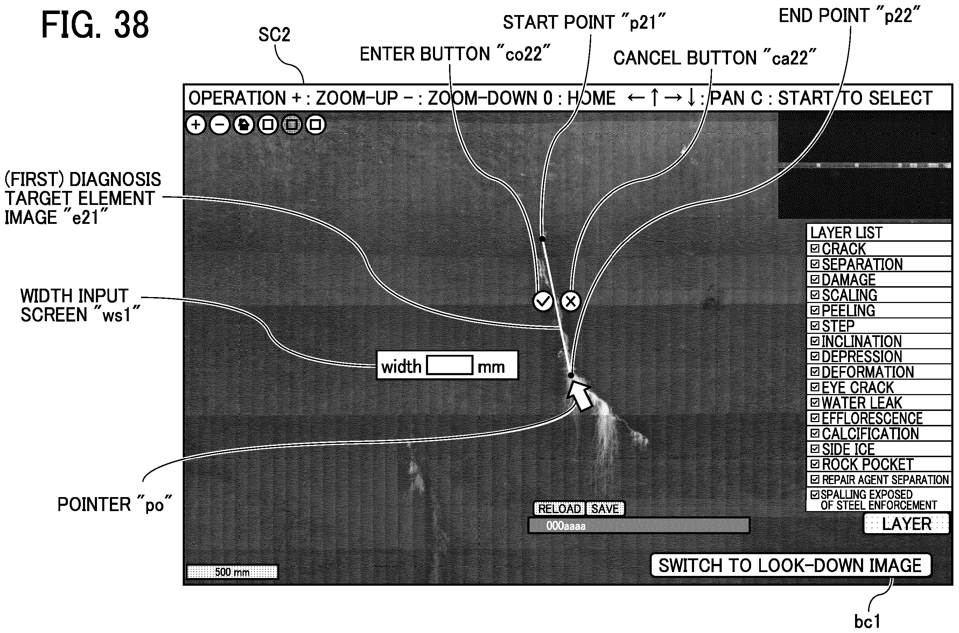

The coordinates of start point of diagnosis target element image indicate the coordinates of start point when the diagnosis target element image is drawn in a specific span in the development-view image 201d. For example, in an example case of FIG. 38, coordinates of a start point "p21" indicate the start point of a first diagnosis target element image "e21."

The coordinates of end point of diagnosis target element image indicate the coordinates of end point when the diagnosis target element image is drawn in a specific span in the development-view image 201d. For example, in an example case of FIG. 38, coordinates of an end point "p22" indicate the end point of the first diagnosis target element image "e21."

Further, each of the coordinates of start point and the coordinates of end point of diagnosis target element image indicates a specific position coordinate in the coordinate data 201c (FIG. 16).

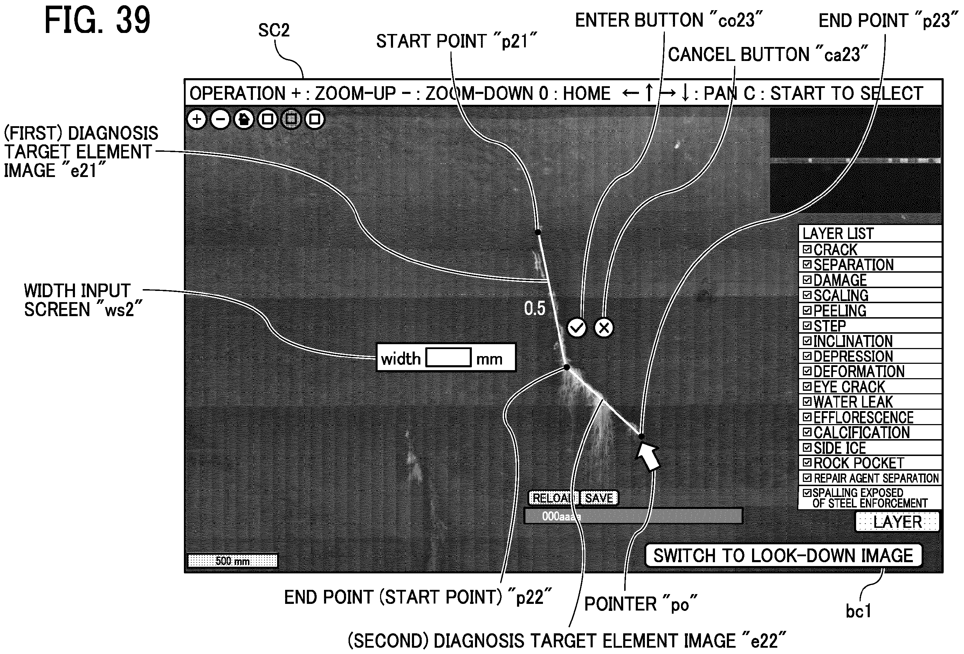

The width (mm) of the diagnosis target element indicates a width of the observed inspection findings, such as cracks when the diagnosis target element is cracks. For example, an example case of FIG. 38, a value is input to a width input screen "ws1" by a user. When the user inputs a numerical value in the width input screen "ws1," the reception unit 32 receives the input numerical value, and then the display control unit 34 displays the input numerical value (e.g., "0.5") as illustrated in FIG. 39.

(Image Related Information Management Table)

FIG. 19A illustrates an example of an image related information management table. The storage unit 5000 stores and manages an image related information management DB 5003 (FIG. 15) including the image related information management table of FIG. 19A. As illustrated in FIG. 19A, the image related information management table stores various items, such as position information indicating the scanning position of development-view image of the tunnel 8 and the full-view spherical image of the tunnel 8 in association with each other for each structure object ID, inspection date, and development-view image ID.

The structure object ID and the inspection date are the same as the structure object ID and the inspection date of FIG. 17. In FIG. 19A, the inspection date indicates a specific day (an example of the first-time date) when the image is captured using the inspection vehicle 7 and the image capture vehicle 9 illustrated in the left side of FIG. 1.

The development-view image ID is an example of development-view image identification information identifying each tunnel development-view image.

The scanning position of development-view image of the tunnel 8 is an example of position information indicating each position in the tunnel 8 that is generated using the images captured the secondary imaging device 200 by scanning the surface of the tunnel 8 while the image capture vehicle 9 is running in the tunnel 8 as illustrated in FIG. 2.

The full-view spherical image of the tunnel 8 is an example of a wide-angle image, and indicates a file name of data of the full-view spherical image of the tunnel 8 such as a file name of wide-angle image at the first-time date in FIG. 19A.

(Functional Configuration of Diagnosis Management Server)

Hereinafter, a description is given of a functional configuration of the diagnosis management server 5 with reference to FIG. 15.

In the following description, each functional unit of the diagnosis management server 5 is described in relation with any of the components illustrated in FIG. 13 used for implementing each functional unit of the diagnosis management server 5.

The communication unit 51 of the diagnosis management server 5 (FIG. 15), implemented by an instruction of the CPU 501 (FIG. 13) and the network I/F 509 (FIG. 13), transmits and receives various data or information to and from other devices or terminals via the communication network C100.

The generation unit 53, implemented by an instruction from the CPU 501 (FIG. 13), generates the coordinate data 201c (FIG. 16) based on the development-view image 201d and the detection data of sensors, such as the ranging sensor, acquired from the diagnosis processing apparatus 3 by the communication unit 51 of the diagnosis management server 5. Specifically, the generation unit 53 generates the coordinate data 201c for the development-view image 201d using the detection data acquired from the sensors (e.g., first and second ranging sensors, gyro sensors) installed in the image capture vehicle 9 via the diagnosis processing apparatus 3 as described above. While the image capture vehicle 9 is capturing images of a tunnel inner surface while traveling through the tunnel 8, it is practically difficult for the image capture vehicle 9 to travel at a constant speed in the tunnel 8, and to maintain a constant distance between the image capture vehicle 9 and the tunnel inner surface. Further, the image capture vehicle 9 is often tilted at an angle due to dents on the road surface in the tunnel 8.

Therefore, the generation unit 53 uses the detection data of each sensor to generate the coordinate data for the development-view image 201d while correcting the coordinate data.

In a case of FIG. 16, when the position of the left upper corner of the span S001 in the coordinate data 201c and the upper left corner of the first span of the development-view image 201d are matched, the origin point is determined, with which the generation unit 53 can generate the coordinate data for the development-view image 201d based on the set origin point.

Further, the diagnosis management server 5 can set the origin point according to a user preference, such as an input from an administrator, or can automatically set the origin point at the generation unit 53. When the origin point is set automatically, the luminance value of the captured image rapidly changes at the entrance of the tunnel (i.e., a boundary between the outside and inside of the tunnel), in which the generation unit 53 can easily identify the entrance of the tunnel from the captured image.

Further, the generation unit 53 generates data of a submission document (e.g., observed inspection findings chart, photograph ledger, tunnel inspection result summary table) to be submitted to the tunnel administrator based on various data managed by the diagnosis information management DB 5001 and a diagnosis target element management DB 5002.

The determination unit 55, implemented by an instruction from the CPU 501 (FIG. 13), performs a determination process when the generation unit 53 is to generate data of the submission document.

The storing/reading unit 59, implemented by an instruction from the CPU 501 (FIG. 13) and the HDD 505 (FIG. 13), stores various data in the storage unit 5000, and reads out various data stored in the storage unit 5000.

(Processing or Operation)

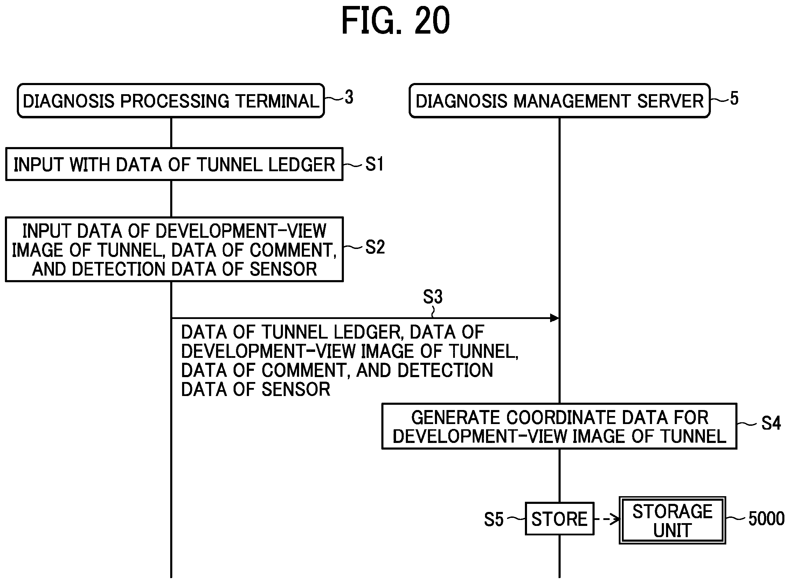

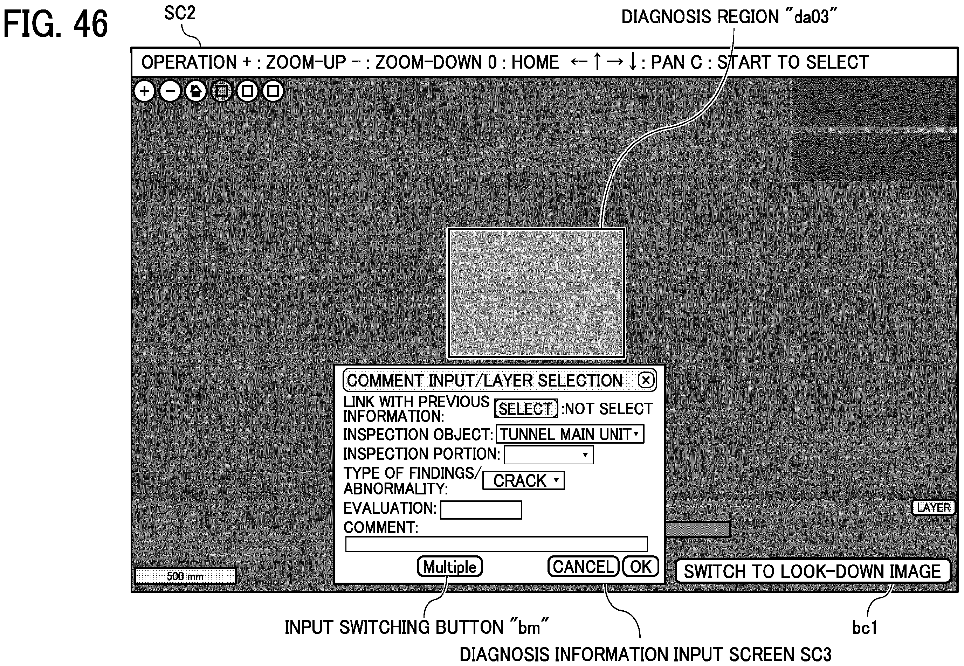

Hereinafter, a description is given of the processing and operation of the embodiment with reference to FIGs. 20 to 48.

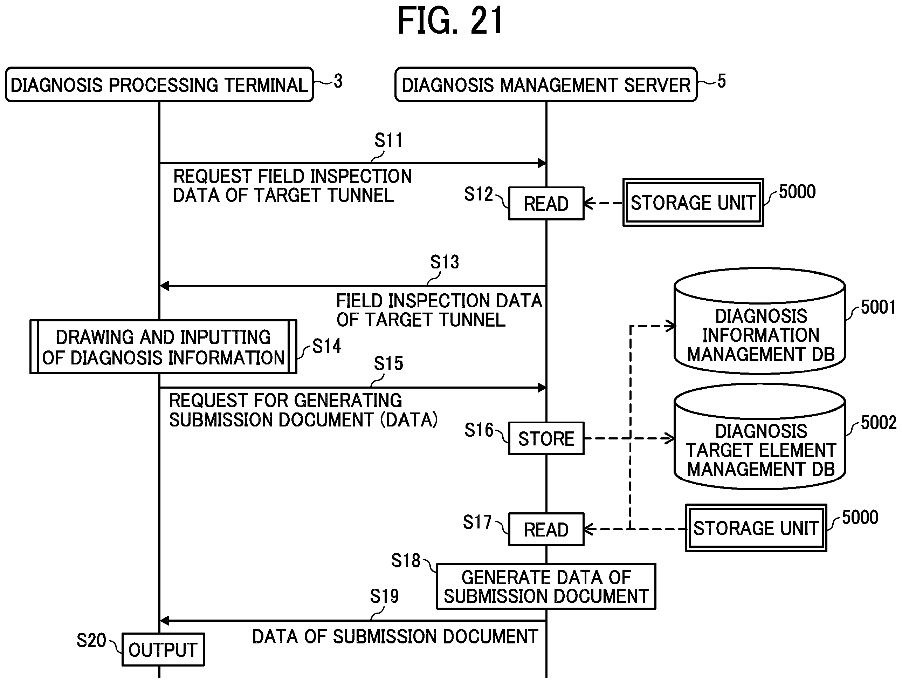

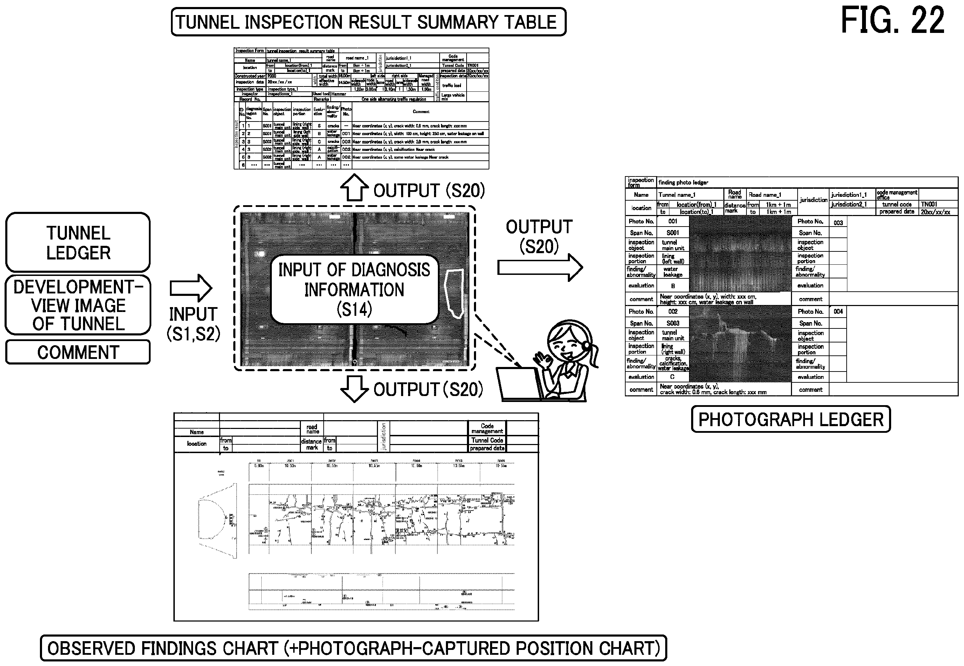

FIG. 20 is an example of a sequence diagram illustrating a process of updating data including the development-view image. FIG. 21 is an example of a sequence diagram illustrating a process of generating data of a submission document. FIG. 22 illustrates a scheme of creating a submission document according to the embodiment.

At first, as illustrated in FIG. 22, the diagnosis processing apparatus 3 is input with data of a tunnel ledger acquired from the tunnel administrator in accordance with a user operation (step S1). Hereinafter, the data input by the user using the diagnosis processing apparatus 3 is referred to as "field inspection data of the target tunnel."

Further, the diagnosis processing apparatus 3 is input with the development-view image, data of the detail information of inspection findings, and detection data of one or more sensors (e.g., range sensor), respectively obtained from the image capture vehicle 9 in accordance with the user operation (step S2).

The communication unit 31 of the diagnosis processing apparatus 3 uploads the data of the tunnel ledger, input in step S1, and each data (e.g., the development-view image 201d, data of detail information of inspection findings, and detection data of sensors such as a range sensor) input in step S2, to the diagnosis management server 5 (step S3). As a result, the communication unit 51 of the diagnosis management server 5 receives the data, such as the data of the tunnel ledger.

The diagnosis management server 5 generates the coordinate data 201c (FIG. 16) based on the data of the development-view image 201d and the detection data of the tunnel 8(step S4).

The storing/reading unit 59 stores the data, such as the data of the tunnel ledger, received in step S3, and the coordinate data 201c, generated in step S4, in the storage unit 5000 in association with one another (step S5).

Then, at any time when the user inputs the diagnosis target image, as illustrated in FIG. 21, the communication unit 31 of the diagnosis processing apparatus 3 transmits a request for the field inspection data of the target tunnel, such as the tunnel ledger or the like, to the diagnosis management server 5 in accordance with the user operation (step S11). As a result, the communication unit 51 of the diagnosis management server 5 receives the request for the data, such as a tunnel ledger.

Then, in the diagnosis management server 5, the storing/reading unit 59 reads the field inspection data of the target tunnel, such as data of the tunnel ledger or the like, stored in the storage unit 5000 in step S5 (step S12).

Then, the communication unit 51 transmits the field inspection data of the target tunnel, such as the tunnel ledger, read in step S12, to the diagnosis processing apparatus 3 (step S13). As a result, the development-view image 201d is displayed at the diagnosis processing apparatus 3 using the browser.

Then, as illustrated in FIG. 22, in accordance with the user operation, the diagnosis processing apparatus 3 performs a process of drawing a diagnosis target image (including diagnosis target element image) on a part of the development-view image 201d (hereinafter, partial development-view image 202), and inputting diagnosis information (step S14). The processing in step S14 will be described in detail later.

Then, the communication unit 31 transmits a request for creating a submission document to be submitted to the tunnel administrator to the diagnosis management server 5, together with the data of the drawn diagnosis target element image, and the data of the input diagnosis information (step S15). As a result, the communication unit 51 of the diagnosis management server 5 receives the request for creating the submission document with the data of the diagnosis target element image and the data of the diagnosis information.

Then, in the diagnosis management server 5, the storing/reading unit 59 stores the data of diagnosis information and the data of diagnosis target element image, respectively, in the diagnosis information management DB 5001 and the diagnosis target element management DB 5002 (step S16).

Further, in order to create the submission document, the storing/reading unit 59 reads the data of diagnosis information and the data of the diagnosis target element image, respectively from the diagnosis information management DB 5001 and the diagnosis target element management DB 5002, and also reads the data, such as the tunnel ledger or the like, from the storage unit 5000 (step S17).

Then, the generation unit 53 of the diagnosis management server 5 generates the data of the submission document (e.g., observed inspection findings chart, photograph ledger, tunnel inspection result summary table), illustrated in FIG. 22, using the data of diagnosis information, the data of the diagnosis target element image, and the data of tunnel ledger or the like (step S18).

The communication unit 51 transmits the data of the submission document to the diagnosis processing apparatus 3 (step S19). As a result, the communication unit 31 of the diagnosis processing apparatus 3 receives the data of the submission document.

Then, as illustrated in FIG. 22, the diagnosis processing apparatus 3 prints out the data of the submission document to be submitted to the tunnel administrator (step S20). As illustrated in FIG. 22, the submission document includes, for example, the tunnel inspection result summary table, the observed inspection findings chart, and the photograph ledger. By performing the above described processing, the inspection contractor can submit the data of the submission document to the government office using printed sheets.

Alternatively, if the tunnel administrator rule, such as the national government rule, allows the submission of the data of submission document to the tunnel administrator using electronic data alone, the inspection contractor can submit the electronic data of submission document to the tunnel administrator without printing the data of submission document.

Further, the submission document maybe submitted to the tunnel administrator from one entity that has created the submission document, or the submission document created by one entity is transferred to another entity, and then submitted to the tunnel administrator from another entity.

(Drawing and Inputting of Diagnosis Information)

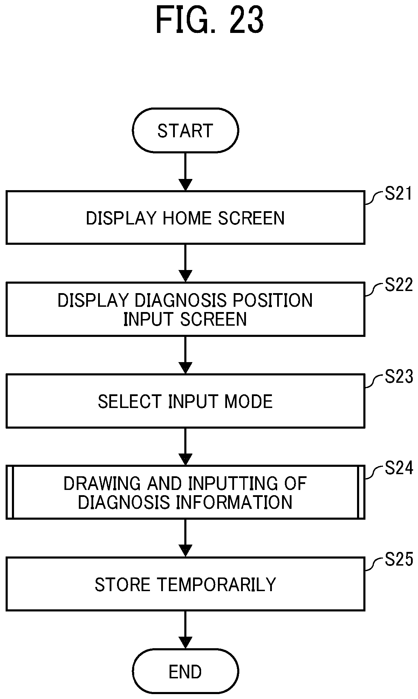

Hereinafter, a description is given of the detail of step S14 with reference to FIGs. 23, 27 and 28.

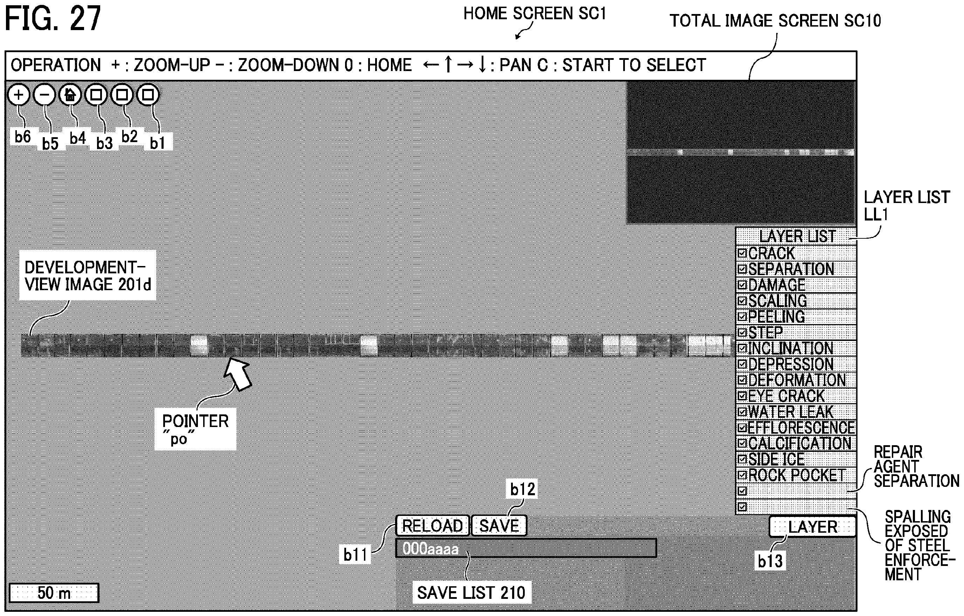

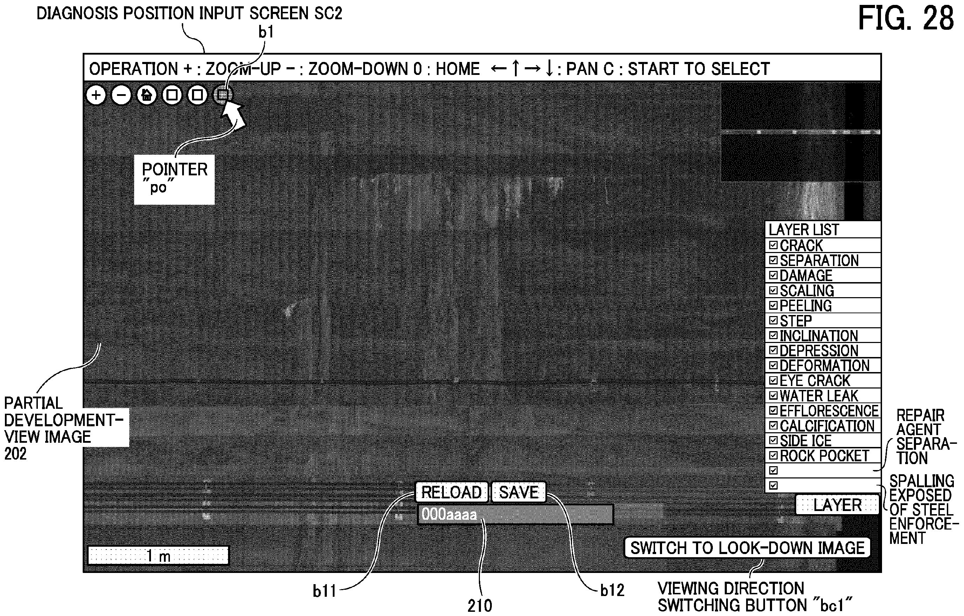

FIG. 23 is an example of a flowchart illustrating the steps of drawing of image and inputting of diagnosis information. FIG. 27 is an example of a home screen SC1. FIG. 28 is an example of a diagnosis position input screen SC2 when a first input mode of diagnosis target image (i.e., drawing of area) is selected.

As illustrated in FIG. 23, at first, when a user operates the diagnosis processing apparatus 3, the display control unit 34 displays the home screen SC1 (FIG. 27) on the display 308 (step S21). As illustrated in FIG. 27, the home screen SC 1 displays a development-view image 201d on the center of the home screen SC1.

Further, as illustrated in FIG. 27, the home screen SC1 displays a total image screen SC10 showing an entire image of the development-view image 201d on the right upper corner of the home screen SC1.

Further, as illustrated in FIG. 27, a plurality of selection buttons "b1" to "b6" is displayed on the upper left corner of the home screen SC1. The selection button "b1" is used for selecting a first input mode for inputting an area of the diagnosis target image (i.e., drawing of area). The selection button "b2" is used for selecting a second input mode for inputting lines of the diagnosis target image (i.e., drawing of line pattern). The selection button "b3" is used for selecting a third input mode for inputting the diagnosis region. When selected, the home button "b4" is used for returning to the home screen SC1. The reduction button "b5" is used for reducing a display size of the development-view image 201d. The enlargement button "b6" is used for enlarging a display size of the development-view image 201d.

Further, as illustrated in FIG. 27, "RELOAD" button "b11" is displayed at the lower center portion of the home screen SC1. The "RELOAD" button b11 is used for displaying a pull-down menu that lists data of the diagnosis region already uploaded to the diagnosis management server 5.

Similarly, as illustrated in FIG. 27, "SAVE" button "b12" is displayed at the lower center portion of the home screen SC1. The "SAVE" button "b12" is used for collectively transmitting data of the diagnosis region, temporarily stored in the diagnosis processing apparatus 3, to the diagnosis management server 5 to save the data of a diagnosis region in the diagnosis management server 5.

Further, a save list 110 is also displayed at the lower center portion of the home screen SC1. The save list 110 is used for displaying names of data of diagnosis regions downloaded from the diagnosis management server 5, and names of data of diagnosis regions temporarily stored in the diagnosis processing apparatus 3.

When the user selects the save list 110 using the pointer "po," the display control unit 34 displays the diagnosis position input screen SC2 showing the corresponding diagnosis region.

Further, as illustrated in FIG. 27, a layer list LL1 is displayed on the right side of the home screen SC1. The layer list LL1 lists types of inspection findings, such as defects. For example, the layer list LL1 displays the types of defects, such as a crack, a water leakage, and a calcification. When a check box of the layer list LL1 is checked, a layer of the checked defect is displayed on the development-view image 201d.

Further, as illustrated in FIG. 27, "LAYER" button "b13" is displayed at the right lower side of the home screen SC1. The "LAYER" button "b13" is used for displaying the layer list LL1 on a top layer.

When a user operates the mouse 312 to select a specific span, to be input with the drawing and diagnosis information, using the pointer "po" on the home screen SC 1, the display control unit 34 displays the diagnosis position input screen SC2 on the display 308 as illustrated in FIG. 28 (step S22). The diagnosis position input screen SC2 displays a partial development-view image 202 corresponding to the selected span of the development-view image 201d.

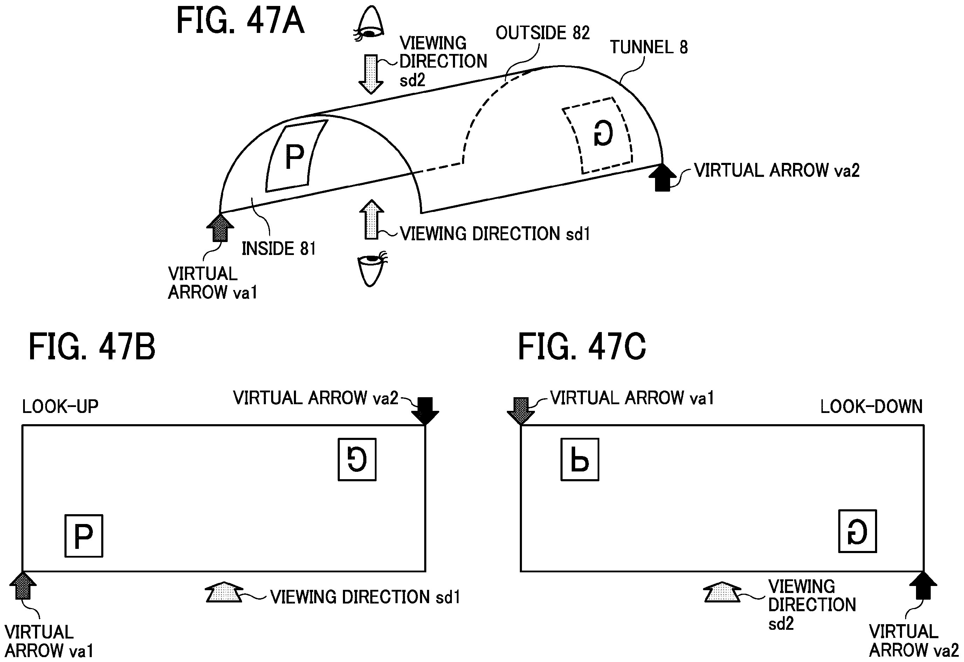

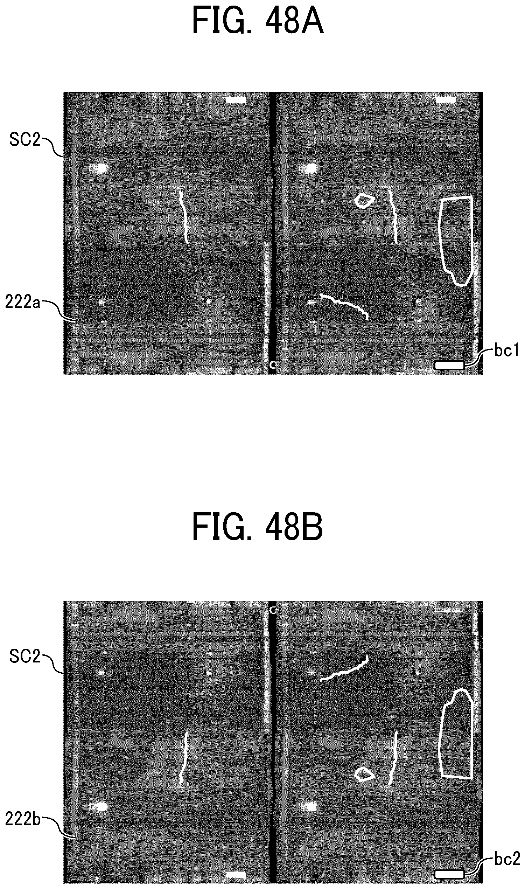

Further, as illustrated in FIG. 28, a viewing direction switching button "bc1" is displayed on the right lower corner of the diagnosis position input screen SC2. The viewing direction switching button "bcl" is used for switching the viewing direction of the development-view image 201d. The switching of the viewing direction will be described later with reference to FIGs. 47 and 48.

When the user selects any one of the selection buttons "b1," "b2," and "b3" using the pointer "po," the reception unit 32 receives the selection of the input mode (step S23).

Then, when the user performs the drawing of image and the inputting of diagnosis information in accordance with the input mode, the drawing of image and the inputting of diagnosis information are processed by the diagnosis processing apparatus 3 (step S24). The detail of step S24 will be described later for each input mode.

Then, when the reception unit 32 receives an operation of the mouse 312 and the like performed by the user, the storing/reading unit 39 temporarily stores the data of the diagnosis region generated by performing the drawing of image and the inputting of diagnosis information to the storage unit 3000 (step S25). The drawn image data and the input diagnosis information are to be transmitted to the diagnosis management server 5 from the diagnosis processing apparatus 3 in step S15 described above.

(Input Mode of Diagnosis Target Image (Drawing of Area))

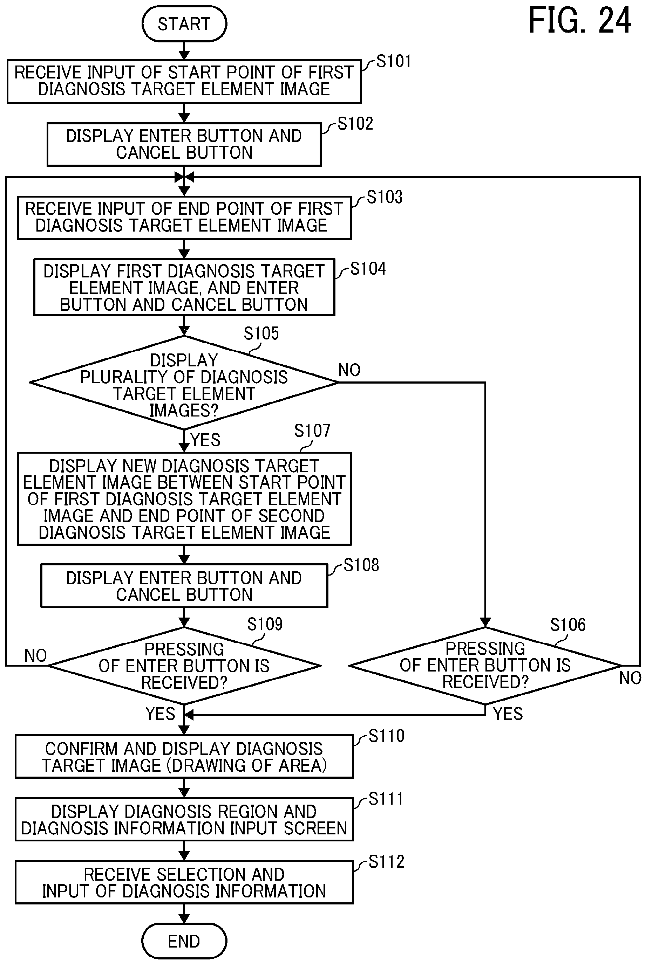

Hereinafter, a description is given of the detail of step S24 (FIG. 23) when the first input mode for inputting an area of the diagnosis target image (i.e., drawing of area) is selected with reference to FIGs. 24, and 28 to 35. The first input mode for inputting an area of the diagnosis target image (i.e., drawing of area) can be referred to as the first input mode of the diagnosis target image in this description. The first input mode of the diagnosis target image (i.e., drawing of area) is used when the diagnosis target corresponds to inspection findings that can be identified as a certain area, such as calcification and water leakage.

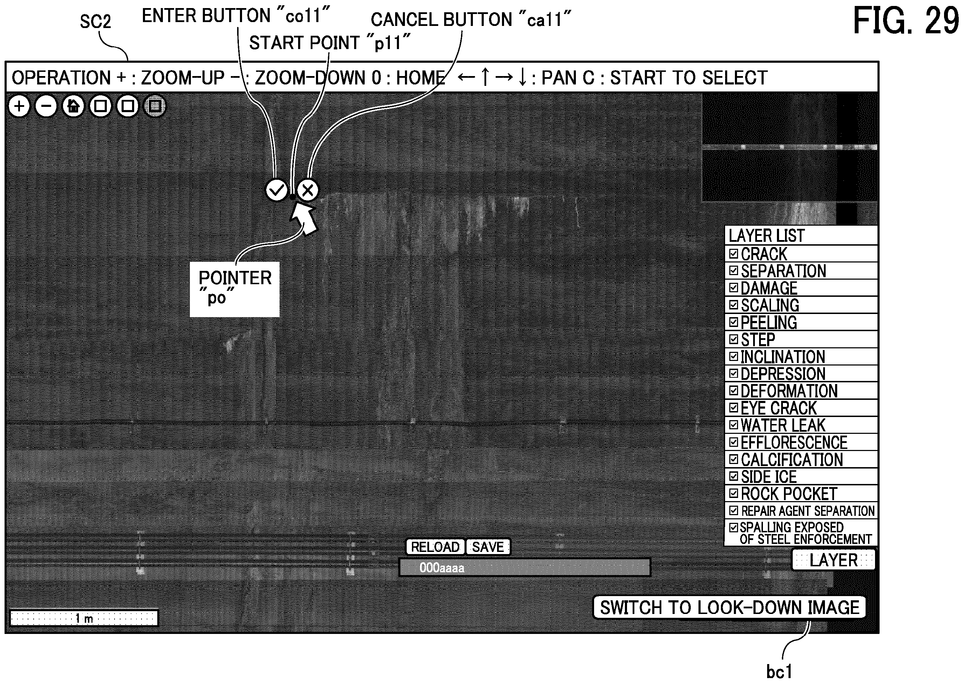

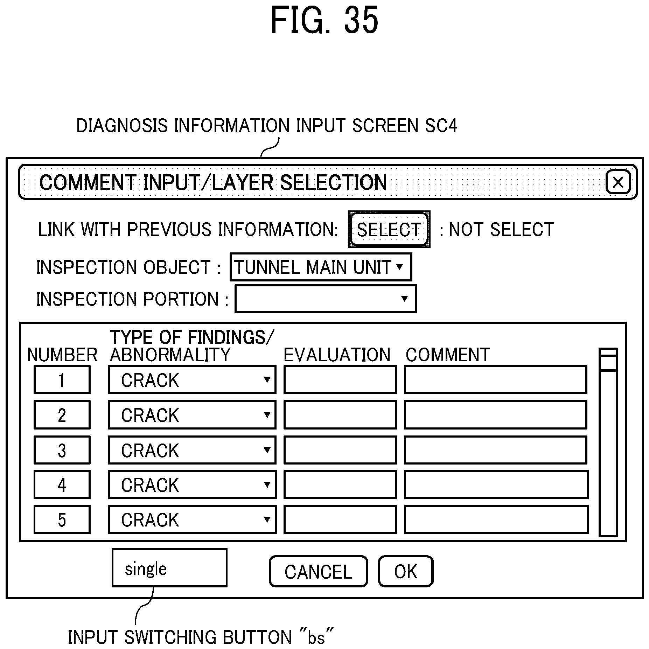

FIG. 24 is an example of a flowchart illustrating processing of the first input mode of the diagnosis target image (i.e., drawing of area). FIG. 28 is an example of the diagnosis position input screen SC2 when the first input mode of diagnosis target image (i.e., drawing of area) is selected. FIGs. 29 to 34 are examples of screens when inputting the diagnosis target image (i.e., drawing of area) on the diagnosis position input screen. FIG. 35 is another example of the diagnosis position input screen.

At first, when a user selects the selection button "b1" in step S23 using the pointer "po," the display control unit 34 sets the first input mode of the diagnosis target image (i.e., drawing of area) as illustrated in FIG. 28.

In this case, as illustrated in FIG. 29, when the user identifies a start point "p11" of a first diagnosis target element image "e11" using the pointer "po," the reception unit 32 receives the input of the start point "p11" of the first diagnosis target element image "e11" (step S101).

Then, the display control unit 34 displays an enter button "co11" and a cancel button "ca11" around the start point "p11" (step S102). The enter button "co11" is used for entering the input of the diagnosis target image to confirm the input of the diagnosis target element image. The cancel button "ca11" is used for cancelling the input of the identified start point "p11." Further, other enter buttons and other cancel buttons can be respectively used in the same way as the enter button "co11" and the cancel button "ca11" in this description.

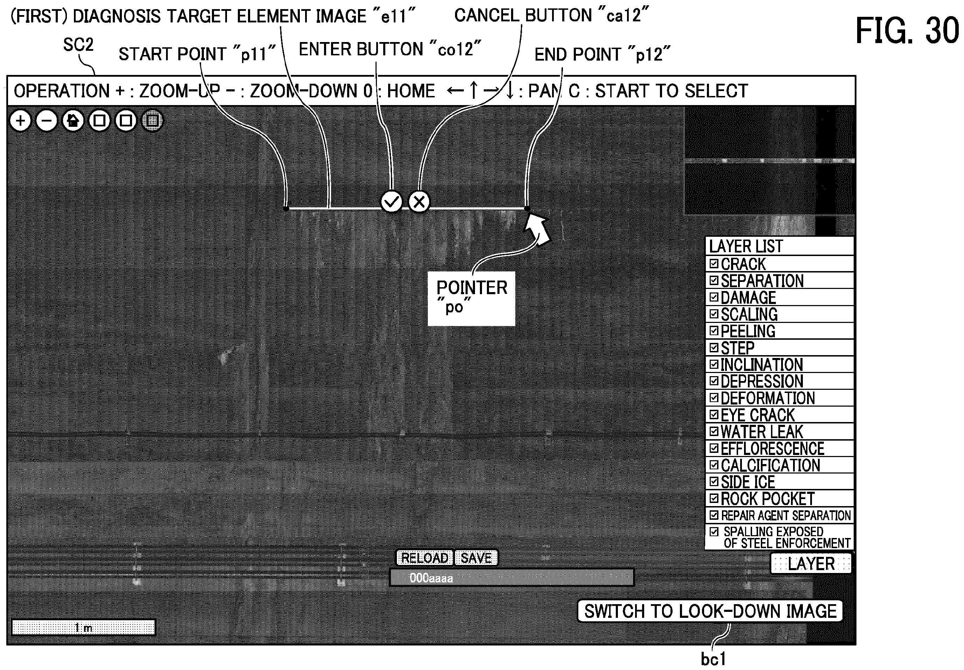

Then, as illustrated in FIG. 30, when the user identifies an end point "p12" of the diagnosis target element image e11 using the pointer "po," the reception unit 32 receives the input of the end point "p12" of the first diagnosis target element image "e11" (step S103).

Then, the display control unit 34 displays the first diagnosis target element image "e11" between the start point "p11" and the end point "p12," and also displays an enter button "co12" and a cancel button "ca12" around the center of the first diagnosis target element image "e11" (step S104) as illustrated in FIG. 30. As described above, the user can draw the diagnosis target element image by identifying the start point and the end point of the diagnosis target element image.

The determination unit 35 determines whether the diagnosis target element image, displayed in step S104, includes a plurality of diagnosis target element images (step S105). At this timing, since only one diagnosis target element image is displayed as illustrated in FIG.

30, the determination unit 35 determines that the diagnosis target element image does not include the plurality of diagnosis target element images (step S105: NO), and the sequence proceeds to step S106.

When the determination unit 35 determines that the diagnosis target element image does not include the plurality of diagnosis target element images (step S105: NO), the determination unit 35 determines whether pressing of the enter button is received by the reception unit 32 (step S106).

If the determination unit 35 determines that the pressing of the enter button is received by the reception unit 32 (step S106: YES), the sequence proceeds to step S110, to be described later. On the other hand, if the determination unit 35 determines that the pressing of the enter button is not received by the reception unit 32 (step S106: NO), the sequence returns to step S103.

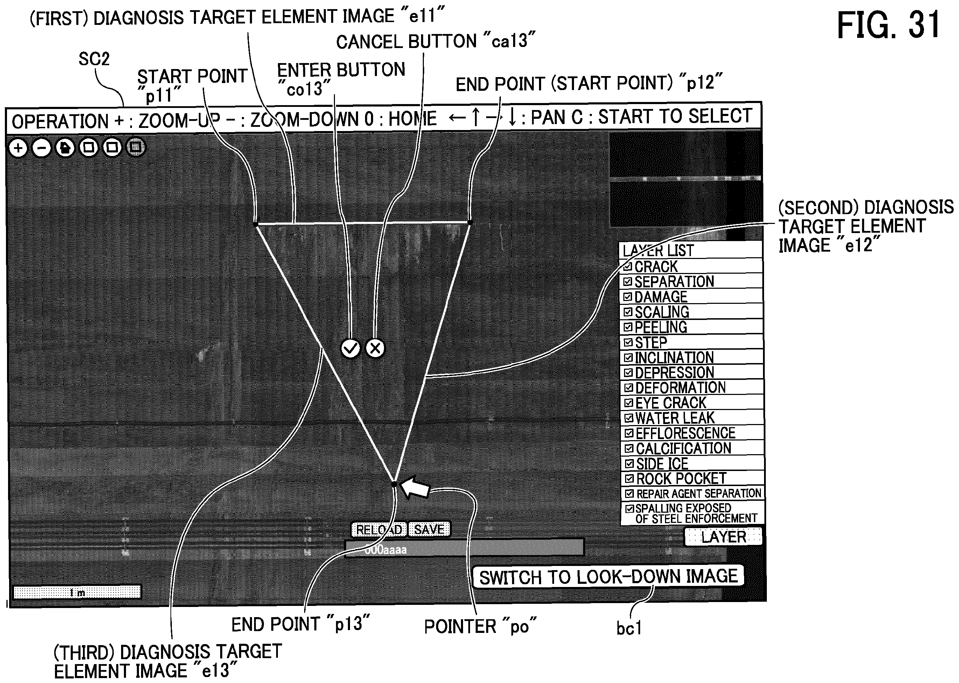

As illustrated in FIG. 31, when the user identifies an end point "p13" of a second diagnosis target element image "e12" using the pointer "po," the reception unit 32 receives the input of an end point "p13" of the second diagnosis target element image "e12." Since the start point of the second diagnosis target element image e12 matches the end point "p12" of the first diagnosis target element image "e11," the user can omit the identification of the start point of the second diagnosis target element image "e12."

Then, in step S104, the display control unit 34 displays the second diagnosis target element image "e12" between the start point (i.e., end point "p12") and the end point "p13," and also displays an enter button "co13" and a cancel button "ca13" between the first diagnosis target element image "e11" and the second diagnosis target element image "e12" as illustrated in FIG. 31.

Then, in step S105, the determination unit 35 determines whether the diagnosis target element image, displayed in step S104, includes a plurality of diagnosis target element images. At this timing, since two diagnosis target element images (i.e., the first diagnosis target element image "e11" and the second diagnosis target element image "e12") are displayed as illustrated in FIG. 18, the determination unit 35 determines that plurality of the diagnosis target element images is displayed (step S105: YES).

Then, the display control unit 34 automatically displays a third diagnosis target element image "e13" (i.e., new diagnosis target element image) between the start point "p11" of the first diagnosis target element image "e11" and the end point "p13" of the second diagnosis target element image "e12" as illustrated in FIG. 31 (step S107), in which the third diagnosis target element image "e13" is the latest diagnosis target element image.

Further, the display control unit 34 changes the display positions of the enter button and the cancel button (step S108). Specifically, the display control unit 34 changes the enter button "co12" and the cancel button "ca12" illustrated in FIG. 30 to the enter button "co13" and the cancel button "ca13" illustrated in FIG. 31.

Then, the determination unit 35 determines whether the pressing of the enter button is received by the reception unit 32 (step S109). If the determination unit 35 determines that the pressing of the enter button is not received by the reception unit 32 (step S109: NO), the sequence returns to the above described step S103.

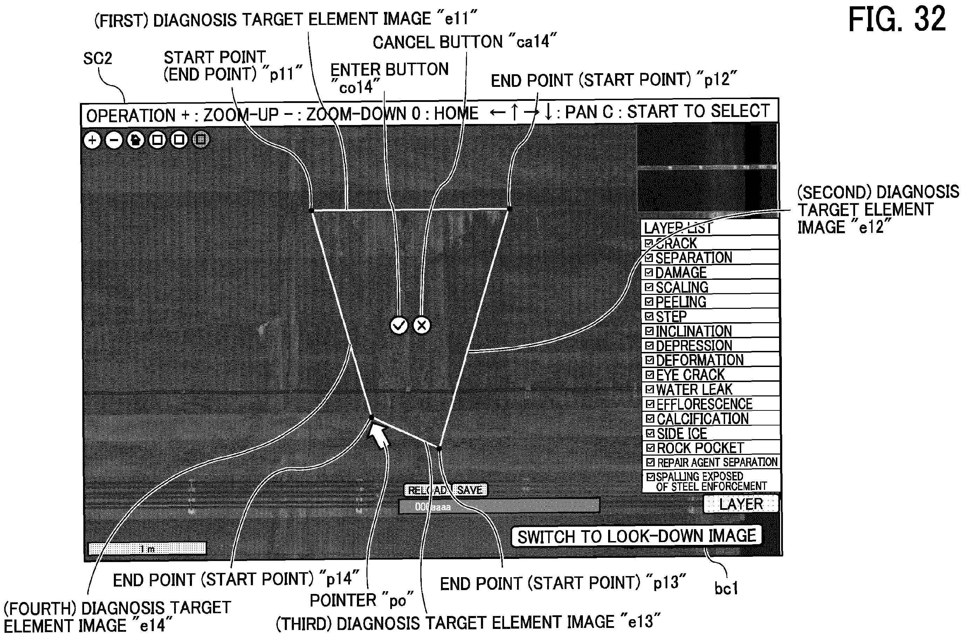

As illustrated in FIG. 32, when the user identifies an end point "p14" of the third diagnosis target element image "e13" using the pointer "po," the reception unit 32 receives the input of the end point "p14" of the third diagnosis target element image "e13." Since the start point of the third diagnosis target element image "e13" matches the end point "p13" of the second diagnosis target element image "e12," the user can omit the identification of the start point of the third diagnosis target element image "e13."

Then, in step S104, the display control unit 34 displays the third diagnosis target element image "e13" between the start point (i.e., end point "p13") and the end point "p14," and also displays an enter button "co14" and a cancel button "cal4" between the first diagnosis target element image "e11, the second diagnosis target element image "e12," and the third diagnosis target element image "e13."

Then, in step S105, the determination unit 35 determines whether the diagnosis target element image, displayed in step S104, includes the plurality of the diagnosis target element images. At this timing, since three diagnosis target element images are displayed as illustrated in FIG. 32, the determination unit 35 determines that the diagnosis target element image, displayed in step S104, includes the plurality of the diagnosis target element images (step S105:YES).

Then, in step S107, the display control unit 34 automatically displays a fourth diagnosis target element image "e14" (i.e., new diagnosis target element image) between the start point "p11" of the first diagnosis target element image "e11" and the end point "p14" of the third diagnosis target element image "e13" as illustrated in FIG. 32, in which the fourth diagnosis target element image "el4" is the latest diagnosis target element image.

Further, in step S108, the display control unit 34 changes the display positions of the enter button and the cancel button. Specifically, the display control unit 34 changes the enter button "col3" and the cancel button "ca13" illustrated in FIG. 31 to the enter button "co14" and the cancel button "ca14" illustrated in FIG. 32.

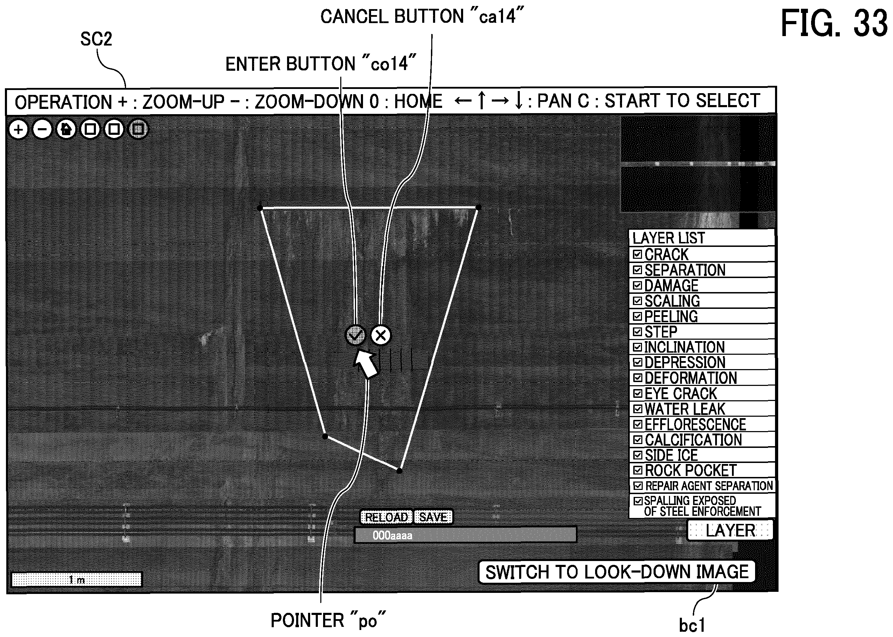

Then, as illustrated in FIG. 33, when the user presses the enter button "co14" using the pointer "po," the reception unit 32 receives the pressing, and the determination unit 35 determines that the pressing of the enter button is received by the reception unit 32 (step S 109: YES).

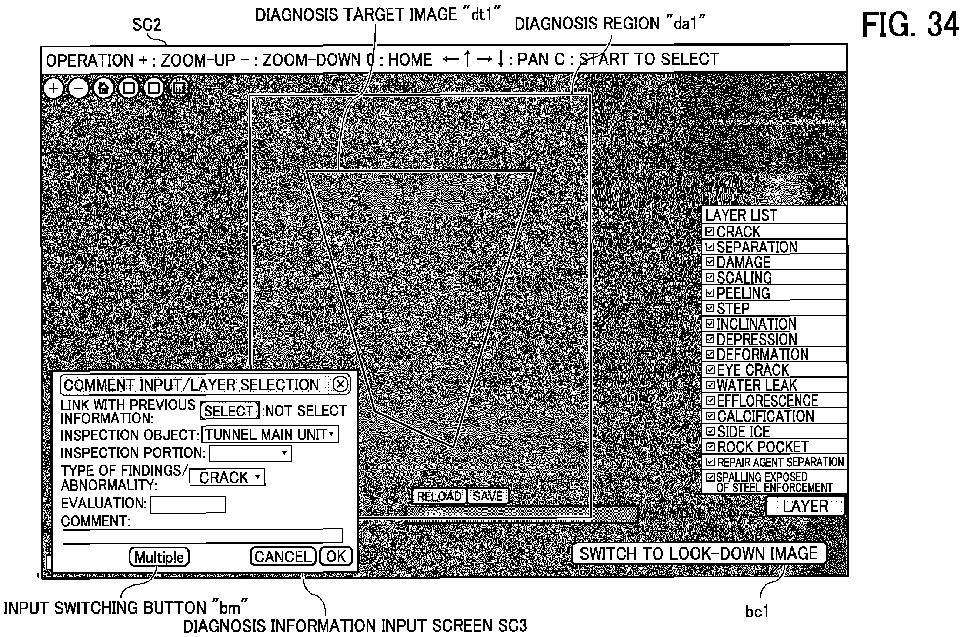

Then, as illustrated in FIG. 34, the determination unit 35 confirms the diagnosis target image (i.e., drawing of area), and the display control unit 34 displays a confirmed diagnosis target image "dt1" (step S110).

Then, as illustrated in FIG. 34, the display control unit 34 displays a rectangular-shaped diagnosis region "da1" including the diagnosis target image "dt1," and a diagnosis information input screen SC3 (step S111). In this case, in order to make the diagnosis information input screen SC3 conspicuous, the display control unit 34 can apply a masking on a portion other than the diagnosis information input screen SC3. In this description, the diagnosis information input screen SC3 may be referred to as the first input screen, and the diagnosis information input screen SC3 and other similar screens can be also referred to as the input screen, the input section, or the input box depending on purposes of the screens, in which the size of screen may be set smaller than a size of the display 308.

The user, such as the operator, uses the diagnosis information input screen SC3 to input the diagnosis information by referring to the detail information of inspection findings recorded by the inspector or the assistant.

As illustrated in FIG. 34, the diagnosis information input screen SC3 displays, for example, a selection button to link with the previous or past diagnosis information, a first pull-down menu for selecting an inspection object, a second pull-down menu for selecting an inspection portion, a third pull-down menu for selecting a type of observed-inspection findings and abnormality, a first input field for inputting an evaluation result, and a second input field for inputting the detail information of inspection findings.

The link with the previous or past diagnosis information is used when adding a new diagnosis target image in the already confirmed diagnosis region. For example, the link with the previous or past diagnosis information can be used when water leakage is already confirmed as one diagnosis target image in one diagnosis region, and then crack is added as a new diagnosis image in the one diagnosis region including the water leakage.

Further, as illustrated in FIG. 34, the diagnosis information input screen SC3 displays "OK" button for confirming the input diagnosis information, and "CANCEL" button for canceling the input diagnosis information. The diagnosis information can be also referred to as the assessment information. In this case, when the user selects and inputs the diagnosis information in the diagnosis information input screen SC3 and presses the "OK" button, the reception unit 32 receives the selection and the input of the diagnosis information (step S112). Further, as illustrated in FIG. 34, the diagnosis information input screen SC3 displays an input switching button "bm" for switching from the diagnosis information input screen SC3 to a diagnosis information input screen SC4 illustrated in FIG. 35.

When the input switching button "bm" (FIG. 34) is pressed, the display control unit 34 switches the diagnosis information input screen SC3 to the diagnosis information input screen SC4 (FIG. 35).

The diagnosis information input screen SC4 is used when one diagnosis region includes a plurality of diagnosis target images, and the diagnosis information is input for each one of the diagnosis target images. For example, when one diagnosis region includes three diagnosis target images (e.g. cracks, calcifications, water leaks), the diagnosis information input screen SC4 is used to collectively manage the one diagnosis region including the three diagnosis target images.

In this case, when data of the diagnosis information is uploaded from the diagnosis processing apparatus 3 to the diagnosis management server 5 at a later time, the diagnosis management server 5 manages the three diagnosis target images (e.g., cracks, calcifications, and water leaks) included in the same diagnosis region having the diagnosis region number of "3" as illustrated in FIG. 17.

Similar to the diagnosis information input screen SC3, the diagnosis information input screen SC4 displays "OK" button for confirming the input diagnosis information, and "CANCEL" button for canceling the input diagnosis information as illustrated in FIG. 35.

Further, as illustrated in FIG. 35, the diagnosis information input screen SC4 displays an input switching button "bs" for switching from the diagnosis information input screen SC4 to the diagnosis information input screen SC3 (FIG. 34).

When the input switching button "bs" (FIG. 35) is pressed, the display control unit 34 switches the diagnosis information input screen SC4 (FIG. 35) to the diagnosis information input screen SC3 (FIG. 34).

By performing the above described processing, the drawing of the diagnosis target image "dt1" and the diagnosis region "da1" and the selection and the input of the diagnosis information are completed for the first input mode of the diagnosis target image (i.e., drawing of area).

(Input Mode of Diagnosis Target Image (Drawing of Line Pattern))

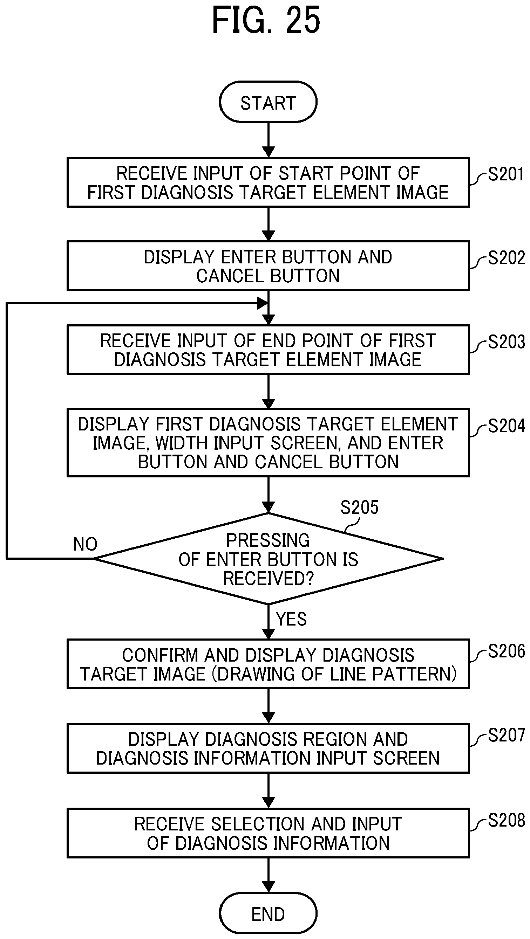

Hereinafter, a description is given of the detail of step S24 (FIG. 23) when the second input mode for inputting a line pattern of the diagnosis target image (i.e., drawing of line pattern) is selected with reference to FIGs. 25, and 36 to 41. The second input mode for inputting the line pattern of the diagnosis target image (i.e., drawing of line pattern) can be referred to as the second input mode of the diagnosis target image in this description. The second input mode of the diagnosis target image (i.e., drawing of line pattern) is typically used when the diagnosis target is crack.

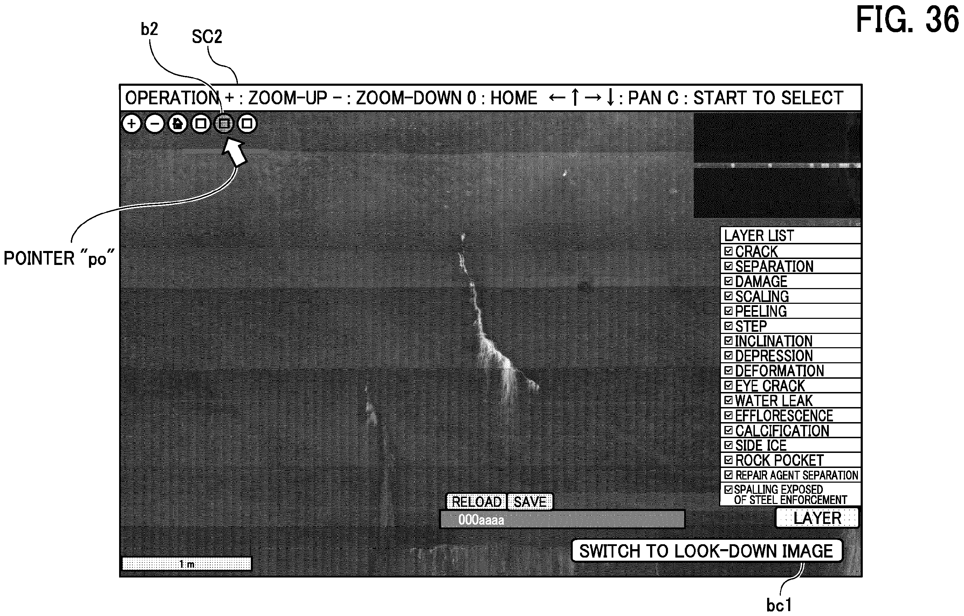

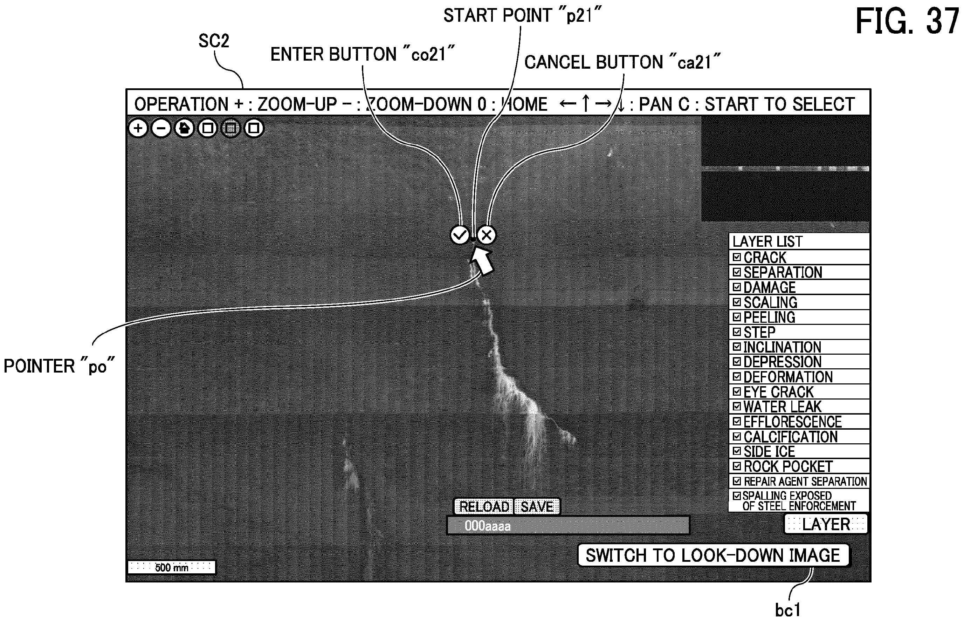

FIG. 25 is an example of a flowchart illustrating processing of the second input mode of the diagnosis target image (i.e., drawing of line pattern). FIG. 36 is an example of the diagnosis position input screen SC2 when the second input mode of the diagnosis target image (i.e., drawing of line pattern) is selected. FIGs. 37 to 41 are examples of the diagnosis position input screen SC2 when inputting the diagnosis target image (i.e., drawing of line pattern) on the diagnosis position input screen SC2.

At first, in step S23, when the user selects the selection button "b2" using the pointer "po," the display control unit 34 sets the second input mode of the diagnosis target image (i.e., drawing of line pattern) as illustrated in FIG. 36.

Then, as illustrated in FIG. 37, when the user identifies a start point "p21" of a first diagnosis target element image "e21" using the pointer "po," the reception unit 32 receives the input of the start point "p21" of the first diagnosis target element image "e21" (step S201).

Then, the display control unit 34 displays an enter button "co21" and a cancel button "ca 21" around the start point "21" (step S202).

As illustrated in FIG. 38, when the user identifies an end point "p22" of the first diagnosis target element image "e21" using the pointer "po," the reception unit 32 receives the input of the end point "p22" of the first diagnosis target element image "e21" (step S203).

Then, the display control unit 34 displays the diagnosis target element image "e21" and a width input screen "ws1" between the start point "p21" and the end point "p22," and also displays an enter button "co22" and a cancel button "ca22" around the center of the first diagnosis target element image "e21" (step S204). As described above, the user can draw the diagnosis target element image by identifying the start point and the end point.

The width input screen "ws1" is used for inputting a width of the line pattern when the diagnosis target element is crack. The width input screen "ws1" is displayed near the first diagnosis target element image "e21" between the start point "p21" and the end point "p22."

The user inputs a value of width in the width input screen "ws1" by referring to the numerical value shown in the development-view image 201d (e.g., numeral value written by a special chalk) and the detail information of inspection findings. When the user inputs the numerical value in the width input screen "ws1," the reception unit 32 receives the input numerical value, and the display control unit 34 displays the input numerical value (e.g., "0.5") as illustrated in FIG. 39.

Then, the determination unit 35 determines whether the pressing of the enter button is received by the reception unit 32 (step S205). If the determination unit 35 determines that the pressing of the enter button is not received by the reception unit 32 (step S205: NO), the sequence returns to step S203.

In FIG. 39, when the user identifies an end point "p23" of a second diagnosis target element image "e22" using the pointer "po," the reception unit 32 receives the input of the end point "p23" of the second diagnosis target element image "e22." Since the start point of the second diagnosis target element image "e22" matches the end point "p22" of the first diagnosis target element image "e21," the user can omit the identification of the start point of the second diagnosis target element image "e22."

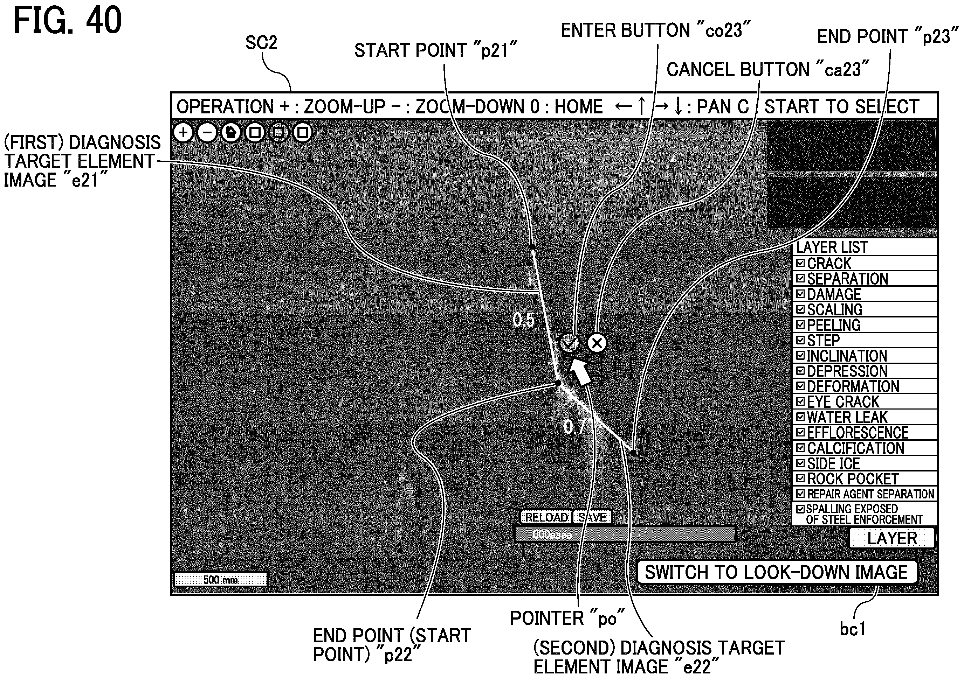

Then, in step S204, the display control unit 34 displays the second diagnosis target element image "e22" and a width input screen "ws2" between the start point (i.e., end point "p22") and the end point "p23," and also displays an enter button "co23" and a cancel button "ca23" between the first diagnosis target element image "e21" and the second diagnosis target element image "e22" as illustrated in FIG. 39. When the user inputs a numerical value into the width input screen "ws2," the reception unit 32 receives the input numerical value, and the display control unit 34 displays the input numerical value (e.g., "0.7") as illustrated in FIG. 40.

In this description, the width input screen may be referred to as the second input screen. Further, if the diagnosis target element image is an image having a given area size, an area size input screen can be set.

As illustrated in FIG. 40, when the user presses the enter button "co23" using the pointer "po," the reception unit 32 receives the pressing, and the determination unit 35 determines that the pressing of the enter button is received by the reception unit 32 (step S205: YES).

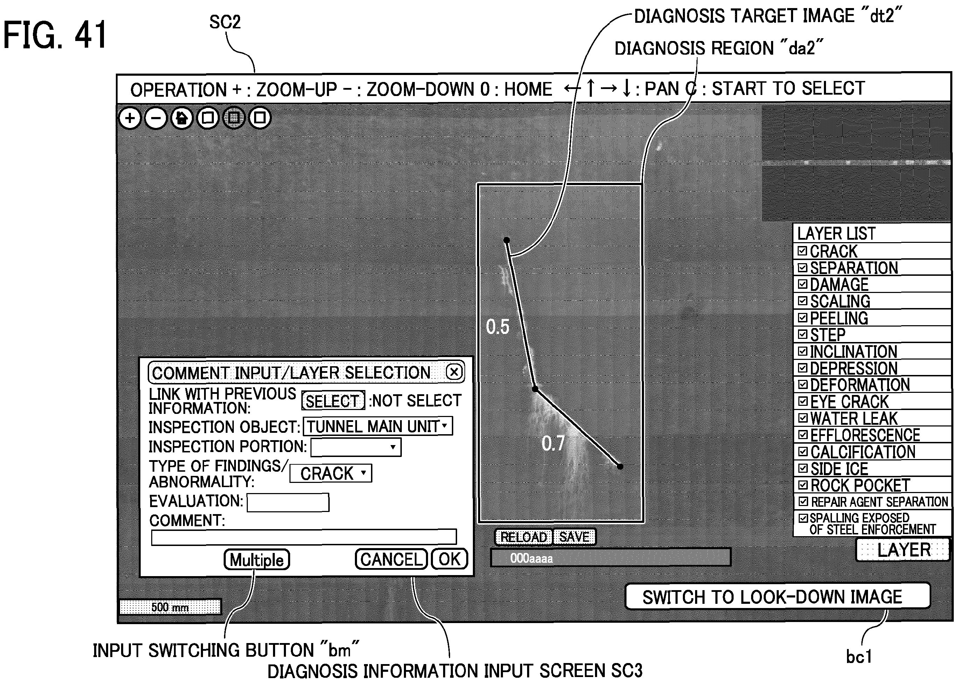

Then, the determination unit 35 confirms the diagnosis target image (i.e., drawing of line pattern), and the display control unit 34 displays a confirmed diagnosis target image "dt2" (step S206) as illustrated in FIG. 41.

Further, the display control unit 34 displays a rectangular-shaped diagnosis region "da2" including the diagnosis target image "dt2," and the diagnosis information input screen SC3 (step S207). In this case, in order to make the diagnosis information input screen SC3 conspicuous, the display control unit 34 can apply a masking on a portion other than the diagnosis information input screen SC3.

When the user selects and inputs the diagnosis information in the diagnosis information input screen SC3, and presses the "OK" button, the reception unit 32 receives the selection and input of the diagnosis information (step S208).

By performing the above described processing, the drawing of the diagnosis target image "dt2" and the diagnosis region "da2" and the selection and the input of the diagnosis information are completed for the second input mode of the diagnosis target image (i.e., drawing of line pattern).

(Input Mode of Diagnosis Region)

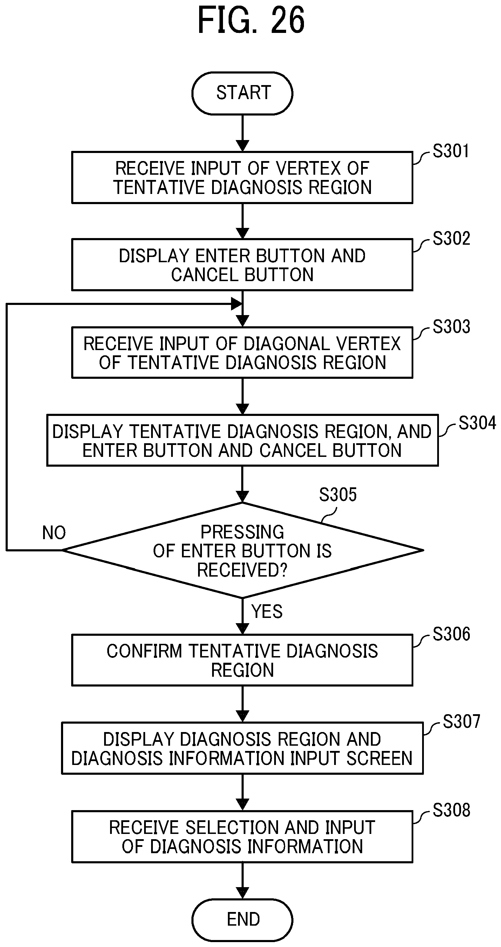

Hereinafter, a description is given of the detail of step S24 (FIG. 10) when the third input mode of the diagnosis region is selected with reference to FIGs. 26, and 42 to 46. The third input mode of the diagnosis region is used when the diagnosis target image is to be identified after identifying the diagnosis region in this description.

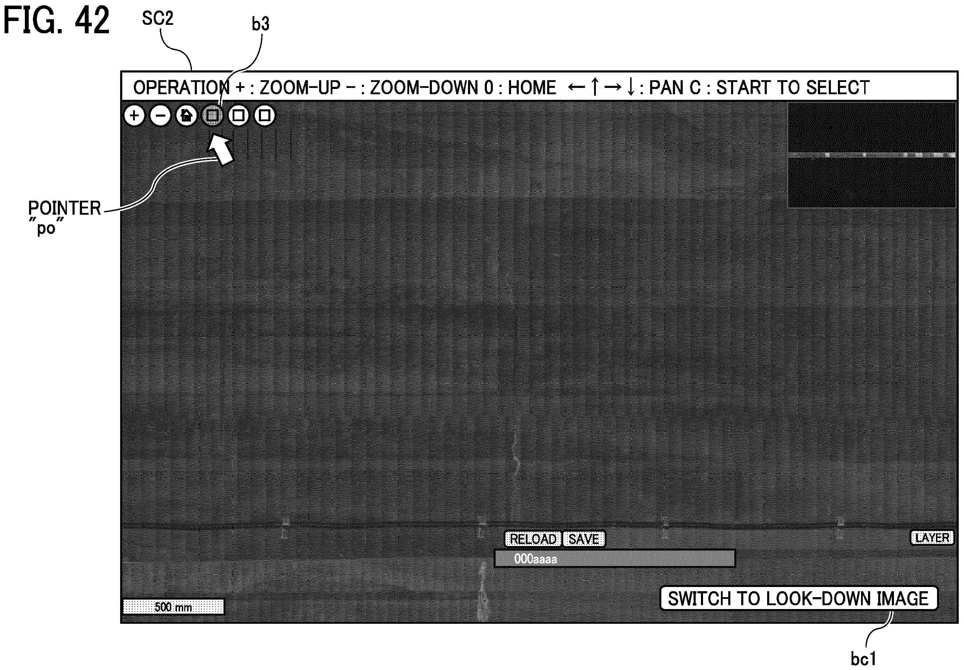

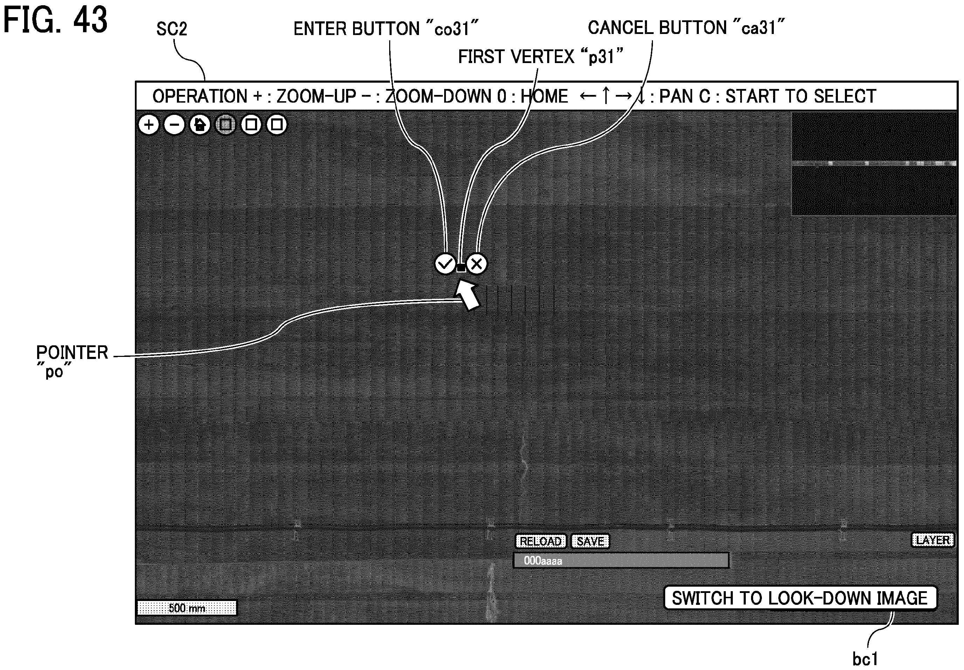

FIG. 26 is an example of a flowchart illustrating the steps of processing of the third input mode of the diagnosis region. FIG. 42 is an example of the diagnosis position input screen SC2 when the third input mode of the diagnosis region is selected. FIGs. 43 to 46 are examples of the diagnosis position input screen SC2 for inputting the diagnosis region.

At first, in step S23, when the user selects the selection button "b3" using the pointer "po," the display control unit 34 sets the third input mode of the diagnosis region as illustrated in FIG. 42.

Then, as illustrated in FIG. 43, when the user identifies a first vertex "p31" of a tentative diagnosis region "da03" using the pointer "po," the reception unit 32 receives the input of the first vertex "p31" of the tentative diagnosis region "da03" (step S301).

Then, the display control unit 34 displays an enter button "co31" and a cancel button "ca31" around the first vertex "p31" (step S302) as illustrated in FIG. 43.

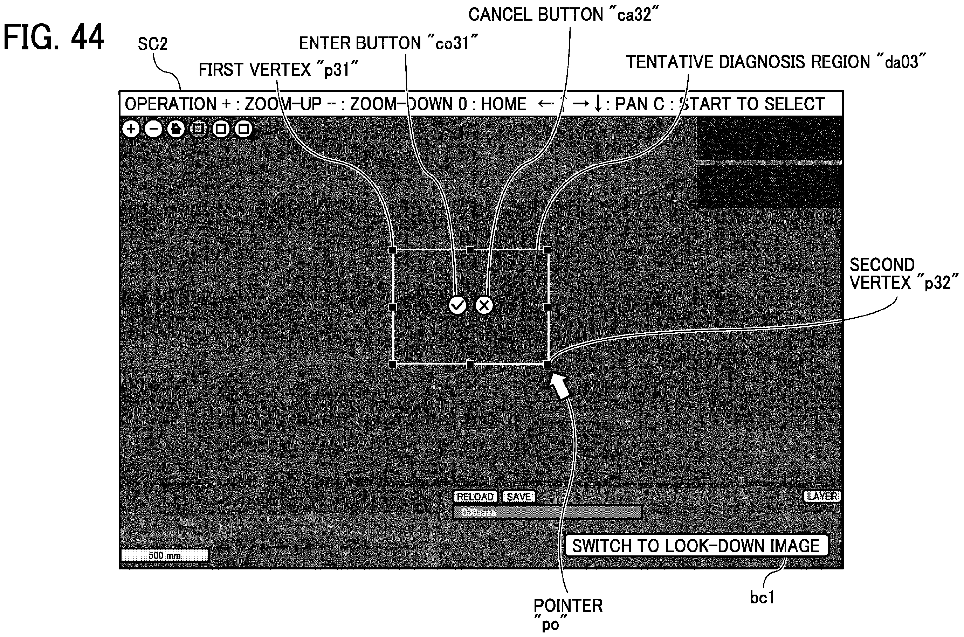

Then, as illustrated in FIG. 44, when the user identifies a second vertex "p32," which is a diagonal vertex with respect to the first vertex "p31" of the tentative diagnosis region "da03," using the pointer "po," the reception unit 32 receives the input of the second vertex "p32" as the diagonal vertex of the first vertex "p31" of the tentative diagnosis region "da03" (step S303).

Then, as illustrated in FIG. 44, the display control unit 34 displays the tentative diagnosis region "da03" as a rectangular shape having the first vertex "p31" and the second vertex "p32" as the diagonal vertexes, and also displays an enter button "co32" and a cancel button "ca32" around the center of the tentative diagnosis region "da03" (step S304). As above described, the user can draw the diagnosis region by identifying the two vertexes, each being the diagonal angles.

Then, the determination unit 35 determines whether the pressing of the enter button is received by the reception unit 32 (step S305). If the determination unit 35 determines that the pressing of the enter button is not received by the reception unit 32 (step S305: NO), the sequence returns to step S303. In this case, after the user has identified the second vertex "p32," the first vertex "p31" or the second vertex "p32" is changed to enlarge or reduce the area of the tentative diagnosis region "da03."

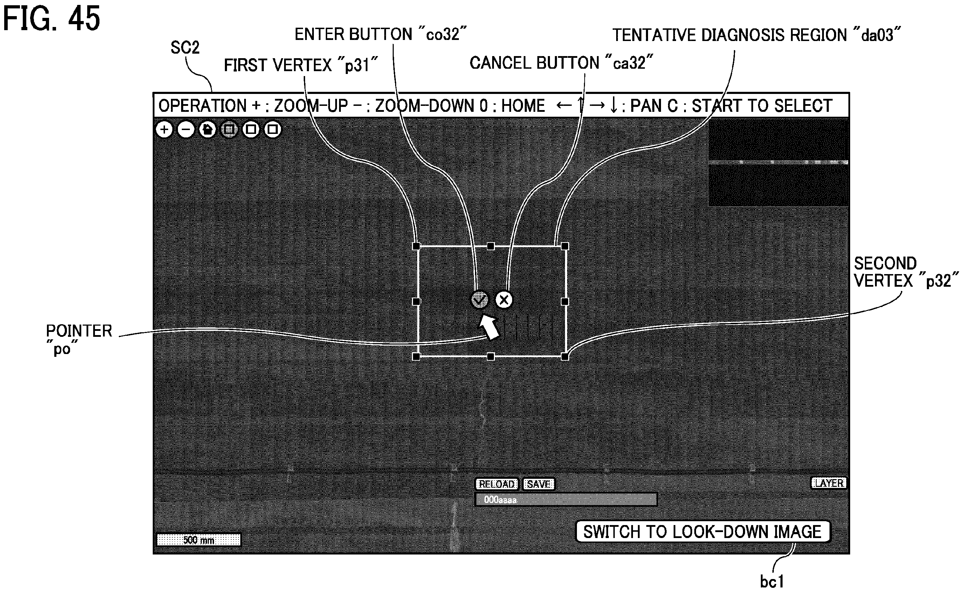

On the other hand, as illustrated in FIG. 45, when the user presses the enter button "co32" using the pointer "po," the reception unit 32 receives the pressing of the enter button "co32," and the determination unit 35 determines that the pressing of the enter button is received by the reception unit 32 (step S305: YES).

Then, the determination unit 35 confirms the tentative diagnosis region "da03" (step S306) as a diagnosis region "da3."

As illustrated in FIG. 33, the display control unit 34 displays the diagnosis region "da3" having a rectangular shape, which is the same as the confirmed tentative diagnosis region "da03," and the diagnosis information input screen SC3 (step S307). In this case, in order to make the diagnosis information input screen SC3 conspicuous, the display control unit 34 can apply a masking on a portion other than the diagnosis information input screen SC3.

When the user selects and inputs the diagnosis information in the diagnosis information input screen SC3, and presses the "OK" button, the reception unit 32 receives the selection and the input of the diagnosis information (step S308).

By performing the above described processing, the drawing of the diagnosis region "da3" and the selection and input of the diagnosis information are completed for the third input mode of the diagnosis region. Thereafter, as similar to the first input mode of the diagnosis target image (i.e., drawing of area) and the second input node of the diagnosis target image (i.e., drawing of line pattern), the user can draw the diagnosis target image in the diagnosis region "da3."

(Change of Viewing Direction)

Hereinafter, a description is given of process of shifting or changing of viewing directions of the development-view image 201d with reference to FIGs. 47A to 47C and 48A to 48B. FIG. 47A illustrates a relationship between the tunnel 8 and the viewing directions, FIG. 47B illustrates a schematic diagram of the tunnel 8 viewed from the lower direction of the tunnel 8, and FIG. 47C illustrates a schematic diagram of the tunnel 8 viewed from the upper direction of the tunnel 8. FIGs. 48A and 48B are examples of diagnosis target images obtained by switching the viewing directions, in which FIG. 48A is an example of the diagnosis target image viewed from the lower direction of the tunnel 8, and FIG. 48B is an example of the same diagnosis target image viewed from the upper direction of the tunnel 8.

As illustrated in FIG. 1, the development-view image 201d is an image acquired by looking up at the wall and ceiling of the tunnel 8 from the inside of the tunnel 8. This image is referred to as a "look-up image." However, the observed inspection findings chart to be submitted to the government office might be required to be an image viewed from the outside of the tunnel 8 (i.e., above the tunnel 8) as illustrated in FIG. 22. This image is referred to as a "look-down image."

As illustrated in FIG. 47A, the tunnel 8 can be viewed from a look-up position of the tunnel 8 such as from an inside 81 of the tunnel 8 and from a look-down position of the tunnel 8 such as from an outside 82 of the tunnel 8, in which the look-up position views the tunnel 8 into a upward direction from the inside 81 of the tunnel 8 and the look-down position views the tunnel 8 into a downward direction from the outside 82 of the tunnel 8. Since the tunnel 8 may be built in undergrounds, such as hills and mountains, the look-down position may be a virtual position in some cases.

As illustrated in FIG. 47A, when the inside 81 of the tunnel 8 is viewed along the viewing direction "sd1," the development-view image becomes the "look-up image" as illustrated in FIG. 47B. In this case, the directions of virtual arrows "va1" and "va2" in FIG. 47A, respectively, become the upward direction at the bottom left, and the downward direction at the upper right in FIG. 47B.

Further, when the same image is viewed from the outside 82 of the tunnel 8 along the viewing direction "sd2," the development-view image becomes the "look-down image" as illustrated in FIG. 47C. In this case, the directions of virtual arrows "va1" and "va2" in FIG. 47A, respectively, become the downward direction at the upper left, and the upward direction at the bottom right in FIG. 47C. That is, the look-up image and the look-down image are the inverted images.

When the display control unit 34 switches or inverts the top and bottom of the development-view image 201d while displaying the development-view image 201d on the display 308, the display control unit 34 displays the diagnosis target element image by changing the y-coordinate the development-view image 201d from "Y" to "-Y" for the two-dimensional coordinates (X, Y) of the diagnosis target element image stored in the storage unit 3000.

When the user presses a "switch to look-down" button "bc1" on the diagnosis position input screen SC2 in FIG. 48A, the reception unit 32 receives the pressing of the "switch to look-down" button "bc1," and then the display control unit 34 switches or converts the image view from the look-up image 222a (FIG. 48A) to the look-down image 222b (FIG. 48B).

Further, when the user presses a "switch to look-up" button "bc2" on the diagnosis position input screen SC2 in FIG. 48B, the reception unit 32 receives the pressing of the "switch to look-up" button "bc2", and then the display control unit 34 switches or converts the image view from the look- down image (FIG. 48B) to the look-up image (FIG. 485A). With this configuration, the user can draw the diagnosis target element and the diagnosis region using any one of the look- up image and the look-down image. In this case, the coordinates of positions of the diagnosis target element image and diagnosis region stored in the storage unit 3000 are not changed, but the display control unit 34 changes the display style alone.

(Recreation of Tunnel Inspection Result Summary Table)

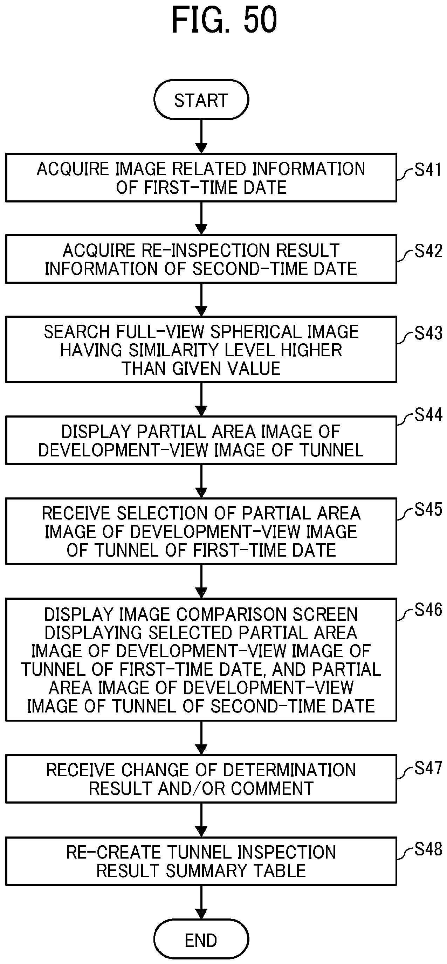

Hereinafter, a description is given of a process of re-creating a tunnel inspection result summary table with reference to FIGs. 50 to 55. FIG. 50 is a flowchart illustrating a process of re-creating a tunnel inspection result summary table. Hereinafter, it is assumed that the images captured at the first-time date includes images captured in the past (e.g., five years prior to the re-inspection at the second-time date), and the images captured at the second-time date includes images captured during the re-inspection.

At first, the communication unit 31 acquires the image related information of the first-time date from the diagnosis management server 5 (step S41). In step S41, the communication unit 51 of the diagnosis management server 5 receives, from the diagnosis processing apparatus 3, a request of information managed or controlled by each of the diagnosis information management DB 5001, the diagnosis target element management DB 5002 and the image related information management DB 5003, in which the request includes one or more search keys, such as structure object ID, inspection date, and development-view image ID. Then, the storing/reading unit 59 reads the image related information corresponding to the search key from the image related information management DB 5003, and then the communication unit 51 transmits, to the diagnosis processing apparatus 3, information of the first-time date (e.g., diagnosis information, diagnosis target element information, image related information).

Then, the input/output unit 38 of the diagnosis processing apparatus 3 acquires the re-inspection result information at the second-time date from another secondary imaging device 200a included in the portable imaging system used by the inspector (step S42).

Then, the similar image search unit 37 uses the full-view spherical image of the tunnel 8 at the second-time date as a search key to search a plurality of full-view spherical images of the tunnel 8 at the first-time date having a given similarity level with the full-view spherical image of the tunnel 8 at the second-time date, and extracts a specific full-view spherical image of the tunnel 8 at the first-time date having a similarity level higher than a given value (e.g., 80%) from the plurality of the full-view spherical image of the tunnel 8 at the first-time date (step S43)

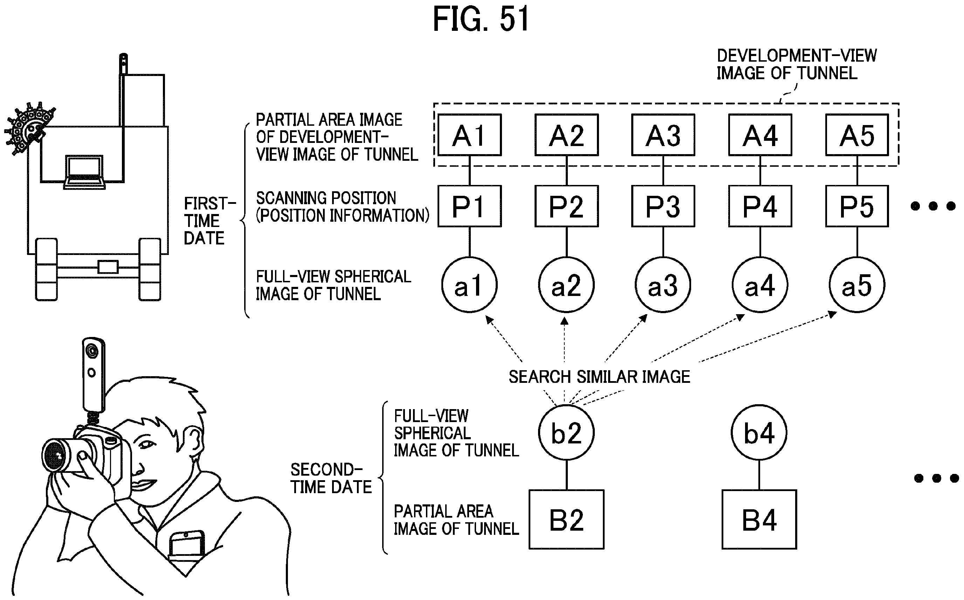

Hereinafter, a description is given of processing in step S43 in detail with reference to FIG. 51. FIG. 51 illustrates a relationship diagram of full-view spherical images of the tunnel 8 at the first-time date and full-view spherical images of the tunnel 8 at the second-time date when searching similar images. The upper side of FIG. 51 illustrates full-view spherical images a1, a2, a3, a4, and a5 of the tunnel 8 at the first-time date generated by the image capture vehicle 9, a scanning positions P1, P2, P3, P4, and P5 when the full-view spherical images a1, a2, a3, a4, and a5 are captured, and a partial area images A1, A2, A3, A4, and A5 of the development-view image of tunnel 8 at the scanning positions P1, P2, P3, P4, and P5. In FIG. 51, a plurality of full-view spherical images (e.g., a1 to a5), a plurality of scanning positions (e.g., P1 to P5), and a plurality of partial area images (e.g., A1 to A5) are arranged in a time series (chronological order) from the left to right side.

Further, the lower side of FIG. 51 illustrates full-view spherical images b2 and b4 of the tunnel 8 at the second-time date generated by capturing images of inside the tunnel 8 using the portable imaging system, and partial area images B2 and B4 of the development-view image of tunnel 8 at the second-time date generated by capturing images of inside the tunnel 8 using the portable imaging system. In FIG. 51, a plurality of full-view spherical images (e.g., b2, b4), and a plurality of partial area images (e.g., B2, B4) are arranged in a time series (chronological order) from the left to right side.

As illustrated in FIG. 51, for example, the similar image search unit 37 uses the full-view spherical image b2 of the tunnel 8 at the second-time date as the search key (search reference information) to calculate the similarity level of the full-view spherical images (images a1, a2,...) of the tunnel 8 at the first-time date and the full-view spherical image b2 of the tunnel 8 at the second-time date, and then extracts a specific full-view spherical image of the tunnel 8 at the first-time date having a similarity level higher than a given value (e.g., 80%). Since the full-view spherical image at the first-time date and the full-view spherical image at the second-time date are captured and processed using the same projection system, the similarity level can be computed easily.

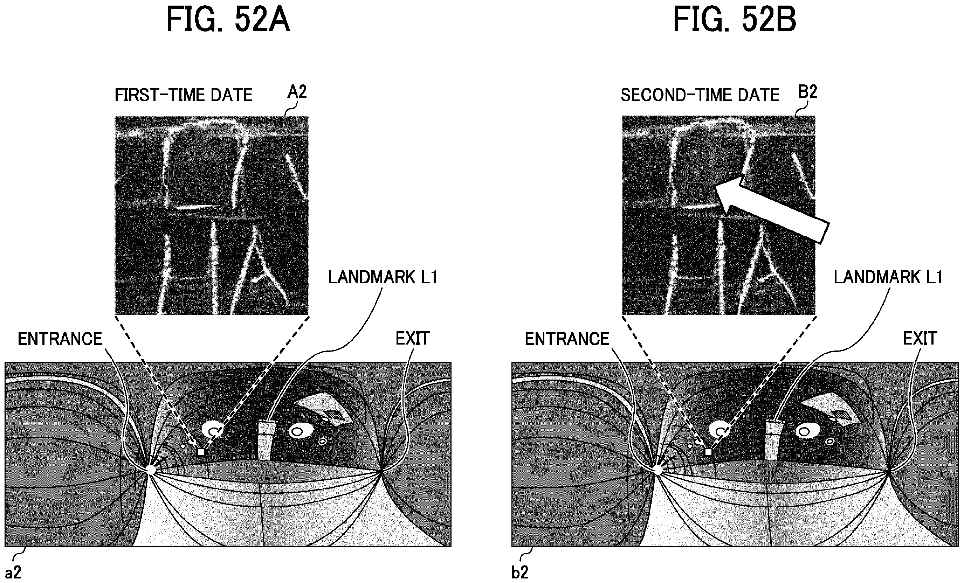

FIG. 52A illustrates an example of a partial area image of the development-view image of the tunnel 8 and the full-view spherical image of the tunnel 8 at the first-time date. FIG. 52B illustrates an example of a partial area image of the development-view image of the tunnel 8 and the full-view spherical image of the tunnel 8 at the second-time date.

FIG. 52A illustrates an example of a partial area image A2 of the development-view image of the tunnel 8 at the first-time date in the upper portion, and an example of the full-view spherical image a2 of the tunnel 8 at the first-time date in the lower portion. FIG. 52B illustrates an example of the partial area image B2 of the development-view image of the tunnel 8 at the second-time date in the upper portion, and an example of the full-view spherical image b2 of the tunnel 8 at the second-time date in the lower portion..

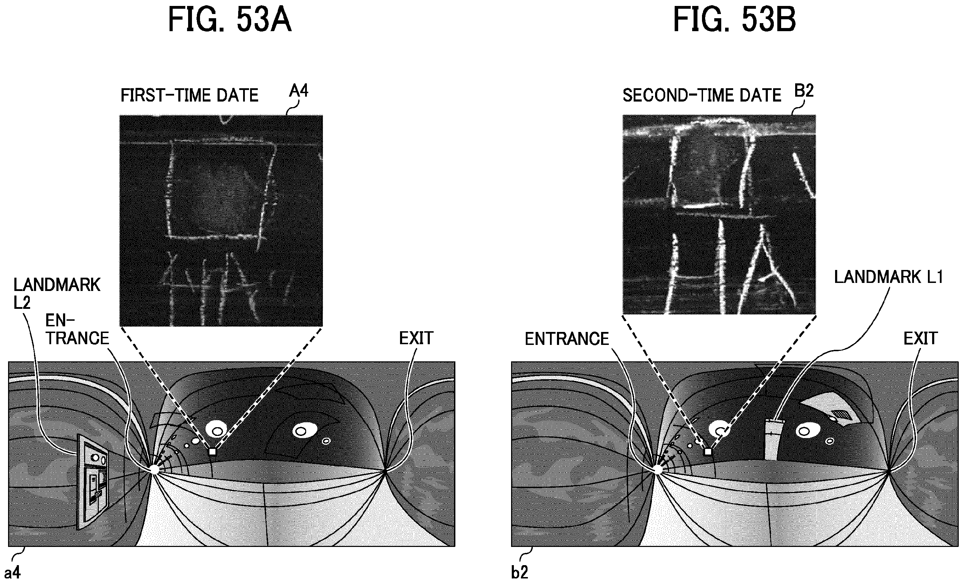

Further, the same landmark L1 is set to each of the full-view spherical images a2 and b2. The same landmark L1 can be used as a feature point (or feature region) of images when searching similar images. The landmark indicates, for example, an object having a given feature in the image. For example, in an example case of FIGs. 53A and 53B to be described later, the landmark L1 is a door existing in the tunnel 8, and the landmark L2 is a switchboard and a fire extinguishing device existing in the tunnel 8.

In an example case of FIGs. 52 A and 52B, the partial area image B2 of the tunnel 8 at the second-time date indicates the same position in the tunnel 8 as the partial area image A2 of the development-view image of the tunnel 8 at the first-time date. Then, the partial area image B2 of the development-view image of the tunnel 8 at the second-time date shows that the water leakage area becomes greater than the partial area image A2 of the development-view image of the tunnel 8 at the first-time date, as indicated by an arrow in FIG. 52B. This arrow (FIG. 52B) is illustrated for the convenience of explanation, and does not actually exist.

FIG. 53A illustrates an example of a partial area image of the development-view image of the tunnel 8 and the full-view spherical image of the tunnel 8 at the first-time date. FIG. 53B illustrates an example of a partial area image of the development-view image of the tunnel 8 and the full-view spherical image of the tunnel 8 at the second-time date.

FIG. 53A illustrates an example of a partial area image A4 of the development-view image of the tunnel 8 at the first-time date in the upper portion, and an example of the full-view spherical image a4 of the tunnel 8 at the first-time date in the lower portion. FIG. 53B illustrates an example of the partial area image B2 of the development-view image of the tunnel 8 at the second-time date in the upper portion, and an example of the full-view spherical image b2 of the tunnel 8 at the second-time date in the lower portion.

In this example case of FIGs. 53A and 53B, the full-view spherical images a4 and b2 of the tunnel 8 are respective set with different landmarks L2 and L1, which are used as respective feature points (or feature regions) of the image when searching the similar image.

In this example case of FIGs. 53A and 53B, the partial area image B2 of the development-view image of the tunnel 8 at the second-time date shows a position different from the partial area image A4 of the development-view image of the tunnel 8 at the first-time date. In this case, if a user sees and compares the partial area image B2 of the development-view image of the tunnel 8 at the second-time date and the partial area image A4 of the development-view image of the tunnel 8 at the first-time date, which are very similar with each other, the user cannot select a specific partial area image of the tunnel 8 at the second-time date to be used for identifying and a specific partial area image of the development-view image of the tunnel 8 and a specific scanning position at the first-time date, from a plurality of partial area images of the tunnel 8 at the second-time date.

However, since the similar image search unit 37 can compare the full-view spherical image a4 including the landmark L2 and the full-view spherical image b2 of the tunnel 8 including the landmark L1 to determine the similarity level of the full-view spherical images a4 and b2, the similar image search unit 37 can determine that the partial area image A4 of the development-view image of the tunnel 8 at the first-time date is not similar to the partial area image B2 of the development-view image of the tunnel 8 at the second-time date based on the difference of the landmarks L2 and L1 (preliminary narrowing processing).

The description returns to FIG. 50. The display control unit 34 displays, on the display 308, an image (partial area image) of respective partial areas of the tunnel development-view image associated with a specific plurality of the full-view spherical images of the tunnel 8 at the first-time date extracted in step S43 (step S44) to instruct a user to determine a specific partial area image (final narrowing processing).

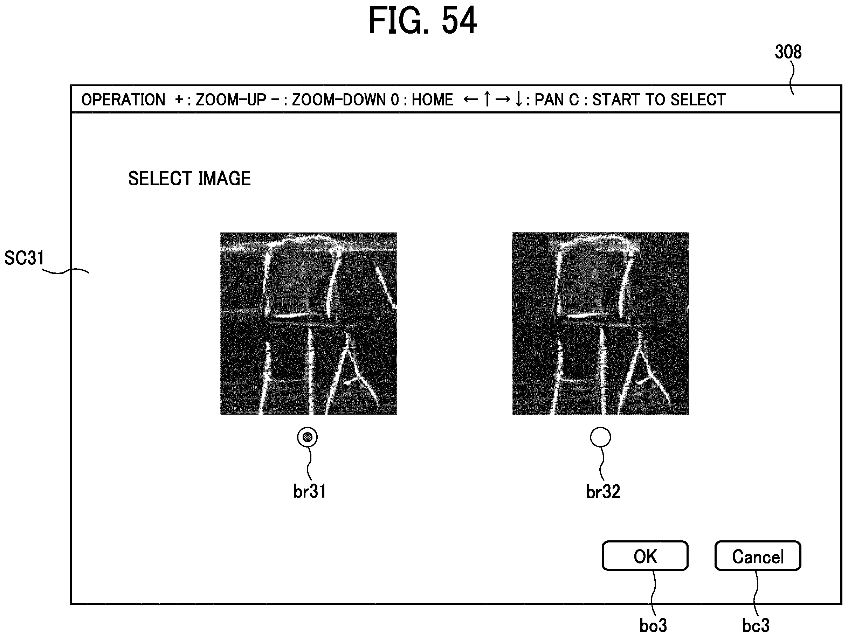

FIG. 54 illustrates an example of a partial area image selection screen SC31 displaying one or more partial area images of the tunnel development-view image at the first-time date. In this example case of FIG. 54, the partial area image selection screen SC31 displays two partial area images of the tunnel development-view image at the first-time date. Further, the partial area image selection screen SC31 displays radio buttons br31 and br32 used for receiving a selection by a user at the bottom side of each partial area image. In this example case of FIG. 54, the partial area image at the left side is selected as indicated by a black dot in the radio button br31.

Further, the partial area image selection screen SC31 displays "OK" button bo3 and "Cancel" button bc3 at the lower right side of the partial area image selection screen SC31. The "OK" button bo3 is pressed when to confirm the selection (determination) of the radio button. The "Cancel" button bc3 is pressed when to cancel the selected radio button.

Thus, by displaying the one or more partial area images of the tunnel development-view images that are related to the full-view spherical image of the tunnel 8 having a similarity level higher than a given value (e.g., 80%), the diagnosis processing apparatus 3 performs the preliminary narrowing processing, and then the user can perform the final narrowing processing. With this configuration, even if the accuracy of the similar image searching on the full-view spherical image, which is the equirectangular projection image, is relatively low, a desired partial area image of the tunnel development-view image can be determined.

Further, even if only one partial area image of the development-view image of the tunnel 8 at the first-time date is extracted in step S43, one partial area image and one radio button are displayed, as similar to FIG. 54, so that the user can perform the final narrowing processing.

Then, if the user presses (selects) a desired radio button such as the radio button br31, and presses the "OK" button bo3, the reception unit 32 receives a selection of the partial area image, such as the partial area image A2 of the development-view image of the tunnel 8 at the first-time date (step S45).

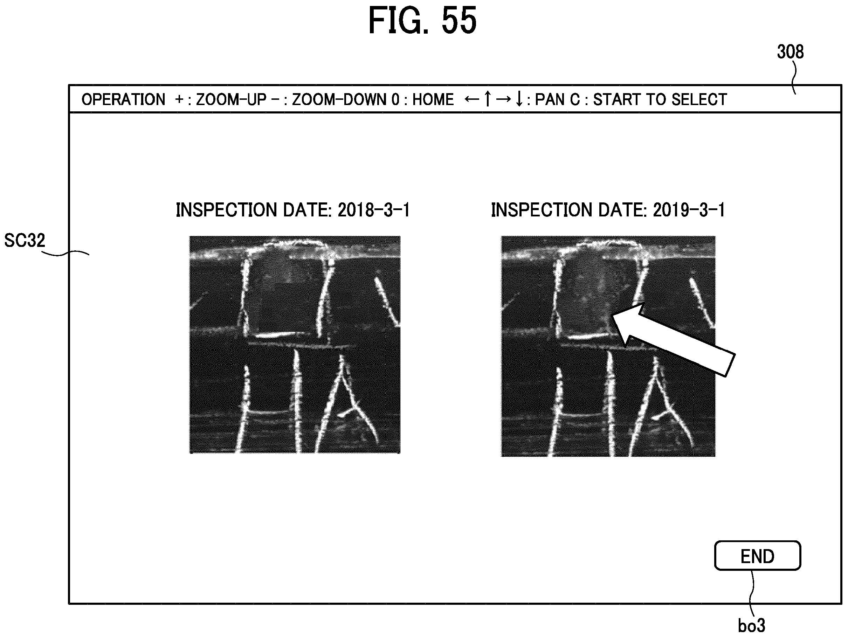

Then, as illustrated in FIG. 55, the display control unit 34 displays an image comparison screen SC32 on the display 308 (step S46). FIG. 55 illustrates an example of the image comparison screen SC32. The image comparison screen SC32 displays the partial area image of the development-view image of the tunnel 8 at the first-time date selected in step S45 on the left side, and the partial area image of the development-view image of the tunnel 8 at the second-time date on the right, with the respective inspection dates. In an example case of FIG. 55, the partial area image of the development-view image of the tunnel 8 at the second-time date shows that the water leakage area becomes greater than the partial area image of the development-view image of the tunnel 8 at the first-time date, as indicated by an arrow in FIG. 55. This arrow (FIG. 55) is illustrated for the convenience of explanation, and does not actually exist. Further, the image comparison screen SC32 displays "end" button bo3 at the lower right. The user who has completed the comparison presses the "end" button bo3.

Then, when the user compares the two images on the image comparison screen SC32 to confirm whether or not the observed inspection findings found in the diagnosis target at the first-time date has deteriorated at the second-time date, and changes the determination result and the detail information of inspection findings in the diagnosis information (FIG. 17) and the diagnosis target element (FIG. 18), the reception unit 32 receives the change of information (step S47) and re-creates the tunnel inspection result summary table (step S48). Further, the diagnosis management server 5 maintains or retains the information before the change as the information of the first-time date for the diagnosis information (FIG. 17) and the diagnosis target element (FIG. 18).

Subsequently, the revised or updated tunnel inspection result summary table is printed on paper and submitted to the tunnel administrator, or electronic data of tunnel inspection result summary table is submitted to the tunnel administrator.

As described above, the image capturing the wide area of the tunnel 8, such as the full-view spherical image of the tunnel 8, is highly likely to include the landmarks L1 and L2 as illustrated in FIG. 53 compared to the partial area image of the development-view image of the tunnel 8 capturing the image of diagnosis target and a nearby object. Therefore, the accuracy of similar image searching can be increased using the landmark as the feature point (feature region). Therefore, as illustrated in FIG. 55, the image including the diagnosis target at the first-time date and the image including the diagnosis target at the second-time date existing at the same position in the tunnel can be displayed.

Conventionally, the searching of the partial area image of the development-view image of the tunnel 8 at the first-time date existing at the same position of the partial area image of the development-view image of the tunnel 8 at the second-time date requires a longer period of time. By contrast, the above described embodiment can reduce the time period required for searching images.

Further, as to the above-described embodiment, by using the diagnosis processing apparatus 3, the user can draw the diagnosis target image indicating the diagnosis target on the image data (e.g., development view image) of the structure object (e.g., tunnel), and can input the diagnosis information including the diagnosis result of the diagnosis target.

As described above, since the user can directly draw the diagnosis target image indicating the diagnosis target identified on the development-view image 201d, mistakes or errors that might occur during the document creation process can be reduced compared to the conventional methods of creating the final inspection report including the observed inspection findings chart or the like by comparing and checking a large number of documents and screens using hands and eyes of the user alone.

Further, by associating and storing the coordinates of positions of the diagnosis region and the diagnosis information of the diagnosis region using the diagnosis processing apparatus 3, the workload for creating the submission document including the diagnosis information of the structure object, such as the tunnel 8, can be reduced compared to conventional methods.

Further, since the photograph images attached to the photograph ledger use the images corresponding to the diagnosis regions on the development-view image 201d, conventional manual work, such as a manual pasting of the observed-inspection findings photograph on the photograph ledger can be omitted, and thereby mistakes of pasting the observed-inspection findings photographs on the photograph ledger at a wrong position can be prevented.

Further, since the partial development-view image 202 can be switched between the look-up image 222a and the look-down image 222b as illustrated in FIGs. 48A and 48B, the drawing of diagnosis target image and the inputting of diagnosis information of diagnosis target image can be performed using the development-view image 201d according to the user's preference of the look-up image 222a and the look-down image 222b, thereby mistakes or errors that might occur during the document creation process can be reduced, in particular, prevented.

Further, when submitting the final inspection report to the tunnel administrator, the diagnosis processing apparatus 3 can output the look-down image, required by the government office in some countries, so that the user error in the final inspection report, such as user's misunderstanding of the image direction, can be prevented.

As to the above described embodiment, the time period required for searching the partial area image of the development-view image of the structure object at the first-time date existing at the same position of the partial area image of the development-view image of the structure object at the second-time date requires can be reduced, which means the searching of the partial area image of the development-view image of the structure object does not require a longer period of time

In the above described embodiment, the image of the tunnel 8 is captured using the primary imaging device 100 capable of capturing of full-view spherical image, but is not limited thereto. For example, a panoramic image capturing operation can be employed instead of the full-view spherical image capturing operation if a wider area can be captured. That is, the full-view spherical image is an example of wide-angle image. On the other hand, the (plane) image of diagnosis target captured and generated by the secondary imaging device 200 (200a) is an example of narrow-angle image.

In the above described embodiment, the plurality of wide-angle image data of the first-time date refers to the plurality of full-view spherical image data captured in the past. The narrow-angle image of the first-time date refers to the image data extracted (trimmed) from a part of the development-view image of tunnel captured in the past. The wide-angle image at the second-time date image refers to the full-view spherical image data captured during the re-inspection. The narrow-angle image of the second-time date refers to the image data having a narrower angle of view captured by the another secondary imaging device 200a compared to the full-view spherical image and the panoramic image data. Since the narrow-angle image and the wide-angle image can be defined by setting a relationship of angle of views used for the image capturing, that is, "angle of view of narrow-angle image is smaller than angle of view of wide-angle image," the narrow-angle image or the wide-angle image at the first-time date and second-time date are not necessarily limited to those described above.

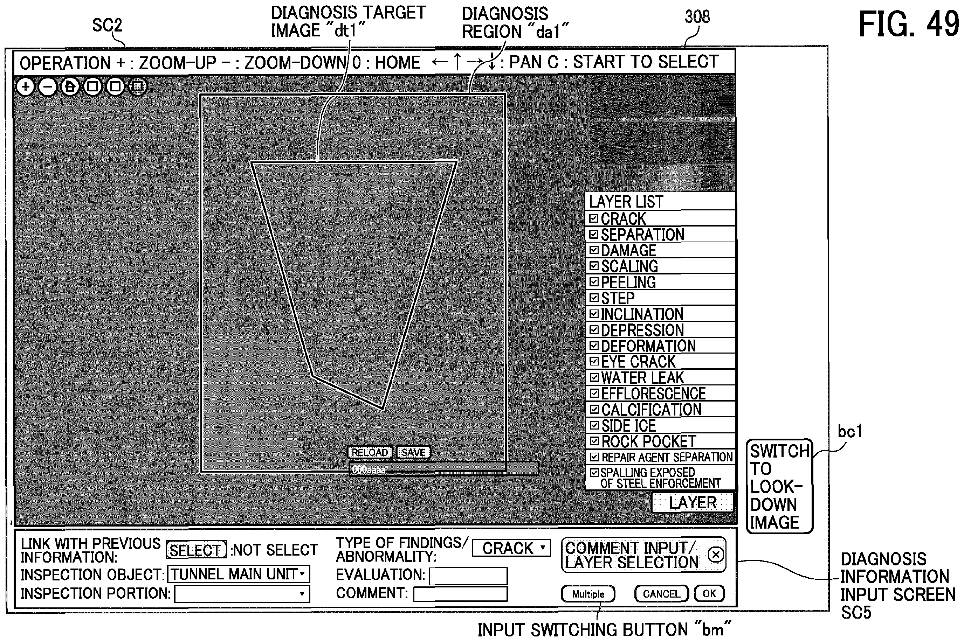

As above described with reference to FIG. 34, the diagnostic information input screen SC3 is displayed on the partial development-view image 202 of the tunnel 8, but is not limited to thereto. For example, as illustrated in FIG. 49, a diagnostic information input screen SC5 can be displayed on the display 308 outside the partial development-view image 202 of the tunnel 8. Further, the diagnostic information input screen SC5 can be displayed on another display different from the display 308, in which a plurality of displays is used.

In the above described embodiment, the structure object is exemplified as the tunnel, but not limited thereto. For example, the structure object includes piping (pipe) or tubes used for transporting materials, such as gas, liquid, powder, and granular substance.

Further, the structure object can be a vertical hole-shaped reinforced concrete structure object, such as a hoistway used as an elevator shaft in which a lift or an elevator travels. In particular, the inner wall of the hoistway may be deformed or cracked due to aging of the building or shaking of the building cause by an earthquake or the like. When the above describes embodiment is applied, each imaging device can be disposed outside (e.g., upper part) of the elevator to capture images of the inner wall of the hoistway may. The inner wall of the tunnel and the inner wall of the elevator shaft may also be referred to as an inspection face or an inspection target face.

In the above-described embodiments, the size of the diagnosis region "da1" is set greater than the size of the diagnosis target image "dt1," but not limited thereto. For example, the size of the diagnosis region "da1" can be set same as the size of the diagnosis target image "dtl."

Further, in the above-described embodiment, the reception unit 32 receives the drawing of the diagnosis target and the inputting of the diagnosis information of the diagnosis target from the user, but not limited thereto. For example, an artificial intelligence (AI) program executing on the diagnosis processing apparatus 3 or the diagnosis management server 5 can search the diagnosis target region on the development-view image 201d, automatically select the diagnosis target, and measure the width of the diagnosis target. The selection of the diagnosis target also can be performed by a selection unit implemented by the artificial intelligence program. Further, the measurement of the width of the diagnosis target can be performed by a measurement unit implemented by the artificial intelligence program.

Further, in the above described embodiment, the display control unit 34 displays the diagnosis information input screen SC3 on the partial development-view image 202, but not limited thereto. For example, the diagnosis information input screen SC3 can be displayed at a part of the periphery of the partial development-view image 202 if the partial development-view image 202 can be reduced in size and displayed with the diagnosis information input screen SC3.

Numerous additional modifications and variations are possible in light of the above teachings. It is therefore to be understood that, within the scope of the appended claims, the disclosure of this specification can be practiced otherwise than as specifically described herein. Any one of the above-described operations may be performed in various other ways, for example, in an order different from the one described above.

The present disclosure can be implemented in any convenient form, for example using dedicated hardware, or a mixture of dedicated hardware and software. The present disclosure may be implemented as computer software implemented by one or more networked processing apparatuses. The processing apparatuses can compromise any suitably programmed apparatuses such as a general-purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD-ROM, magnetic tape device or solid-state memory.

## Claims

1.  A diagnosis processing apparatus (3) for processing images of a diagnosis target existing in a structure (8) to assess the structure (8), comprising:

    a storage unit (3000) configured to store i) data of a development-view image (201d) of the structure (8) at a first inspection date, the development-view image being an image combining a plurality of images of the structure captured by scanning the structure (8), ii) position information indicating one or more positions used for capturing the plurality of images during the scanning, and iii) data of a plurality of wide-angle images captured at the first inspection date generated by capturing images of a wide area of the structure (8) including a diagnosis target existing in the structure (8) during the scanning, wherein the wide-angle images are associated with the position information;

an acquisition unit (38) configured to acquire data of a narrow-angle image captured at a second inspection date generated by capturing an image of an area of the structure (8) including the diagnosis target, and data of a plurality of wide-angle images captured at the second inspection date generated by capturing images of a wide area of the structure (8) including the diagnosis target existing in the structure (8);

a similar image search unit (37) configured to search for an image similar to a specific wide-angle image captured at the second inspection date from the plurality of wide-angle images captured at the first inspection date; and

a display control unit (34) configured to display a partial area image of the development-view image captured at a scanning position indicated by position information associated with data of a specific wide-angle image captured at the first inspection date as a narrow-angle image captured at the first inspection date, wherein the specific wide-angle image captured at the first inspection date is determined to be similar to the specific wide-angle image captured at the second inspection date and used for the searching.

2. The diagnosis processing apparatus (3) according to claim 1,
   wherein the similar image search unit (37) extracts the specific wide-angle image captured at the first inspection date, and having a similarity level higher than a given value, from among the plurality of wide-angle images captured at the first inspection date.

3. The diagnosis processing apparatus (3) according to claim 1 or 2, further comprising:

   a reception unit (32) configured to receive a selection of a specific wide-angle image by a user, wherein when the similar image search unit (37) extracts a plurality of wide-angle images captured at the first inspection date, the display control unit (34) displays the extracted plurality of wide-angle images captured at the first inspection date on a display, the reception unit (32) receives the selection of the specific wide-angle image from the plurality of wide-angle images captured at the first inspection date, and the display control unit (34) displays a narrow-angle image captured at the first inspection date corresponding to data of the selected specific wide-angle image captured at the first inspection date on the display.

4. The diagnosis processing apparatus (3) according to any one of claims 1 to 3,
   wherein the acquisition unit (38) acquires data of the development-view image, data of the position information, and data of the plurality of wide-angle images captured at the first inspection date from a server (5) that controls data related to diagnosis processing via a communication network.

5. The diagnosis processing apparatus (3) according to any one of claims 1 to 3,
   wherein the wide-angle image is a full-view spherical image.

6. The diagnosis processing apparatus (3) according to any one of claims 1 to 5,
   wherein the structure (8) is any one of tunnel, pipe, and hoistway.

7. A diagnosis system (1000) comprising:

   the diagnosis processing apparatus (3) according to claim 1; and
   a primary imaging device (100) configured to capture an image of a wide area of the structure (8) including the diagnosis target existing in the structure (8) and generate data of the wide-angle image.

8. The diagnosis system (1000) according to claim 7, further comprising a secondary imaging device (200, 200a) configured to capture an image of the diagnosis target existing in the structure (8) and generate data of narrow-angle image.

9. A method of processing images of a diagnosis target existing in a structure (8) to assess the structure (8), the method comprising:

   storing i) data of development-view image (201d) of the structure (8) at a first inspection date, the development-view image being an image combining a plurality of images of the structure captured by scanning the structure (8), ii) position information indicating one or more positions used for capturing the plurality of images during the scanning, and iii) data of a plurality of wide-angle images captured at the first inspection date generated by capturing images of a wide area of the structure (8) including a diagnosis target existing in the structure (8) during the scanning, wherein the wide-angle images are associated with the position information; acquiring data of a narrow-angle image captured at a second inspection date generated by capturing an image of an area of the structure (8) including the diagnosis target, and data of a plurality of wide-angle images captured at the second inspection date generated by capturing images of a wide area of the structure (8) including the diagnosis target existing in the structure (8); searching for an image similar to a specific wide-angle image captured at the second inspection date from the plurality of wide-angle images captured at the first inspection date; and displaying a partial area image of the development-view image captured at a scanning position indicated by position information associated with data of a specific wide-angle image captured at the first inspection date as a narrow-angle image captured at the first inspection date, wherein the specific wide-angle image captured at the first inspection date is determined to be similar to the specific wide-angle image captured at the second inspection date and used for the searching.

10. A carrier means storing one or more instructions that, when performed by one or more processors, cause the one or more processors to execute the method according to claim 9.

**Patentansprüche**

1. Diagnoseverarbeitungsvorrichtung (3) zum Verarbeiten von Bildern eines in einer Struktur (8) vorhandenen Diagnoseziels, um die Struktur (8) zu bewerten, umfassend:

   eine Speichereinheit (3000), die so konfiguriert ist, dass sie Folgendes speichert: i) Daten eines Entwicklungsansichtsbildes (201d) der Struktur (8) an einem ersten Inspektionsdatum, wobei das Entwicklungsansichtsbild ein Bild ist, das eine Vielzahl von Bildern der Struktur kombiniert, die durch Abtasten der Struktur (8) erfasst wurden, ii) Positionsinformationen, die eine oder mehrere Positionen angeben, die zum Erfassen der Vielzahl von Bildern während des Abtastens verwendet wurden und iii) Daten einer Vielzahl von Weitwinkelbildern, die an dem ersten Inspektionsdatum aufgenommen wurden, die durch das Aufnehmen von Bildern eines weiten Bereichs der Struktur (8) einschließlich eines in der Struktur (8) vorhandenen Diagnoseziels während des Abtastens erzeugt wurde, wobei die Weitwinkelbilder mit den Positionsinformationen verknüpft werden; eine Erfassungseinheit (38), die so konfiguriert ist, dass sie Daten eines an einem zweiten Inspektionsdatum erfassten Schmalwinkelbildes, das durch Erfassen eines Bildes eines Bereichs der Struktur (8) einschließlich des Diagnoseziels erzeugt wurde, und Daten einer Vielzahl von an dem zweiten Inspektionsdatum erfassten Weitwinkelbildern erfasst, die durch Erfassen von Bildern eines weiten Bereichs der Struktur (8) einschließlich des in der Struktur (8) vorhandenen Diagnoseziels erzeugt werden; eine Sucheinheit für ähnliche Bilder (37), die so konfiguriert ist, dass sie aus der Vielzahl der am ersten Inspektionsdatum aufgenommenen Weitwinkelbilder nach einem Bild sucht, das einem bestimmten, am zweiten Inspektionsdatum aufgenommenen Weitwinkelbild ähnlich ist; und eine Anzeigesteuereinheit (34), die so konfiguriert ist, dass sie ein Teilflächenbild des Entwicklungsansichtsbildes anzeigt, das an einer Abtastposition aufgenommen wurde, die durch Positionsinformationen angezeigt wird, die Daten eines an dem ersten Inspektionsdatum aufgenommenen spezifischen Weitwinkelbildes zugeordnet sind, das an dem ersten Inspektionsdatum als ein Schmalwinkelbild aufgenommen wurde, wobei das spezifische Weitwinkelbild, das an dem ersten Inspektionsdatum aufgenommen wurde, als ähnlich zu dem spezifischen Weitwinkelbild, das an dem zweiten Inspektionsdatum aufgenommen wurde, bestimmt und für die Suche verwendet wird.

2. Diagnoseverarbeitungsvorrichtung (3) nach Anspruch 1,
   wobei die Sucheinheit für ähnliche Bilder (37) das spezifische Weitwinkelbild, das am ersten Inspektionsdatum aufgenommen wurde und einen Ähnlichkeitsgrad aufweist, der höher als ein gegebener Wert ist, aus der Vielzahl der am ersten Inspektionsdatum aufgenommenen Weitwinkelbilder extrahiert.

3. Diagnoseverarbeitungsvorrichtung (3) nach Anspruch 1 oder 2, ferner umfassend:

   eine Empfangseinheit (32), die konfiguriert ist, um eine Auswahl eines spezifischen Weitwinkelbildes durch einen Benutzer zu empfangen, wobei, wenn die Sucheinheit für ähnliche Bilder (37) eine Vielzahl von Weitwinkelbildern extrahiert, die an dem ersten Inspektionsdatum aufgenommen wurden, die Anzeigesteuereinheit (34) die extrahierte Vielzahl von Weitwinkelbildern, die an dem ersten Inspektionsdatum aufgenommen wurden, auf einer Anzeige anzeigt, die Empfangseinheit (32) die Auswahl des spezifischen Weitwinkelbildes aus der Vielzahl der am ersten Inspektionsdatum aufgenommenen Weitwinkelbilder empfängt, und die Anzeigesteuereinheit (34) ein am ersten Inspektionsdatum aufgenommenes Schmalwinkelbild, das Daten des ausgewählten spezifischen Weitwinkelbildes, das am ersten Inspektionsdatum aufgenommen wurde, entspricht, auf der Anzeige anzeigt.

4. Diagnoseverarbeitungsvorrichtung (3) nach einem der Ansprüche 1 bis 3,
wobei die Erfassungseinheit (38) Daten des Entwicklungsansichtsbildes, Daten der Positionsinformationen und Daten der Vielzahl von Weitwinkelbildern, die an dem ersten Inspektionsdatum aufgenommen wurden, von einem Server (5), der Daten bezüglich der Diagnoseverarbeitung steuert, über ein Kommunikationsnetzwerk erfasst.

5. Diagnoseverarbeitungsvorrichtung (3) nach einem der Ansprüche 1 bis 3,
wobei das Weitwinkelbild ein vollsphärisches Bild ist.

6. Diagnoseverarbeitungsvorrichtung (3) nach einem der Ansprüche 1 bis 5,
wobei die Struktur (8) ein Tunnel, ein Rohr oder ein Schacht ist.

7. Diagnosesystem (1000), das Folgendes umfasst:

    die Diagnoseverarbeitungsvorrichtung (3) nach Anspruch 1; und
    eine primäre Bildgebungsvorrichtung (100), die so konfiguriert ist, dass sie ein Bild eines weiten Bereichs der Struktur (8) einschließlich des in der Struktur (8) vorhandenen Diagnoseziels aufnimmt und Daten des Weitwinkelbildes erzeugt.

8. Diagnosesystem (1000) nach Anspruch 7, das ferner eine sekundäre Bildgebungsvorrichtung (200, 200a) umfasst, die so konfiguriert ist, dass sie ein Bild des in der Struktur (8) vorhandenen Diagnoseziels erfasst und Daten eines Schmalwinkelbildes erzeugt.

9. Verfahren zum Verarbeiten von Bildern eines Diagnoseziels, das in einer Struktur (8) vorhanden ist, um die Struktur (8) zu bewerten, wobei das Verfahren Folgendes umfasst:

    Speichern i) von Daten eines Entwicklungsansichtsbildes (201d) der Struktur (8) an einem ersten Inspektionsdatum, wobei das Entwicklungsansichtsbild ein Bild ist, das eine Vielzahl von Bildern der Struktur kombiniert, die durch Abtasten der Struktur (8) aufgenommen wurden, ii) von Positionsinformationen, die eine oder mehrere Positionen angeben, die zum Aufnehmen der Vielzahl von Bildern während des Abtastens verwendet wurden und iii) von Daten einer Vielzahl von Weitwinkelbildern, die an dem ersten Inspektionsdatum aufgenommen wurden, die durch das Aufnehmen von Bildern eines weiten Bereichs der Struktur (8) einschließlich eines in der Struktur (8) vorhandenen Diagnoseziels während des Abtastens erzeugt wurden, wobei die Weitwinkelbilder den Positionsinformationen zugeordnet werden;
    Erfassen von Daten eines Schmalwinkelbildes, das an einem zweiten Inspektionsdatum erfasst wird, das durch Erfassen eines Bildes eines Bereichs der Struktur (8) einschließlich des Diagnoseziels erzeugt wurde, und von Daten einer Vielzahl von Weitwinkelbildern, die an dem zweiten Inspektionsdatum erfasst wurden, die durch Erfassen von Bildern eines weiten Bereichs der Struktur (8) einschließlich des in der Struktur (8) vorhandenen Diagnoseziels erzeugt wurden;
    Suchen nach einem Bild, das einem spezifischen Weitwinkelbild ähnlich ist, das an dem zweiten Inspektionsdatum aufgenommen wurde, aus der Vielzahl von Weitwinkelbildern, die an dem ersten Inspektionsdatum aufgenommen wurden; und
    Anzeigen eines Teilbereichsbildes des Entwicklungsansichtsbildes, das an einer Abtastposition aufgenommen wurde, die durch Positionsinformationen angezeigt wird, die Daten eines an dem ersten Inspektionsdatum aufgenommenen spezifischen Weitwinkelbildes zugeordnet sind, das an dem ersten Inspektionsdatum als ein Schmalwinkelbild aufgenommen wurde, wobei das spezifische Weitwinkelbild, das an dem ersten Inspektionsdatum aufgenommen wurde, als ähnlich zu dem spezifischen Weitwinkelbild bestimmt wird, das an dem zweiten Inspektionsdatum aufgenommen wurde, und für die Suche verwendet wird.

10. Trägermittel, das einen oder mehrere Anweisungen speichert, die, wenn sie von einem oder mehreren Prozessoren ausgeführt werden, den einen oder die mehreren Prozessoren veranlassen, das Verfahren nach Anspruch 9 auszuführen.

**Revendications**

1. Appareil de traitement de diagnostic (3) pour traiter des images d'une cible de diagnostic existant dans une structure (8) afin d'évaluer la structure (8), comprenant :

    une unité de stockage (3000) configurée pour stocker i) des données d'une image de vue développée (201d) de la structure (8) à une première date d'inspection, l'image de vue développée étant une image combinant une pluralité d'images de la structure capturées par balayage de la structure (8), ii) des informations de position indiquant une ou plusieurs positions utilisées pour capturer la pluralité des images pendant le balayage, et iii) des données d'une pluralité d'images de grand angle capturées à la première date d'inspection générées par une capture d'images d'une large région de la structure (8) incluant une cible de diagnostic existant dans la structure (8) pendant le balayage, dans lequel les images de grand angle sont associées aux informations de position ;
une unité d'acquisition (38) configurée pour acquérir des données d'image à champ étroit capturée à une deuxième date d'inspection générée en capturant une image d'une région de la structure (8) incluant la cible de diagnostic, et des données de la pluralité d'images à grand angle capturées à la deuxième date d'inspection générées en capturant des images d'une large région de la structure (8) incluant la cible de diagnostic existant dans la structure (8) ;
une unité de recherche d'image semblable (37) configurée pour rechercher une image semblable à une image de grand angle spécifique capturée à la deuxième date d'inspection parmi la pluralité des images de grand angle capturées à la première date d'inspection ; et
une unité de commande d'affichage (34) configurée pour afficher une image de région partielle de l'image de vue développée capturée à une position de balayage indiquée par des informations de position associées à des données d'une image de grand angle spécifique capturée à la première date d'inspection en tant qu'image à champ étroit capturée à la première date d'inspection, dans lequel l'image de grand angle spécifique capturée à la première date d'inspection est déterminée comme étant semblable à l'image de grand angle spécifique capturée à la deuxième date d'inspection et utilisée pour la recherche.

2. Appareil de traitement de diagnostic (3) selon la revendication 1,
dans lequel l'unité de recherche d'image semblable (37) extrait l'image de grand angle spécifique capturée à la première date d'inspection, et ayant un niveau de similarité supérieur à une valeur donnée, parmi la pluralité des images de grand angle capturées à la première date d'inspection.

3. Appareil de traitement de diagnostic (3) selon la revendication 1 ou 2, comprenant en outre :

une unité de réception (32) configurée pour recevoir une sélection d'une image à grand angle spécifique par un utilisateur,
dans lequel lorsque l'unité de recherche d'image semblable (37) extrait une pluralité d'images de grand angle capturées à la première date d'inspection, l'unité de commande d'affichage (34) affiche la pluralité extraite d'images de grand angle capturées à la première date d'inspection sur un affichage, l'unité de réception (32) reçoit la sélection de l'image de grand angle spécifique parmi la pluralité des images de grand angle capturées à la première date d'inspection, et l'unité de commande d'affichage (34) affiche une image à champ étroit capturée à la première date d'inspection correspondant à des données de l'image de grand angle spécifique sélectionnée capturée à la première date d'inspection sur l'affichage.

4. Appareil de traitement de diagnostic (3) selon l'une quelconque des revendications 1 à 3,
dans lequel l'unité d'acquisition (38) acquiert des données de l'image de vue développée, des données des informations de position et des données de la pluralité des images de grand angle capturées à la première date d'inspection à partir d'un serveur (5) qui gère des données associées au traitement de diagnostic via un réseau de communication.

5. Appareil de traitement de diagnostic (3) selon l'une quelconque des revendications 1 à 3,
dans lequel l'image de grand angle est une image sphérique de vue complète.

6. Appareil de traitement de diagnostic (3) selon l'une quelconque des revendications 1 à 5,
dans lequel la structure (8) est un tunnel, une canalisation ou un puits.

7. Système de diagnostic (1000) comprenant :

l'appareil de traitement de diagnostic (3) selon la revendication 1 ; et
un dispositif de formation d'image primaire (100) configuré pour capturer une image d'une large région de la structure (8) incluant la cible de diagnostic existant dans la structure (8) et pour générer des données de l'image de grand angle.

8. Système de diagnostic (1000) selon la revendication 7, comprenant en outre un dispositif de formation d'image secondaire (200, 200a) configuré pour capturer une image de cible de diagnostic existant dans la structure (8) et générer des données d'image à champ étroit.

9. Procédé de traitement d'images d'une cible de diagnostic existant dans une structure (8) pour évaluer la structure (8), le procédé comprenant :

le stockage i) de données d'image de vue développée (201d) de la structure (8) à une première date d'inspection, l'image de vue développée étant une image combinant une pluralité d'images de la structure capturées par balayage de la structure (8), ii) des informations de position indiquant une ou plusieurs positions utilisées pour capturer la pluralité des images pendant le balayage, et iii) des données de la pluralité d'images de grand angle capturées à la première date d'inspection générées par une capture d'image d'une large région de la structure (8) incluant une cible de diagnostic existant dans la structure (8) pendant le balayage, dans lequel les images de grand angle sont associées aux informations de position ;

l'acquisition de données d'image à champ étroit capturée à une deuxième date d'inspection générée en capturant une image d'une région de la structure (8) incluant la cible de diagnostic, et de données de la pluralité d'images à grand angle capturées à la deuxième date d'inspection générées en capturant des images d'une large région de la structure (8) incluant la cible de diagnostic existant dans la structure (8) ;

la recherche d'une image semblable à une image de grand angle spécifique capturée à la deuxième date d'inspection parmi la pluralité des images de grand angle capturées à la première date d'inspection ; et

l'affichage d'une image de région partielle de l'image de vue développée capturée à une position de balayage indiquée par des informations de position associées à des données d'une image de grand angle spécifique capturée à la première date d'inspection en tant qu'image à champ étroit capturée à la première date d'inspection, dans lequel l'image de grand angle spécifique capturée à la première date d'inspection est déterminée comme étant semblable à l'image de grand angle spécifique capturée à la deuxième date d'inspection et utilisée pour la recherche.

10. Moyen de support stockant une ou plusieurs instructions qui, lorsqu'elles sont exécutées par un ou plusieurs processeurs, amènent l'un ou plusieurs processeurs à exécuter le procédé selon la revendication 9.

# FIG. 1

1000

TUNNEL(STRUCTURE OBJECT) 8

7

VEHICLE-MOUNTED IMAGING SYSTEM

TUNNEL(STRUCTURE OBJECT) 8

9

5

C100

COMMUNICATION NETWORK

COMMENT

FULL-VIEW SPHERICAL IMAGE OF TUNNEL

DEVELOPMENT-VIEW IMAGE OF TUNNEL (POSITION INFORMATION)

DETECTION DATA OF SENSORS

3

TUNNEL LEDGER

FULL-VIEW SPHERICAL IMAGE OF TUNNEL

TUNNEL PARTIAL IMAGE

SUBMISSION DOCUMENT

GOVERNMENT OFFICE (TUNNEL MANAGEMENT ENTITY)

TUNNEL(STRUCTURE OBJECT) 8

PORTABLE IMAGING SYSTEM

# FIG. 2

VEHICLE-MOUNTED
IMAGING SYSTEM

100

200

9

4 (IMAGE PROCESSING
APPARATUS)

EP 3 712 782 B1

# FIG. 3

PORTABLE IMAGING
SYSTEM

100

10

215a

200a

6 (IMAGE
PROCESSING
APPARATUS)

# FIG.4A

102a
(103a)

102b
(103b)

115b
115c ⎫ 115
115d

115a
(115)

100

# FIG.4B

102b

115a
(115)

100

# FIG.4C

102b

102a

100

# FIG.4D

151

152

153

150

100

# FIG. 5

# FIG. 6A

HEMISPHERICAL IMAGE
(FRONT SIDE)

# FIG. 6B

HEMISPHERICAL IMAGE
(REAR SIDE)

# FIG. 6C

CAPTURED IMAGE (EQUIRECTANGULAR PROJECTION IMAGE EC)

# FIG. 7A

EQUIRECTANGULAR PROJECTION IMAGE EC

# FIG. 7B

FULL-VIEW SPHERICAL IMAGE CE

EP 3 712 782 B1

# FIG. 8

VIRTUAL CAMERA IC

VIRTUAL CAMERA IC

FULL-VIEW SPHERICAL IMAGE CE
(3D-SPHERE CS)

PRE-SET REGION IMAGE Q
(PRE-SET REGION T)

FULL-VIEW SPHERICAL IMAGE CE
(3D-SPHERE CS)

PRE-SET REGION IMAGE Q
(PRE-SET REGION T)

(FRONT)

(SIDE)

PRE-SET REGION IMAGE Q
(PRE-SET REGION T)

FULL-VIEW SPHERICAL IMAGE CE
(3D-SPHERE CS)

VIRTUAL CAMERA IC

(TOP)

# FIG. 9A

VIRTUAL CAMERA IC      3D-SPHERE CS

PRE-SET REGION IMAGE Q
(PRE-SET REGION T)

# FIG. 9B

# FIG. 10

PRE-SET REGION T

CENTER POINT CP

DIAGONAL LINE 2L

DISTANCE f

$\alpha$

$\alpha/2$

VIRTUAL CAMERA IC

ea

aa

# FIG. 11

EP 3 712 782 B1

# FIG. 12

IMAGING UNIT 201

206

IMAGING ELEMENT 203

207

IMAGE PROCESSOR 204

IMAGING CONTROLLER 205

MICROPHONE 208

AUDIO PROCESSOR 209

210

3

CPU 211

ROM 212

SRAM 213

DRAM 214

OPERATION UNIT 215

NETWORK I/F 216

COMMUNICATION UNIT 217

ANTENNA 217a

ELECTRONIC COMPASS 218

DISPLAY 219

# FIG. 13

301 (401,501)  302 (402,502)  303 (403,503)  304 (404,504)  305 (405,505)  308 (408,508)  310 (410,510)

CPU  ROM  RAM  HD  HDD  DISPLAY

NETWORK I/F  KEYBOARD  MOUSE  MEDIA I/F  MEDIA DRIVE

309 (409,509)  311 (411,511)  312 (412,512)  307 (407,507)  314 (414,514)

MEDIUM

306 (406,506)  313 (413,513)

# FIG. 14

EP 3 712 782 B1

# FIG. 15

5

**DIAGNOSIS MANAGEMENT SERVER**

5000

STORAGE UNIT

DEVELOPMENT-VIEW IMAGE OF TUNNEL, COORDINATE DATA

5003

5001

IMAGE RELATED INFORMATION MANAGEMENT DB

DIAGNOSIS INFORMATION MANAGEMENT DB

5002

DIAGNOSIS TARGET ELEMENT MANAGEMENT DB

STORING/ READING UNIT — 59

DETERMINATION UNIT — 55

GENERATION UNIT — 53

COMMUNICATION UNIT — 51

COMMUNICATION NETWORK — 100

3

**DIAGNOSIS PROCESSING TERMINAL**

38 — INPUT/OUTPUT UNIT (ACQUISITION UNIT)

37 — SIMILAR IMAGE SEARCH UNIT

39 — STORING/READING UNIT

STORAGE UNIT

3000

COMMUNICATION UNIT (ACQUISITION UNIT) — 31

RECEPTION UNIT — 32

DRAWING UNIT — 33

DISPLAY CONTROL UNIT — 34

DETERMINATION UNIT — 35

# FIG. 16

EP 3 712 782 B1

S001  S002  S003  S004  S005  S006  S007  S008  S009  S010

(xn, ym)

COORDINATE
DATA 201c

. . .

DATA OF
DEVELOPMENT-
VIEW IMAGE
201d

. . .

1st   2nd   3rd   4th   5th   6th   7th   8th   9th   10th

⟵ ENTRANCE OF TUNNEL          EXIT OF TUNNEL ⟹

# FIG. 17

STRUCTURE ID:101; INSPECTION DATE:2018.3.1

| DIAGNOSIS REGION NUMBER | SPAN NUMBER (FORMWORK NUMBER) | COORDINATES WITHIN SPAN OF DIAGNOSTIC REGION | HEIGHT AND WIDTH OF DIAGNOSIS REGION | PHOTO-GRAPH NUMBER | TYPE OF OBSERVED FINDINGS AND ABNORMALITY | EVALUA-TION RESULT | DETAIL INFORMATION |
|---|---|---|---|---|---|---|---|
| 1 | S001 | (x1, y1) | (x100, y100) | – | CRACK | S | NEAR COORDINATES (x1, y1), CRACK WIDTH: 0.6 mm, CRACK LENGTH: xxx mm |
| 2 | S001 | (x2, y2) | (x200, y200) | 1 | WATER LEAKAGE | B | NEAR COORDINATES (x2, y2), WIDTH: 100 cm, HEIGHT: 250 cm, WATER LEAKAGE ON WALL |
| 3 | S002 | (x3, y3) | (x300, y300) | 2 | CRACK | C | NEAR COORDINATES (x3, y3), CRACK WIDTH: 3.0 mm, CRACK LENGTH: xxx mm |
| 3 | S002 | (x3, y3) | (x300, y300) | 2 | CALCIFICATION | A | NEAR COORDINATES (x3, y3), CALCIFICATION NEAR CRACK |
| 3 | S002 | (x3, y3) | (x300, y300) | 2 | WATER LEAKAGE | A | NEAR COORDINATES (x3, y3), SOME WATER LEAKAGE NEAR CRACK |
| ... | ... | ... | ... | ... | ... | ... | ... |

EP 3 712 782 B1

# FIG. 18

| STRUCTURE ID:101; INSPECTION DATE:2018.3.1 | | | | | |
|---|---|---|---|---|---|
| DIAGNOSIS REGION NUMBER | SPAN NUMBER (FORMWORK NUMBER) | ELEMENT NUMBER | COORDINATES OF START POINT OF DIAGNOSIS TARGET ELEMENT IMAGE | COORDINATES OF END POINT OF DIAGNOSIS TARGET ELEMENT IMAGE | WIDTH OF DIAGNOSIS TARGET ELEMENT (mm) |
| 1 | S001 | 1 | (x11, y11) | (x12, y12) | 0.3 |
| 1 | S001 | 2 | (x12, y12) | (x13, y13) | 0.5 |
| 1 | S001 | 3 | (x13, y13) | (x14, y14) | 0.6 |
| 2 | S001 | 1 | (x21, y21) | (x22, y22) | – |
| 2 | S001 | 2 | (x22, y22) | (x23, y23) | – |
| 2 | S001 | 3 | (x23, y23) | (x24, y24) | – |
| 2 | S001 | 4 | (x24, y24) | (x25, y25) | – |
| 2 | S001 | 5 | (x25, y25) | (x26, y26) | – |
| 3 | S002 | 1 | (x31, y31) | (x32, y32) | 2.0 |
| 3 | S002 | 2 | (x32, y32) | (x33, y33) | 2.5 |
| 3 | S002 | 3 | (x33, y33) | (x34, y34) | 3.0 |
| 3 | S002 | 4 | (x34, y34) | (x35, y35) | 2.5 |
| ... | ... | ... | ... | ... | ... |

EP 3 712 782 B1

# FIG. 19A

STRUCTURE ID:101; INSPECTION DATE:2018.3.1(FIRST-TIME DATE);
DEVELOPMENT-VIEW IMAGE ID:E001

| SCANNING POSITION OF TUNNEL DEVELOPMENT-VIEW IMAGE OF TUNNEL (POSITION INFORMATION) | FULL-VIEW SPHERICAL IMAGE OF TUNNEL (WIDE-ANGLE IMAGE AT FIRST-TIME DATE) |
|---|---|
| P1001 | f1001 |
| P1002 | f1002 |
| P1003 | f1003 |
| ... | ... |

# FIG. 19B

STRUCTURE ID:101;
RE-INSPECTION DATE:2019.3.1(SECOND-TIME DATE);

| PARTIAL IMAGE OF TUNNEL (NARROW-ANGLE IMAGE AT SECOND-TIME DATE) | FULL-VIEW SPHERICAL IMAGE OF TUNNEL (WIDE-ANGLE IMAGE AT SECOND-TIME DATE) |
|---|---|
| F2001 | f2001 |
| F2002 | f2002 |
| F3003 | f2003 |
| ... | ... |

# FIG. 20

DIAGNOSIS PROCESSING TERMINAL ─3          DIAGNOSIS MANAGEMENT SERVER ─5

INPUT WITH DATA OF TUNNEL LEDGER ─ S1

INPUT DATA OF DEVELOPMENT-VIEW
IMAGE OF TUNNEL, DATA OF COMMENT, ─ S2
AND DETECTION DATA OF SENSOR

S3

DATA OF TUNNEL LEDGER, DATA OF
DEVELOPMENT-VIEW IMAGE OF TUNNEL,
DATA OF COMMENT, AND DETECTION
DATA OF SENSOR

GENERATE COORDINATE DATA FOR ─ S4
DEVELOPMENT-VIEW IMAGE OF TUNNEL

S5 ─ STORE ---> STORAGE UNIT ─ 5000

# FIG. 21

DIAGNOSIS PROCESSING TERMINAL ~3        DIAGNOSIS MANAGEMENT SERVER ~5

S11
REQUEST FIELD INSPECTION
DATA OF TARGET TUNNEL                    S12 ~ READ ⟵-- STORAGE UNIT ~5000

S13
FIELD INSPECTION DATA
OF TARGET TUNNEL

DRAWING AND INPUTTING
OF DIAGNOSIS INFORMATION ~S14          DIAGNOSIS INFORMATION MANAGEMENT DB ~5001

S15
REQUEST FOR GENERATING
SUBMISSION DOCUMENT (DATA)              S16 ~ STORE --→ DIAGNOSIS TARGET ELEMENT MANAGEMENT DB ~5002

S17 ~ READ ⟵-- STORAGE UNIT ~5000

S18 ~ GENERATE DATA OF SUBMISSION DOCUMENT
S19
DATA OF SUBMISSION DOCUMENT

S20 ~ OUTPUT

EP 3 712 782 B1

FIG. 22

**TUNNEL INSPECTION RESULT SUMMARY TABLE**

⇧ OUTPUT (S20)

TUNNEL LEDGER

DEVELOPMENT-VIEW IMAGE OF TUNNEL

COMMENT

INPUT (S1,S2) ⇨

INPUT OF DIAGNOSIS INFORMATION (S14)

OUTPUT (S20) ⇨

⇩ OUTPUT (S20)

**PHOTOGRAPH LEDGER**

**OBSERVED FINDINGS CHART (+PHOTOGRAPH-CAPTURED POSITION CHART)**

EP 3 712 782 B1

# FIG. 23

```
           START

             ↓

   DISPLAY HOME SCREEN            ⌐S21

             ↓

   DISPLAY DIAGNOSIS POSITION     ⌐S22
         INPUT SCREEN

             ↓

   SELECT INPUT MODE              ⌐S23

             ↓

   DRAWING AND INPUTTING OF       ⌐S24
     DIAGNOSIS INFORMATION

             ↓

   STORE TEMPORARILY              ⌐S25

             ↓

            END
```

**FIG. 24**

```
START
```

RECEIVE INPUT OF START POINT OF FIRST ⟋S101
DIAGNOSIS TARGET ELEMENT IMAGE

DISPLAY ENTER BUTTON AND ⟋S102
CANCEL BUTTON

RECEIVE INPUT OF END POINT OF FIRST ⟋S103
DIAGNOSIS TARGET ELEMENT IMAGE

DISPLAY FIRST DIAGNOSIS TARGET ⟋S104
ELEMENT IMAGE, AND ENTER
BUTTON AND CANCEL BUTTON

S105

DISPLAY
PLURALITY OF DIAGNOSIS               NO
TARGET ELEMENT
IMAGES?

YES      S107

DISPLAY NEW DIAGNOSIS TARGET
ELEMENT IMAGE BETWEEN START POINT
OF FIRST DIAGNOSIS TARGET ELEMENT
IMAGE AND END POINT OF SECOND
DIAGNOSIS TARGET ELEMENT IMAGE

DISPLAY ENTER BUTTON AND ⟋S108
CANCEL BUTTON

S109                                  S106

NO        PRESSING                    PRESSING
OF ENTER BUTTON IS          OF ENTER BUTTON IS        NO
RECEIVED?                   RECEIVED?

YES                         YES

CONFIRM AND DISPLAY DIAGNOSIS ⟋S110
TARGET IMAGE (DRAWING OF AREA)

DISPLAY DIAGNOSIS REGION AND ⟋S111
DIAGNOSIS INFORMATION INPUT SCREEN

RECEIVE SELECTION AND ⟋S112
INPUT OF DIAGNOSIS INFORMATION

```
END
```

# FIG. 25

START

RECEIVE INPUT OF START POINT OF
FIRST DIAGNOSIS TARGET ELEMENT IMAGE ⌐S201

DISPLAY ENTER BUTTON AND
CANCEL BUTTON ⌐S202

RECEIVE INPUT OF END POINT OF FIRST
DIAGNOSIS TARGET ELEMENT IMAGE ⌐S203

DISPLAY FIRST DIAGNOSIS TARGET ELEMENT
IMAGE, WIDTH INPUT SCREEN, AND ENTER
BUTTON AND CANCEL BUTTON ⌐S204

S205

PRESSING
OF ENTER BUTTON IS
RECEIVED?

NO

YES

CONFIRM AND DISPLAY DIAGNOSIS
TARGET IMAGE (DRAWING OF LINE PATTERN) ⌐S206

DISPLAY DIAGNOSIS REGION AND
DIAGNOSIS INFORMATION INPUT SCREEN ⌐S207

RECEIVE SELECTION AND INPUT
OF DIAGNOSIS INFORMATION ⌐S208

END

# FIG. 26

START

RECEIVE INPUT OF VERTEX OF
TENTATIVE DIAGNOSIS REGION — S301

DISPLAY ENTER BUTTON AND
CANCEL BUTTON — S302

RECEIVE INPUT OF DIAGONAL VERTEX
OF TENTATIVE DIAGNOSIS REGION — S303

DISPLAY TENTATIVE DIAGNOSIS REGION, AND
ENTER BUTTON AND CANCEL BUTTON — S304

S305

NO — PRESSING
OF ENTER BUTTON IS
RECEIVED?

YES

CONFIRM TENTATIVE DIAGNOSIS
REGION — S306

DISPLAY DIAGNOSIS REGION AND
DIAGNOSIS INFORMATION INPUT SCREEN — S307

RECEIVE SELECTION AND INPUT
OF DIAGNOSIS INFORMATION — S308

END

# FIG. 27

TOTAL IMAGE SCREEN SC10

OPERATION + : ZOOM-UP − : ZOOM-DOWN 0 : HOME ← ↑ → ↓ : PAN C : START TO SELECT

b6 b5 b4 b3 b2 b1

DEVELOPMENT-VIEW IMAGE 201d

POINTER "po"

LAYER LIST LL1

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑
☑

REPAIR AGENT SEPARATION

SPALLING EXPOSED OF STEEL ENFORCE-MENT

b12

RELOAD SAVE

b11

000aaaa

SAVE LIST 210

LAYER

b13

50 m

EP 3 712 782 B1

# FIG. 28

DIAGNOSIS POSITION INPUT SCREEN SC2

b1

OPERATION + : ZOOM-UP − : ZOOM-DOWN 0 : HOME ← ↑ → ↓ : PAN C : START TO SELECT

POINTER "po"

PARTIAL DEVELOPMENT-VIEW IMAGE 202

LAYER LIST
- ☑ CRACK
- ☑ SEPARATION
- ☑ DAMAGE
- ☑ SCALING
- ☑ PEELING
- ☑ STEP
- ☑ INCLINATION
- ☑ DEPRESSION
- ☑ DEFORMATION
- ☑ EYE CRACK
- ☑ WATER LEAK
- ☑ EFFLORESCENCE
- ☑ CALCIFICATION
- ☑ SIDE ICE
- ☑ ROCK POCKET
- ☑
- ☑

REPAIR AGENT SEPARA-TION

SPALLING EXPOSED OF STEEL ENFORCE-MENT

RELOAD | SAVE

000aaaa

LAYER

1 m

SWITCH TO LOOK-DOWN IMAGE

b11

210

b12

VIEWING DIRECTION SWITCHING BUTTON "bc1"

EP 3 712 782 B1

FIG. 29

SC2

ENTER BUTTON "co11"
START POINT "p11"
CANCEL BUTTON "ca11"

OPERATION + : ZOOM-UP - : ZOOM-DOWN 0 : HOME ← ↑ → ↓ : PAN C : START TO SELECT

POINTER "po"

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED OF STEEL ENFORCEMENT

RELOAD  SAVE
000aaaa

LAYER

1 m

SWITCH TO LOOK-DOWN IMAGE

bc1

EP 3 712 782 B1

FIG. 30

(FIRST) DIAGNOSIS TARGET ELEMENT IMAGE "e11"   CANCEL BUTTON "ca12"
SC2   START POINT "p11"   ENTER BUTTON "co12"   END POINT "p12"

OPERATION + : ZOOM-UP − : ZOOM-DOWN 0 : HOME ← ↑ → ↓ : PAN C : START TO SELECT

POINTER "po"

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED
   OF STEEL ENFORCEMENT

RELOAD SAVE
000aaaa

LAYER

SWITCH TO LOOK-DOWN IMAGE

bc1

1 m

EP 3 712 782 B1

FIG. 31

(FIRST) DIAGNOSIS TARGET ELEMENT IMAGE "e11"

CANCEL BUTTON "ca13"

SC2  START POINT "p11"  ENTER BUTTON "co13"  END POINT (START POINT) "p12"

OPERATION + : ZOOM-UP - : ZOOM-DOWN 0 : HOME ← ↑ - ↓ : PAN C : START TO SELECT

(SECOND) DIAGNOSIS TARGET ELEMENT IMAGE "e12"

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED
    OF STEEL ENFORCEMENT

RELOAD SAVE
000aaaa

LAYER

SWITCH TO LOOK-DOWN IMAGE

1m

END POINT "p13"  POINTER "po"  bc1

(THIRD) DIAGNOSIS TARGET
ELEMENT IMAGE "e13"

FIG. 32

(FIRST) DIAGNOSIS TARGET ELEMENT IMAGE "e11"

CANCEL BUTTON "ca14"

SC2  START POINT (END POINT) "p11"  ENTER BUTTON "co14"  END POINT (START POINT) "p12"

OPERATION + : ZOOM-UP − : ZOOM-DOWN 0 : HOME ←↑→↓ : PAN C : START TO SELECT

(SECOND) DIAGNOSIS TARGET ELEMENT IMAGE "e12"

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED OF STEEL ENFORCEMENT

RELOAD  SAVE
000aaaa

LAYER

SWITCH TO LOOK-DOWN IMAGE

1 m

END POINT (START POINT) "p14"  END POINT (START POINT) "p13"  bc1

POINTER "po"

(FOURTH) DIAGNOSIS TARGET ELEMENT IMAGE "e14"

(THIRD) DIAGNOSIS TARGET ELEMENT IMAGE "e13"

EP 3 712 782 B1

FIG. 33

CANCEL BUTTON "ca14"

ENTER BUTTON "co14"

SC2

OPERATION + : ZOOM-UP – : ZOOM-DOWN 0 : HOME ← ↑ → ↓ : PAN C : START TO SELECT

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED
   OF STEEL ENFORCEMENT

RELOAD SAVE

000aaaa

LAYER

1 m

SWITCH TO LOOK-DOWN IMAGE

POINTER "po"

bc1

EP 3 712 782 B1

FIG. 34

**SC2**
**DIAGNOSIS TARGET IMAGE "dt1"**
**DIAGNOSIS REGION "da1"**

OPERATION + : ZOOM-UP − : ZOOM-DOWN 0 : HOME ← ↑ → ↓ : PAN C : START TO SELECT

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED
  OF STEEL ENFORCEMENT

LAYER

COMMENT INPUT/LAYER SELECTION ⊗
LINK WITH PREVIOUS
INFORMATION:   [SELECT] :NOT SELECT
INSPECTION OBJECT: [TUNNEL MAIN UNIT ▾]
INSPECTION PORTION: [          ▾]
TYPE OF FINDINGS/
ABNORMALITY:   [CRACK ▾]
EVALUATION: [          ]
COMMENT:
[                              ]
(Multiple)      (CANCEL)(OK)

RELOAD  SAVE
000aaaa

SWITCH TO LOOK-DOWN IMAGE

INPUT SWITCHING BUTTON "bm"

DIAGNOSIS INFORMATION INPUT SCREEN SC3

bc1

EP 3 712 782 B1

# FIG. 35

DIAGNOSIS INFORMATION INPUT SCREEN SC4

**COMMENT INPUT/LAYER SELECTION** [×]

LINK WITH PREVIOUS INFORMATION: [SELECT] : NOT SELECT

INSPECTION OBJECT : [TUNNEL MAIN UNIT ▼]

INSPECTION PORTION : [ ▼]

| NUMBER | TYPE OF FINDINGS/ ABNORMALITY | EVALUATION | COMMENT |
|---|---|---|---|
| 1 | CRACK ▼ | | |
| 2 | CRACK ▼ | | |
| 3 | CRACK ▼ | | |
| 4 | CRACK ▼ | | |
| 5 | CRACK ▼ | | |

[ single ] [ CANCEL ] [ OK ]

INPUT SWITCHING BUTTON "bs"

# FIG. 36

EP 3 712 782 B1

OPERATION + : ZOOM-UP − : ZOOM-DOWN 0 : HOME ← ↑ → ↓ : PAN C : START TO SELECT

b2 SC2

POINTER "po"

LAYER LIST
- ☑ CRACK
- ☑ SEPARATION
- ☑ DAMAGE
- ☑ SCALING
- ☑ PEELING
- ☑ STEP
- ☑ INCLINATION
- ☑ DEPRESSION
- ☑ DEFORMATION
- ☑ EYE CRACK
- ☑ WATER LEAK
- ☑ EFFLORESCENCE
- ☑ CALCIFICATION
- ☑ SIDE ICE
- ☑ ROCK POCKET
- ☑ REPAIR AGENT SEPARATION
- ☑ SPALLING EXPOSED OF STEEL ENFORCEMENT

RELOAD  SAVE

000aaaa

LAYER

SWITCH TO LOOK-DOWN IMAGE

bc1

1 m

# FIG. 37

START POINT "p21"

ENTER BUTTON "co21"

CANCEL BUTTON "ca21"

SC2

OPERATION + : ZOOM-UP − : ZOOM-DOWN 0 : HOME  ← ↑ → ↓ : PAN C : START TO SELECT

POINTER "po"

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED OF STEEL ENFORCEMENT

RELOAD  SAVE

000aaaa

LAYER

SWITCH TO LOOK-DOWN IMAGE

500 mm

bc1

EP 3 712 782 B1

# FIG. 38

SC2

START POINT "p21"

END POINT "p22"

ENTER BUTTON "co22"

CANCEL BUTTON "ca22"

(FIRST) DIAGNOSIS TARGET ELEMENT IMAGE "e21"

WIDTH INPUT SCREEN "ws1"

POINTER "po"

OPERATION + : ZOOM-UP − : ZOOM-DOWN 0 : HOME ← ↑ → ↓ : PAN C : START TO SELECT

width [____] mm

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED OF STEEL ENFORCEMENT

RELOAD | SAVE
000aaaa

LAYER

500 mm

SWITCH TO LOOK-DOWN IMAGE

bc1

# FIG. 39

SC2

START POINT "p21"

ENTER BUTTON "co23"

CANCEL BUTTON "ca23"

END POINT "p23"

OPERATION + : ZOOM-UP − : ZOOM-DOWN 0 : HOME ← ↑ → ↓ : PAN C : START TO SELECT

(FIRST) DIAGNOSIS TARGET ELEMENT IMAGE "e21"

WIDTH INPUT SCREEN "ws2"

0.5

width [     ] mm

LAYER LIST
☑ CRACK
☑ SEPARATION
☑ DAMAGE
☑ SCALING
☑ PEELING
☑ STEP
☑ INCLINATION
☑ DEPRESSION
☑ DEFORMATION
☑ EYE CRACK
☑ WATER LEAK
☑ EFFLORESCENCE
☑ CALCIFICATION
☑ SIDE ICE
☑ ROCK POCKET
☑ REPAIR AGENT SEPARATION
☑ SPALLING EXPOSED OF STEEL ENFORCEMENT

LAYER

RELOAD SAVE

000aaaa

500 mm

SWITCH TO LOOK-DOWN IMAGE

END POINT (START POINT) "p22"

POINTER "po"

(SECOND) DIAGNOSIS TARGET ELEMENT IMAGE "e22"

bc1

EP 3 712 782 B1

# FIG. 40

SC2

START POINT "p21"

ENTER BUTTON "co23"

CANCEL BUTTON "ca23"

END POINT "p23"

OPERATION + : ZOOM-UP − : ZOOM-DOWN 0 : HOME ← ↑ → ↓ : PAN C : START TO SELECT

(FIRST) DIAGNOSIS TARGET ELEMENT IMAGE "e21"

0.5

0.7

LAYER LIST
- ☑ CRACK
- ☑ SEPARATION
- ☑ DAMAGE
- ☑ SCALING
- ☑ PEELING
- ☑ STEP
- ☑ INCLINATION
- ☑ DEPRESSION
- ☑ DEFORMATION
- ☑ EYE CRACK
- ☑ WATER LEAK
- ☑ EFFLORESCENCE
- ☑ CALCIFICATION
- ☑ SIDE ICE
- ☑ ROCK POCKET
- ☑ REPAIR AGENT SEPARATION
- ☑ SPALLING EXPOSED OF STEEL ENFORCEMENT

RELOAD SAVE

000aaaa

LAYER

SWITCH TO LOOK-DOWN IMAGE

500 mm

END POINT (START POINT) "p22"

POINTER "po"

(SECOND) DIAGNOSIS TARGET ELEMENT IMAGE "e22"

bc1

EP 3 712 782 B1

**FIG. 41**

SC2

DIAGNOSIS TARGET IMAGE "dt2"

DIAGNOSIS REGION "da2"

OPERATION + : ZOOM-UP - : ZOOM-DOWN 0 : HOME ← ↑ → ↓ : PAN C : START TO SELECT

0.5

0.7

**LAYER LIST**
- ☑ CRACK
- ☑ SEPARATION
- ☑ DAMAGE
- ☑ SCALING
- ☑ PEELING
- ☑ STEP
- ☑ INCLINATION
- ☑ DEPRESSION
- ☑ DEFORMATION
- ☑ EYE CRACK
- ☑ WATER LEAK
- ☑ EFFLORESCENCE
- ☑ CALCIFICATION
- ☑ SIDE ICE
- ☑ ROCK POCKET
- ☑ REPAIR AGENT SEPARATION
- ☑ SPALLING EXPOSED OF STEEL ENFORCEMENT

**COMMENT INPUT/LAYER SELECTION** ⊗

LINK WITH PREVIOUS INFORMATION: [SELECT] :NOT SELECT

INSPECTION OBJECT: [TUNNEL MAIN UNIT ▾]

INSPECTION PORTION: [               ▾]

TYPE OF FINDINGS/ ABNORMALITY: [CRACK ▾]

EVALUATION: [          ]

COMMENT:
[                          ]

(Multiple)          (CANCEL)(OK)

[RELOAD][SAVE]

000aaaa

[LAYER]

500 mm

SWITCH TO LOOK-DOWN IMAGE

INPUT SWITCHING BUTTON "bm"

DIAGNOSIS INFORMATION INPUT SCREEN SC3

bc1

EP 3 712 782 B1

## FIG. 42

SC2　b3

OPERATION + : ZOOM-UP − : ZOOM-DOWN 0 : HOME ← ↑ → ↓ : PAN C : START TO SELECT

POINTER "po"

RELOAD  SAVE

000aaaa

LAYER

500 mm

SWITCH TO LOOK-DOWN IMAGE

bc1

# FIG. 43

**SC2**

**ENTER BUTTON "co31"**

**CANCEL BUTTON "ca31"**

**FIRST VERTEX "p31"**

OPERATION + : ZOOM-UP − : ZOOM-DOWN 0 : HOME ← ↑ → ↓ : PAN C : START TO SELECT

**POINTER "po"**

RELOAD  SAVE

000aaaa

LAYER

500 mm

SWITCH TO LOOK-DOWN IMAGE

**bc1**

FIG. 44

CANCEL BUTTON "ca32"

ENTER BUTTON "co31"

SC2

FIRST VERTEX "p31"

TENTATIVE DIAGNOSIS REGION "da03"

OPERATION + : ZOOM-UP − : ZOOM-DOWN 0 : HOME ← / → ↓ : PAN C : START TO SELECT

SECOND
VERTEX "p32"

RELOAD  SAVE

000aaaa

LAYER

SWITCH TO LOOK-DOWN IMAGE

500 mm

POINTER
"po"

bc1

EP 3 712 782 B1

# FIG. 45

Figure 45 — Screen SC2 showing OPERATION + : ZOOM-UP − : ZOOM-DOWN 0 : HOME ← ↑ → ↓ : PAN C : START TO SELECT. Labels include ENTER BUTTON "co32", FIRST VERTEX "p31", CANCEL BUTTON "ca32", TENTATIVE DIAGNOSIS REGION "da03", SECOND VERTEX "p32", POINTER "po", RELOAD, SAVE, 000aaaa, LAYER, 500 mm, SWITCH TO LOOK-DOWN IMAGE (bc1).

# FIG. 46

EP 3 712 782 B1

SC2

DIAGNOSIS REGION "da03"

OPERATION + : ZOOM-UP − : ZOOM-DOWN 0 : HOME ← ↑ → ↓ : PAN C : START TO SELECT

**COMMENT INPUT/LAYER SELECTION** ⊗

LINK WITH PREVIOUS INFORMATION: [SELECT] :NOT SELECT

INSPECTION OBJECT: [TUNNEL MAIN UNIT ▾]

INSPECTION PORTION: [              ▾]

TYPE OF FINDINGS/ ABNORMALITY: [CRACK ▾]

EVALUATION: [          ]

COMMENT:

[                              ]

(Multiple)          (CANCEL) (OK)

500 mm

LAYER

SWITCH TO LOOK-DOWN IMAGE

INPUT SWITCHING BUTTON "bm"

DIAGNOSIS INFORMATION INPUT SCREEN SC3

bc1

# FIG. 47A

VIEWING DIRECTION sd2

OUTSIDE 82

TUNNEL 8

P

ꓨ

VIRTUAL ARROW va2

INSIDE 81

VIEWING DIRECTION sd1

VIRTUAL ARROW va1

EP 3 712 782 B1

# FIG. 47B

LOOK-UP

VIRTUAL ARROW va2

ꓨ

P

VIEWING DIRECTION sd1

VIRTUAL ARROW va1

# FIG. 47C

VIRTUAL ARROW va1

LOOK-DOWN

ꓘ

ꓨ

VIEWING DIRECTION sd2

VIRTUAL ARROW va2

# FIG. 48A

# FIG. 48B

# FIG. 49

SC2 — DIAGNOSIS TARGET IMAGE "dt1" — DIAGNOSIS REGION "da1" — 308

OPERATION + : ZOOM-UP – : ZOOM-DOWN 0 : HOME ← ↑ → ↓ : PAN C : START TO SELECT

LAYER LIST
- ☑ CRACK
- ☑ SEPARATION
- ☑ DAMAGE
- ☑ SCALING
- ☑ PEELING
- ☑ STEP
- ☑ INCLINATION
- ☑ DEPRESSION
- ☑ DEFORMATION
- ☑ EYE CRACK
- ☑ WATER LEAK
- ☑ EFFLORESCENCE
- ☑ CALCIFICATION
- ☑ SIDE ICE
- ☑ ROCK POCKET
- ☑ REPAIR AGENT SEPARATION
- ☑ SPALLING EXPOSED OF STEEL ENFORCEMENT

RELOAD  SAVE
000aaaa

LAYER

SWITCH TO LOOK-DOWN IMAGE — bc1

LINK WITH PREVIOUS INFORMATION: [SELECT] :NOT SELECT
INSPECTION OBJECT: [TUNNEL MAIN UNIT ▾]
INSPECTION PORTION: [                ▾]

TYPE OF FINDINGS/ABNORMALITY: [CRACK ▾]
EVALUATION: [        ]
COMMENT: [            ]

COMMENT INPUT/LAYER SELECTION ⊗
Multiple  CANCEL  OK

DIAGNOSIS INFORMATION INPUT SCREEN SC5

INPUT SWITCHING BUTTON "bm"

EP 3 712 782 B1

# FIG. 50

START

↓

ACQUIRE IMAGE RELATED INFORMATION OF FIRST-TIME DATE ⟋S41

↓

ACQUIRE RE-INSPECTION RESULT INFORMATION OF SECOND-TIME DATE ⟋S42

↓

SEARCH FULL-VIEW SPHERICAL IMAGE HAVING SIMILARITY LEVEL HIGHER THAN GIVEN VALUE ⟋S43

↓

DISPLAY PARTIAL AREA IMAGE OF DEVELOPMENT-VIEW IMAGE OF TUNNEL ⟋S44

↓

RECEIVE SELECTION OF PARTIAL AREA IMAGE OF DEVELOPMENT-VIEW IMAGE OF TUNNEL OF FIRST-TIME DATE ⟋S45

↓

DISPLAY IMAGE COMPARISON SCREEN DISPLAYING SELECTED PARTIAL AREA IMAGE OF DEVELOPMENT-VIEW IMAGE OF TUNNEL OF FIRST-TIME DATE, AND PARTIAL AREA IMAGE OF DEVELOPMENT-VIEW IMAGE OF TUNNEL OF SECOND-TIME DATE ⟋S46

↓

RECEIVE CHANGE OF DETERMINATION RESULT AND/OR COMMENT ⟋S47

↓

RE-CREATE TUNNEL INSPECTION RESULT SUMMARY TABLE ⟋S48

↓

END

# FIG. 51

DEVELOPMENT-VIEW IMAGE OF TUNNEL

PARTIAL AREA IMAGE OF DEVELOPMENT-VIEW IMAGE OF TUNNEL

| A1 | A2 | A3 | A4 | A5 |

FIRST-TIME DATE

SCANNING POSITION (POSITION INFORMATION)

| P1 | P2 | P3 | P4 | P5 | ...

FULL-VIEW SPHERICAL IMAGE OF TUNNEL

a1  a2  a3  a4  a5

SEARCH SIMILAR IMAGE

SECOND-TIME DATE

FULL-VIEW SPHERICAL IMAGE OF TUNNEL

b2  b4  ...

PARTIAL AREA IMAGE OF TUNNEL

| B2 | B4 |

EP 3 712 782 B1

FIG. 52A

FIG. 52B

## FIG. 53A

FIRST-TIME DATE    A4

LANDMARK
L2
EN-
TRANCE                                    EXIT

a4

## FIG. 53B

SECOND-TIME DATE    B2

                                  LANDMARK L1

ENTRANCE                              EXIT

b2

EP 3 712 782 B1

# FIG. 54

OPERATION + : ZOOM-UP − : ZOOM-DOWN 0 : HOME ← ↑ → ↓ : PAN C : START TO SELECT

SC31

SELECT IMAGE

br31

br32

OK

bo3

Cancel

bc3

EP 3 712 782 B1

# FIG. 55

OPERATION  + : ZOOM-UP  − : ZOOM-DOWN  0 : HOME  ← ↑ → ↓ : PAN  C : START TO SELECT

SC32

INSPECTION DATE: 2018-3-1

INSPECTION DATE: 2019-3-1

END

bo3

**EP 3 712 782 B1**

## REFERENCES CITED IN THE DESCRIPTION

**Patent documents cited in the description**

- JP 2002288180 A

- US 20180182090 A1